# EUROPEAN PATENT SPECIFICATION

(11) **EP 2 705 717 B1**
(45) Date of publication and mention of the grant of the patent: **08.11.2017**
(21) Application number: 12779665.4
(22) Date of filing: 01.05.2012
(51) Int. Cl.: H04W 72/10, H04W 88/06, H04W 4/22, H04W 4/12, H04W 28/18, H04W 76/04, H04W 88/02

(54) **DISABLING TRANSCEIVERS WHILE SERVICING EMERGENCY MESSAGES**
DEAKTIVIERUNG VON SENDE-/EMPFANGSVORRICHTUNGEN WÄHREND DER WARTUNG VON NOTFALLMITTEILUNGEN
DÉSACTIVATION D'ÉMETTEURS-RÉCEPTEURS PENDANT UN SERVICE DE MESSAGES D'URGENCE

(30) Priority: 02.05.2011 US 201113099269
(43) Date of publication of application: 12.03.2014
(73) Proprietor: Sharp Kabushiki Kaisha, Osaka-shi, Osaka 545-8522 (JP)
(72) Inventor: PARK, Kenneth J., Camas, Washington 98607 (US); YAMADA, Shohei, Camas, Washington 98607 (US); KHOSHNEVIS, Ahmad, Camas, Washington 98607 (US); YIN, Zhanping, Camas, Washington 98607 (US); KOWALSKI, John M., Camas, Washington 98607 (US)
(74) Representative: Müller Hoffmann & Partner
(86) International application number: PCT/JP2012/061931
(87) International publication number: WO 2012/150722

(56) References cited:
- WO-A1-2011/157235
- WO-A2-2012/021879
- US-A1- 2003 050 039
- US-A1- 2007 275 662
- US-A1- 2009 081 962
- "3rd Generation Partnership Project; Technical Specification Group Radio Access Networks; Evolved Universal Terrestrial Radio Access (E-UTRA); Study on signalling and procedure for interference avoidance for in-device coexistence; (Release 10)", 3GPP STANDARD; 3GPP TR 36.816, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. v1.3.0, 25 April 2011 (2011-04-25), pages 1-40, XP050692494, [retrieved on 2011-04-25]

## Description

### TECHNICAL FIELD

The present invention relates generally to wireless communications and wireless communications-related technology. More specifically, the present invention relates to systems and methods for disabling ISM band transceivers while LTE is servicing emergency messages.

### BACKGROUND ART

Wireless communication devices have become smaller and more powerful in order to meet consumer needs and to improve portability and convenience. Consumers have become dependent upon wireless communication devices and have come to expect reliable service, expanded areas of coverage and increased functionality. A wireless communication system may provide communication for a number of cells, each of which may be serviced by a base station. A base station may be a fixed station that communicates with mobile stations.

Various signal processing techniques may be used in wireless communication systems to improve efficiency and quality of wireless communication. For example, a wireless communication device may use a Long Term Evolution (LTE) technology for wireless communication. A wireless communication device may also use additional communication technologies such as Wi-Fi and Bluetooth. A wireless communication device using multiple communication technologies may use a different transceiver for each communication technology.

A wireless communication device may receive emergency communications. These emergency communications may have a higher priority than other non-emergency communications. Thus, it may be desirable that the wireless communication device make adjustments to increase the likelihood of reception of these high priority emergency communications. One such adjustment is the disabling of transceivers that may interfere with the emergency communications. Thus, benefits may be realized by improved adjustment of settings on the wireless communication device to reduce interference experienced by emergency communications.

3rd Generation Partnership Project; Technical Specification Group Radio Access Networks; Evolved Universal Terrestrial Radio Access (E-UTRA); Study on signalling and procedure for interference avoidance of in-device coexistence; (Release 10)", 3GPP TR 36.816; 3GPP Mobile Competence Centre; 650 Route des Lucioles; F-06921 Sophia-Antipolis Cedex; France, vol. RAN WG2, no. vl.3.0, 25 April 2011, pages 1-40, XP050692494) describes a technical specification of usage scenarios of LTE, WiFi and Bluetooth as well potential solutions for interference avoidance. In view of LTE transmission and an WiFi portable router, the WiFi transceiver has the ability to select the frequency channel, thus it may be possible to avoid interference to/from WiFi by moving the WiFi signal away from the LTE band. If this is not sufficient, time domain solutions are applicable. Potential solutions for interference avoidance are mainly considered for the UE in a connected mode. Idle mode operation itself is not considered a problem, since the UE can just stop ISM transmissions at important LTE reception moments, e.g. when receiving LTE paging. A basic solution concept is to lead an ISM radio signal away from LTE frequency band in a frequency domain. Furthermore, ISM transmission power may be reduced to mitigate the interference to LTE receiver. Furthermore, an UE can autonomously deny ISM transmissions to ensure successful reception of important LTE signaling, e.g. system information, paging, synchronization signal, critical dedicated signaling, etc. The details are up to the UE implementation and will not be specified in 3GPP.

### SUMMARY OF INVENTION

The above object is solved by the subject-matter of the independent claims. Further advantageous embodiments and refinements of the present invention are described in the respective sub-claims.

There may be provided a method for servicing emergency messages by a user equipment (UE), comprising:
detecting high priority communication (HPC) activity on a Long Term Evolution (LTE) transceiver;
determining adjustments to be made to one or more transceivers to account for the HPC activity;
adjusting settings of the one or more transceivers to account for the HPC activity;
detecting an end of the HPC activity on the LTE transceiver; and
adjusting the settings of the one or more transceivers to account for the end of the HPC activity.

There may be provided a user equipment (UE) configured for servicing emergency messages, comprising:
a processor;
memory in electronic communication with the processor;
instructions stored in the memory, the instructions being executable to:
   detect high priority communication (HPC) activity on a Long Term Evolution (LTE) transceiver;
   determine adjustments to be made to one or more transceivers to account for the HPC activity;
   adjust settings of the one or more transceivers to account for the HPC activity;
   detect an end of the HPC activity on the LTE transceiver; and
   adjust the settings of the one or more transceivers to account for the end of the HPC activity.

The foregoing and other objectives, features, and advantages of the invention will be more readily understood upon consideration of the following detailed description of the invention, taken in conjunction with the accompanying drawings.

### BRIEF DESCRIPTION OF DRAWINGS

Figure 1A is a block diagram illustrating a wireless communication system 100 with multiple wireless devices;
Figure 1B is a block diagram of a user equipment (UE) 104a for use in the present systems and methods;
Figure 2 is a flow diagram of a method for responding to High Priority Communication (HPC) activity on a first technology transceiver;
Figure 3 is a block diagram of an ISM controller for use in the present systems and methods;
Figure 4 is a block diagram illustrating a wireless telecom protocol stack;
Figure 5 is a flow diagram of another method for responding to High Priority Communication (HPC) activity on a Long Term Evolution (LTE) transceiver;
Figure 6 is a flow diagram of a method for responding to High Priority Communication (HPC) activity on a Long Term Evolution (LTE) transceiver using a configuration set by an eNB;
Figure 7 is a flow diagram of a method for responding to High Priority Communication (HPC) activity on a Long Term Evolution (LTE) transceiver using a configuration set by a user;
Figure 8 is a flow diagram of a method for enabling a power amplifier in a Bluetooth transceiver;
Figure 9 is a flow diagram of a method for disabling a power amplifier in a Bluetooth transceiver;
Figure 10 is a flow diagram of a method for logically enabling a Bluetooth transceiver;
Figure 11 is a flow diagram of a method for logically disabling a Bluetooth transceiver;
Figure 12 is a flow diagram of a method for parsing commands from an eNB to set and clear Operating Modes;
Figure 13 is a flow diagram of another method for parsing commands from an eNB to set and clear Operating Modes;
Figure 14 is a flow diagram of yet another method for parsing commands from an eNB to set and clear Operating Modes;
Figure 15 is a flow diagram of another method for parsing commands from an eNB to set and clear Operating Modes;
Figure 16 is a flow diagram of another method for parsing commands from an eNB to set and clear Operating Modes;
Figure 17 is a flow diagram of yet another method for parsing commands from an eNB to set and clear Operating Modes;
Figure 18 is a flow diagram of another method for parsing commands from an eNB to set and clear Operating Modes;
Figure 19 is a flow diagram of yet another method for parsing commands from an eNB to set and clear Operating Modes;
Figure 20 is a flow diagram of another method for parsing commands from an eNB to set and clear Operating Modes;
Figure 21 is a flow diagram of a method for completing an e911 call;
Figure 22 is a flow diagram of a method for determining whether the NAS has signaled that no DRBs are currently assigned to a high QoS;
Figure 23 is a flow diagram of a method for detecting High Priority Communication (HPC) activity;
Figure 24 is a flow diagram of a method for determining whether the SIB10_Timer has expired;
Figure 25 is a flow diagram of a method for determining whether the SIB11_Timer has expired;
Figure 26 is a flow diagram of a method for determining whether the SIB12_Timer has expired;
Figure 27 is a flow diagram of a method for determining when an e911 call has ended;
Figure 28 is a flow diagram of a method for detecting HPC activity when the LTE transceiver has transmitted an RRCConnectionRequest with establishmentCause set to emergency;
Figure 29 is a flow diagram of a method for detecting High Priority Communication (HPC) activity when a DRB has been assigned a high QoS;
Figure 30 is a flow diagram of a method for detecting High Priority Communication (HPC) activity;
Figure 31 is a flow diagram of another method for detecting High Priority Communication (HPC) activity;
Figure 32 is a flow diagram of a method for detecting the beginning and end of High Priority Communication (HPC) activity;
Figure 33 is a flow diagram of a method for starting the ISM controller;
Figure 34 is a flow diagram of a method for running the ISM_State_Machine;
Figure 35 is a flow diagram of a method for informing a user and an eNB that Wi-Fi is disabled;
Figure 36 is a flow diagram of a method for informing a user and en eNB that Bluetooth is disabled;
Figure 37 is a flow diagram of a method for processing an event indicating that High Priority Communication (HPC) activity has been detected;
Figure 38 is a flow diagram of a method for informing a user and an eNB that Wi-Fi is enabled when it was previously disabled;
Figure 39 is a flow diagram of a method for informing a user and an eNB that Bluetooth is enabled when it was previously disabled;
Figure 40 is a flow diagram of a method for updating the working copies of Operating Parameters and Operating Modes with those values stored in the non-volatile (NV) memory that may have changed during High Priority Communication (HPC) activity;
Figure 41 is a flow diagram of a method for processing an event indicating that all active High Priority Communications (HPCs) have terminated;
Figure 42 is a flow diagram of a method for adjusting the states of the LTE_State_Generator;
Figure 43 is a flow diagram of a method for receiving commands from a user;
Figure 44 is a flow diagram of a method for parsing commands from a user relating to Wi-Fi;
Figure 45 is a flow diagram of a method for parsing commands from a user relating to Bluetooth;
Figure 46 is a flow diagram of a method for enabling the power amplifier in the Wi-Fi transceiver;
Figure 47 is a flow diagram of a method for disabling the power amplifier in the Wi-Fi transceiver;
Figure 48 is a flow diagram of a method for logically enabling the Wi-Fi transceiver;
Figure 49 is a flow diagram of a method for logically disabling the Wi-Fi transceiver;
Figure 50 illustrates various components that may be utilized in a user equipment (UE); and
Figure 51 illustrates various components that may be utilized in an eNB.

### DESCRIPTION OF EMBODIMENTS

A method for servicing emergency messages by a user equipment (UE) is described. High priority communication (HPC) activity on a Long Term Evolution (LTE) transceiver is detected. Adjustments to be made to one or more transceivers to account for the HPC activity are determined. Settings of the one or more transceivers are adjusted to account for the HPC activity. An end of the HPC activity on the LTE transceiver is detected. The settings of the one or more transceivers are adjusted to account for the end of the HPC activity.

The one or more transceivers may include a Wi-Fi transceiver. The one or more transceivers may instead include a Bluetooth transceiver. The one or more transceivers may include both a Wi-Fi transceiver and a Bluetooth transceiver. Adjusting the settings of the one or more transceivers to account for the HPC activity may include turning off one or more power amplifiers in the one or more transceivers or sending a logical command to a controller of the one or more transceivers to turn off the one or more transceivers.

Determining adjustments to be made to the one or more transceivers to account for the HPC activity may include determining a configuration set by a manufacturer. Determining adjustments to be made to the one or more transceivers to account for the HPC activity may also include sending a notification to an eNB indicating the HPC activity and receiving a message from the eNB including a configuration set by the eNB. Determining adjustments to be made to the one or more transceivers to account for the HPC activity may further include informing a user that the functionality of the one or more transceivers will be affected during the HPC activity, prompting the user to select a configuration and applying the configuration set by the user.

Determining adjustments to be made to the one or more transceivers to account for the HPC activity may include sending a notification to an eNB indicating the HPC activity and determining whether a message including a configuration has been received from the eNB. When a message including a configuration has been received from the eNB, adjusting the settings of the one or more transceivers to account for the HPC activity may include applying the configuration received from the eNB.

When a message including a configuration has not been received from the eNB, determining adjustments to be made to the one or more transceivers to account for the HPC activity may include determining whether there is a configuration set by the manufacturer on the UE. When there is a configuration is set by the manufacturer on the UE, adjusting the settings of the one or more transceivers to account for the HPC activity may include applying the configuration set by the manufacturer. When a configuration is not set by the manufacturer on the UE, determining adjustments to be made to the one or more transceivers to account for the HPC activity may include prompting the user for a configuration set by the user and receiving a configuration set by the user. Adjusting the settings of the one or more transceivers to account for the HPC activity may include applying the configuration set by the user.

Determining adjustments to be made to one or more transceivers to account for the HPC activity may include receiving a configuration set by an eNB from the eNB, determining that there is a configuration set by the manufacturer on the UE and overriding the configuration set by the manufacturer with the configuration set by the eNB. Determining adjustments to be made to one or more transceivers to account for the HPC activity may also include determining that there is a configuration set by the manufacturer on the UE, receiving a configuration set by a user from the user and overriding the configuration set by the user with the configuration set by the manufacturer.

Determining adjustments to be made to one or more transceivers to account for the HPC activity may also include receiving a configuration set by an eNB from the eNB, receiving a configuration set by a user from the user and overriding the configuration set by the user with the configuration set by the eNB. Adjusting the settings of the one or more transceivers to account for the end of the HPC activity may include turning the one or more transceivers back on.

A user equipment (UE) configured for servicing emergency messages is also described. The user equipment (UE) includes a processor, memory in electronic communication with the processor and instructions stored in the memory. The instructions are executable to detect high priority communication (HPC) activity on a Long Term Evolution (LTE) transceiver. The instructions are also executable to determine adjustments to be made to one or more transceivers to account for the HPC activity. The instructions are further executable to adjust settings of the one or more transceivers to account for the HPC activity. The instructions are also executable to detect an end of the HPC activity on the LTE transceiver. The instructions are further executable to adjust the settings of the one or more transceivers to account for the end of the HPC activity.

The 3rd Generation Partnership Project, also referred to as "3GPP," is a collaboration agreement that aims to define globally applicable technical specifications and technical reports for third and fourth generation wireless communication systems. The 3GPP may define specifications for the next generation mobile networks, systems and devices.

3GPP Long Term Evolution (LTE) is the name given to a project to improve the Universal Mobile Telecommunications System (UMTS) mobile phone or device standard to cope with future requirements. In one aspect, UMTS has been modified to provide support and specification for the Evolved Universal Terrestrial Radio Access (E-UTRA) and the Evolved Universal Terrestrial Radio Access Network (E-UTRAN).

At least some aspects of the systems and methods disclosed herein may be described in relation to the 3GPP Long Term Evolution (LTE) and Long Term Evolution (LTE)-Advanced standards (e.g., Release-8, Release-9 and Release-10). However, the scope of the present disclosure should not be limited in this regard. At least some aspects of the systems and methods disclosed herein may be utilized in other types of wireless communication systems.

The term "simultaneous" may be used herein to denote a situation where two or more events occur in overlapping time frames. In other words, two "simultaneous" events may overlap in time to some extent, but are not necessarily of the same duration. Furthermore, simultaneous events may or may not begin or end at the same time.

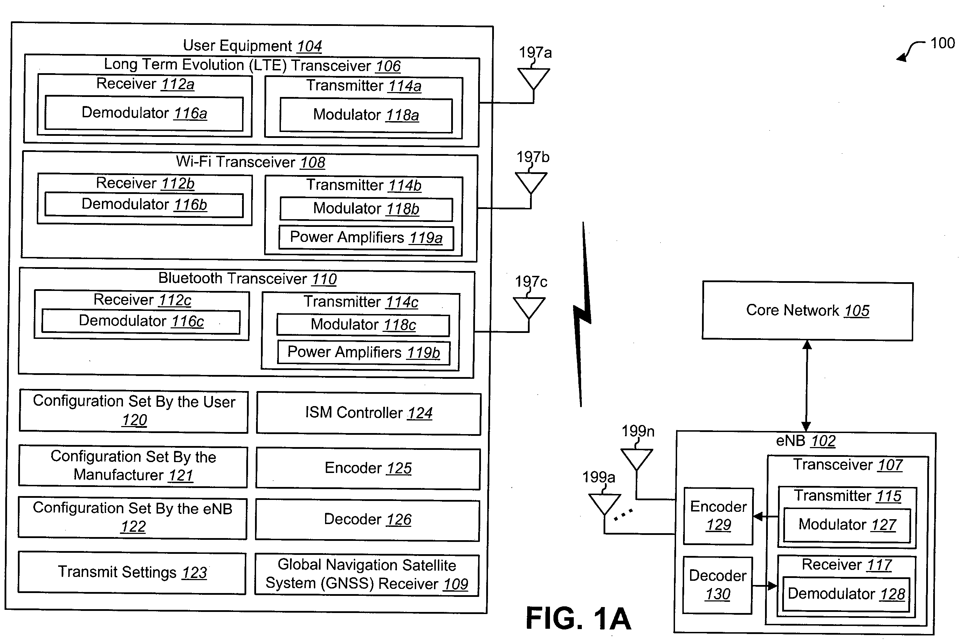

Figure 1A is a block diagram illustrating a wireless communication system 100 with multiple wireless devices. A wireless device may be a user equipment (UE) 104 or an eNB (eNode B) 102. An eNB 102 may be in wireless communication with one or more user equipments (UEs) 104. An eNB 102 may be referred to as an access point, a Node B, a base station or some other terminology. Likewise, a user equipment (UE) 104 may be referred to as a mobile station, a subscriber station, an access terminal, a remote station, a user terminal, a terminal, a handset, a subscriber unit, a wireless communication device, or some other terminology. The eNB 102 may communicate with a core network 105.

Communication between a user equipment (UE) 104 and an eNB 102 may be accomplished using transmissions over a wireless link, including an uplink and a downlink. The uplink refers to communications sent from a user equipment (UE) 104 to an eNB 102. The downlink refers to communications sent from an eNB 102 to a user equipment (UE) 104. The communication link may be established using a single-input and single-output (SISO), multiple-input and single-output (MISO), single-input and multiple-output (SIMO) or a multiple-input and multiple-output (MIMO) system. A MIMO system may include both a transmitter and a receiver equipped with multiple transmit and receive antennas. Thus, an eNB 102 may have multiple antennas 199a-n and a user equipment (UE) 104 may have multiple antennas 197a-n. In this way, the eNB 102 and the user equipment (UE) 104 may each operate as either a transmitter or a receiver in a MIMO system. One benefit of a MIMO system is improved performance if the additional dimensionalities created by the multiple transmit and receive antennas are utilized.

The user equipment (UE) 104 communicates with an eNB 102 using one or more antennas 199a-n. In order to allow access to various networks and services, a user equipment (UE) 104 may be equipped with multiple radio transceivers. For example, the user equipment (UE) 104 may be equipped with a Long Term Evolution (LTE) transceiver 106, a Wi-Fi transceiver 108, a Bluetooth transceiver 110 and a global navigation satellite system (GNSS) receiver 109. One of the difficulties of operating multiple transceivers simultaneously in the same device at the same time is in trying to avoid interference caused by one transceiver's transmissions onto another transceiver's receptions. For a user equipment (UE) 104, this is because of the close proximity of the transceivers such that the transmit power of a transmitter 114a-c may be much higher than the received power of a receiver 112a-c.

The user equipment (UE) 104 may include a Long Term Evolution (LTE) transceiver 106. The Long Term Evolution (LTE) transceiver 106 may be used for Long Term Evolution (LTE) transmissions and receptions. The Long Term Evolution (LTE) transceiver 106 may include a receiver 112a with a demodulator 116a. The Long Term Evolution (LTE) transceiver 106 may also include a transmitter 114a with a modulator 118a.

The user equipment (UE) 104 may also include a Wi-Fi transceiver 108. The Wi-Fi transceiver 108 may be used to transmit and receive Wi-Fi signals. Wi-Fi signals may be referred to as Wi-Fi or Wireless Fidelity signals. Wi-Fi is an implementation and specification of the IEEE 802.11 wireless networking standard as determined by the Wi-Fi Alliance. Wi-Fi may refer to those communications within the Industrial, Scientific and Medial (ISM) band. However, Wi-Fi may also refer to wireless communications that are outside of the ISM band.

The Wi-Fi transceiver 108 may include a receiver 112b and a transmitter 114b. The receiver 112b may include a demodulator 116b. The transmitter 114b may include a modulator 118b and one or more power amplifiers 119a. The one or more power amplifiers 119a may be used to amplify signals prior to transmission. By shutting off the one or more power amplifiers 119a, the user equipment (UE) 104 may shut off the transmissions of the transmitter 114b in the Wi-Fi transceiver 108. Shutting off the transmissions of the transmitter 114b in the Wi-Fi transceiver 108 is referred to herein as shutting off the Wi-Fi transceiver 108.

The user equipment (UE) 104 may further include a Bluetooth transceiver 110. The Bluetooth transceiver 110 may include a receiver 112c and a transmitter 114c. The receiver 112c may include a demodulator 116c. The transmitter 114c may include a modulator 118c and one or more power amplifiers 119b. The one or more power amplifiers 119b may be used to amplify signals for transmission. By shutting off the one or more power amplifiers 119b, the user equipment (UE) 104 may shut off the transmissions of the transmitter 114c in the Bluetooth transceiver 110. Shutting off the transmissions of the transmitter 114c in the Bluetooth transceiver 110 is referred to herein as shutting off the Bluetooth transceiver 110.

The receivers 112a-c may receive signals from the eNB 102 using one or more antennas 197a-c. The transmitters 114a-c may transmit signals to the eNB 102 using one or more antennas 197a-c. For example, the Long Term Evolution (LTE) transceiver 106 may transmit and receive using a first antenna 197a, the Wi-Fi transceiver 108 may transmit and receive using a second antenna 197b and the Bluetooth transceiver by transmit and receive using a third antenna 197c. In one configuration, a transceiver may use multiple antennas (not shown). Multiple transceivers may also use the same antenna 197 (e.g., a Bluetooth transceiver 110 may use the same antenna as a Wi-Fi transceiver 108).

The In-device Coexistence Interference (IDC) (also referred to as the ICO) Avoidance is a new Study Item (SI) approved by the 3GPP RAN#48 plenary (RP-100671) and it is expected that the resulting specification will be included in Rel-11. This Study Item (SI) addresses the coexistence scenarios that Long Term Evolution (LTE)-A, GNSS, Bluetooth and Wi-Fi radios encounter when implemented in the same device and operating on adjacent or sub-harmonic frequencies. Wi-Fi and Bluetooth occupy the same frequency band (the ISM band from 2400 megahertz (MHz) to 2483.5 MHz). The objective of the study is to identify and investigate the suitability of methods for interference avoidance from a signaling and procedural perspective (i.e., interference detection and avoidance through scheduling of time and frequency and power resources). If procedural methods are found to be insufficient, the study may consider enhanced mechanisms (e.g., inter device communications).

The simplest means by which interference is mitigated between multiple transceivers operating at the same time is via a physical separation of the transmitter and receiver antennas and/or sufficient frequency separation between the transmit signal and the receive signal. When frequency separation is not sufficient, filtering technologies can be applied, whereby the transmitter is able to reduce out of band spurious emissions and the receiver is able to reject out of band spurious emissions.

For some Long Term Evolution (LTE) usage scenarios, filter technology cannot provide sufficient rejection of out of band spurious emissions because of the adjacent nature of the frequency band allocated for the Wi-Fi and Bluetooth (i.e., ISM) and the frequency band allocated for Long Term Evolution (LTE). A physical separation of the antennas is not practical on a handheld device such as a user equipment (UE) 104. The interference problem as it applies to user equipments (UEs) 104 may be solved using either a Time Division Multiplexed (TDM) solution or a Frequency Division Multiplexed (FDM) solution.

In a Time Division Multiplexed (TDM) solution, the interfering transmitter and/or interfered receiver coordinate their activity in time. In a Frequency Division Multiplexed (FDM) solution, either the interfering transmitter or the interfered receiver or both move to another frequency. The interference problem may also be solved using a Long Term Evolution (LTE) Power Control solution where the transmitter 114a in the Long Term Evolution (LTE) transceiver reduces its output power to a point that the receiver 112a can operate. The interference problem may further be solved using a UE Autonomous Denial (UAD) where the user equipment (UE) 104 unilaterally aborts transmission opportunities. The UAD is a special case of Time Division Multiplexed (TDM). The interference problem may also be solved by disabling the offending transmitter. It is possible that one or more of the above solutions may be applied to address the IDC problem.

In particular, interference from a Bluetooth transceiver 110 and/or a Wi-Fi transceiver 108 may me problematic for the Long Term Evolution (LTE) transceiver 106 when the Long Term Evolution (LTE) transceiver 106 is receiving a High Priority Communication (HPC). A High Priority Communication (HPC) may refer to the Earthquake and Tsunami Warning System (ETWS), the Commercial Mobile Alert Service (CMAS), Wireless e911 features and High QoS (Quality of Service) bearers.

The Earthquake and Tsunami Warning System (ETWS) feature provides the means to deliver high priority information in a near simultaneous manner to many mobile users, while addressing the need for quick and optimized information delivery. Under the direction of the Japanese government, Japan's Meteorological Agency and a national broadcaster may coordinate and operate a Public Warning System (PWS) used to alert the public of earthquakes and tsunamis. The government of Japan requires all Japanese cellular systems to facilitate the broadcasting of such warnings. The 3GPP adopted the Work Instruction Document (WID) SP-070815, which defines the functional and architectural requirements for the Earthquake and Tsunami Warning System (ETWS). The Earthquake and Tsunami Warning System (ETWS) feature is complete and is part of the 3GPP Rel-8 Long Term Evolution (LTE) suite of specifications.

The Commercial Mobile Alert Service (CMAS) feature provides the means to deliver high priority information in a near simultaneous manner to many mobile users, while addressing the need for quick and optimized information delivery. In response to the Warning, Alert, and Response Network (WARN) Act passed by the United States Congress in 2006, the Federal Communications Commission (FCC) established Commercial Mobile Alert Service (CMAS) to allow wireless service providers who choose to participate to send emergency alerts as text messages to their users who have Commercial Mobile Alert Service (CMAS) capable handsets. The Commercial Mobile Alert Service (CMAS) network will allow the Federal Emergency Management Agency (FEMA) to accept and aggregate alerts from the President of the United States, the National Weather Service (NWS) and state and local emergency operations centers and then send the alerts over a secure interface to participating commercial mobile service providers (CMSPs). These participating CMSPs will then distribute the alerts to their users. The Commercial Mobile Alert Service (CMAS) feature is complete and is part of 3GPP Rel-8 Long Term Evolution (LTE) suite of specifications.

The 3GPP Long Term Evolution (LTE) E-UTRAN Rel-8 and later specifications realize the Earthquake and Tsunami Warning System (ETWS) and Commercial Mobile Alert Service (CMAS) functionality via messaging objects broadcasted by the eNB 102. First, a paging message that can be received by all user equipments (UEs) 104 that are camped on or connected to the eNB 102 is sent. The paging message may indicate that new Earthquake and Tsunami Warning System (ETWS)/Commercial Mobile Alert Service (CMAS) messages are now being broadcast and that a user equipment (UE) 104 should immediately attempt to receive additional scheduling information. The System Information Block #1 (SIB1) message carries the scheduling information for all other SIBs currently being broadcasted. The System Information Block #10 (SIB10 is for Earthquake and Tsunami Warning System (ETWS) only) message may carry a value that maps to a "Canned Warning Message." A System Information Block #11 (SIB11 is for Earthquake and Tsunami Warning System (ETWS) only) message may carry a long Earthquake and Tsunami Warning System (ETWS) "Text Warning Message." The System Information Block #12 (SIB12 is for Commercial Mobile Alert Service (CMAS) only) message may carry a segmented "Text Warning Message."

Both the periodicity and existence of SIB10, SIB11 and SIB12 may be configurable. Because SIB10, SIB11 and SIB12 are temporal and configurable, their placement into the protocol is handled by the eNB's 102 scheduler. The scheduler uses system parameters to determine at which slot, how often and the duration SIB10, SIB11 and SIB12 are to be broadcast. The same system parameters used by the scheduler are also broadcast in SIB1 (SIB1 is broadcast at a fixed slot and at a fixed periodicity) so that user equipments (UEs) 104 can know beforehand where in the protocol SIB10, SIB11 and SIB12 are to be obtained. The paging messages may be distributed across multiple slots based on the identification of the user equipments (UEs) 104 that the paging message is targeted for. In this way, only a subset of all user equipments (UEs) 104 will target slot n to receive pages; another subset of user equipments (UEs) 104 will target slot n+1, etc.

As part of the Federal Communications Commission (FCC) efforts to improve public safety, it has adopted rules aimed at providing reliable wireless 911 services. Such services enable emergency response personnel to provide assistance to 911 callers much more quickly. The FCC's wireless 911 rules apply to all wireless licensees, broadband Personal Communications Service (PCS) licensees and certain Specialized Mobile Radio (SMR) licensees. The basic 911 rules require wireless service providers to transfer all 911 calls to a Public Safety Answering Point (PSAP), regardless of whether the caller subscribes to the provider's service or not.

The 3GPP Long Term Evolution (LTE) E-UTRAN specification provides for the setup and configuration of an emergency call that is originated by the user equipment (UE) 104 so as to be compliant with the FCC's wireless 911 rules noted above. This emergency configuration may override many of the generic parameters used by the network operator and allow for such an emergency call to be completed on a network that would otherwise reject the call.

The Non-Access Stratum (NAS) layer may have knowledge of when a Data Radio Bearer (DRB) that is being serviced by the Long Term Evolution (LTE) Radio Resource Control (RRC) has been assigned a QoS level. The Non-Access Stratum (NAS) layer may also have knowledge of a QoS level threshold. The Non-Access Stratum (NAS) may compare the QoS of DRBs with the QoS threshold and determine whether the QoS of the DRB is considered a "High QOS" DRB. If the QoS of the DRB is considered a "High QOS" DRB, the Long Term Evolution (LTE) transceiver 106 may need additional protection from interference caused by other transceivers located on the user equipment (UE) 104.

The feature set of Earthquake and Tsunami Warning System (ETWS), Commercial Mobile Alert Service (CMAS), Wireless 911 and High QoS bearers is not an exhaustive list of High Priority Communication (HPC) activity, as there are other high priority features and indicators that may apply. It is undesirable that the RF environment of the Long Term Evolution (LTE) transceiver 106 be negatively affected by ISM transmissions (such as those by a Wi-Fi transceiver 108 or a Bluetooth transceiver 110) while the Long Term Evolution (LTE) transceiver 106 is servicing High Priority Communication (HPC) activity. One benefit of the present systems and methods is that the user equipment (UE) 104 can selectively turn off interfering transceivers (it may not be desirable to disable both the Wi-Fi transceiver 108 and the Bluetooth transceiver 110 at the same time) during High Priority Communication (HPC) activity.

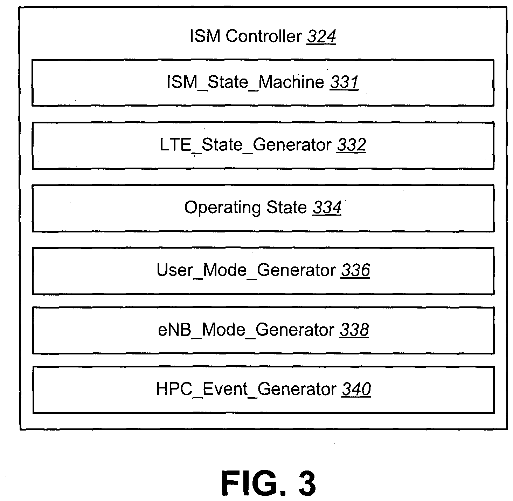

The user equipment (UE) 104 may include an ISM controller 124. The ISM controller 124 may be a logical entity in the user equipment (UE) 104 to manage the features and functions for enabling and disabling the Wi-Fi transceiver 108 and the Bluetooth transceiver 110. The ISM controller 124 may have various means and modes of connectivity with the Long Term Evolution (LTE) transceiver 106, the Wi-Fi transceiver 108, the Bluetooth transceiver 110, the global navigation satellite system (GNSS) receiver 109 and an eNB 102. The ISM controller 124 may operate in an "Uncoordinated" mode where different radio technologies in the user equipment (UE) 104 operate independently without any internal coordination between each other (i.e., the ISM controller 124 only interacts with the Long Term Evolution (LTE) transceiver 106). The ISM controller 124 may also operate in a "Coordinated within UE Only" mode where there is an internal coordination between the different radio technologies in the user equipment (UE) 104. Thus, the activities of at least one other radio technology are known to the ISM controller 124. The ISM controller 124 may further operate in a "Coordinated within UE and with network" mode where different radio technologies within the user equipment (UE) 104 are aware of possible coexistence problems and the user equipment (UE) 104 can inform the network (via the eNB 102) of such problems. Thus, the ISM controller 124 may interact with the Long Term Evolution (LTE) transceiver 106, the Wi-Fi transceiver 108, the Bluetooth transceiver 110 and the eNB 102). The ISM controller 124 is discussed in additional detail below in relation to Figure 3.

One benefit of the present systems and methods is to provide means for a user equipment (UE) 104 to prioritize the transmit and receive functions of a Long Term Evolution (LTE) transceiver 106 over the transmit and receive functions of other transceivers embedded in the same user equipment (UE) 104 while the user equipment (UE) 104 is servicing emergency messaging.

The user equipment (UE) 104 may include a configuration 120 set by the user. The configuration 120 set by the user may be one or more configuration settings that indicate how the user equipment (UE) 104 will react to High Priority Communication (HPC) activity. More specifically, the configuration 120 set by the user may indicate whether the user equipment (UE) 104 should disable the Bluetooth transceiver 110, the Wi-Fi transceiver 108 or both during High Priority Communication (HPC) activity on the Long Term Evolution (LTE) transceiver 106. Thus, the ability for the user equipment (UE) 104 to individually disable/enable the Wi-Fi transceiver 108 and/or the Bluetooth transceiver 110 when High Priority Communication (HPC) is active may be controlled by the configuration 120 set by the user.

It may not always be desirable that the user is able to control the ability of the user equipment (UE) 104 to disable/enable the ISM band transceivers (i.e., the Wi-Fi transceiver 108 and the Bluetooth transceiver 110). The request by the user to control such ability may be overridden by a configuration 121 set by the manufacturer or a configuration 122 set by the eNB 102. The user equipment (UE) 104 may include the configuration 121 set by the manufacturer. The configuration 121 set by the manufacturer may be one or more configuration settings that indicate how the user equipment (UE) 104 will react to High Priority Communication (HPC) activity. More specifically, the configuration 121 set by the manufacturer may indicate whether the user equipment (UE) 104 should disable the Bluetooth transceiver 110, the Wi-Fi transceiver 108 or both during High Priority Communication (HPC) activity on the Long Term Evolution (LTE) transceiver 106. Thus, the ability for the user equipment (UE) 104 to individually disable/enable the Wi-Fi transceiver 108 and/or the Bluetooth transceiver 110 when High Priority Communication (HPC) is active may be controlled by the configuration 121 set by the manufacturer. The configuration 121 set by the manufacturer may override the configuration 120 set by the user.

The user equipment (UE) 104 may also include a configuration 122 set by the eNB 102. The configuration 122 set by the eNB 102 may be one or more configuration settings that indicate how the user equipment (UE) 104 will react to High Priority Communication (HPC) activity. More specifically, the configuration 122 set by the eNB 102 may indicate whether the user equipment (UE) 104 should disable the Bluetooth transceiver 110, the Wi-Fi transceiver 108 or both during High Priority Communication (HPC) activity on the Long Term Evolution (LTE) transceiver 106. Thus, the ability for the user equipment (UE) 104 to individually disable/enable the Wi-Fi transceiver 108 and/or the Bluetooth transceiver 110 when High Priority Communication (HPC) is active may be controlled by the configuration 122 set by the eNB 102. The configuration 122 set by the eNB 102 may override the configuration 121 set by the manufacturer and the configuration 120 set by the user.

The user equipment (UE) 104 may include transmit settings 123. The transmit settings 123 may refer to the actual settings implemented by the user equipment (UE) 104 for the transmission of Bluetooth signals and the transmission of Wi-Fi signals. Thus, the transmit settings 123 may be adjusted by the configuration 120 set by the user, the configuration 121 set by the manufacturer and/or the configuration 122 set by the eNB 102. The transmit settings 123 may indicate which of the power amplifiers 119b in the Bluetooth transceiver 110 and/or which of the power amplifiers 119a in the Wi-Fi transceiver 108 are shut off during High Priority Communication (HPC) activity.

The user equipment (UE) 104 may include an encoder 125 and a decoder 126. Signals for transmission may be passed through the encoder 125 prior to being transmitted. Signals received may first be passed through the decoder 126 before being forwarded to the appropriate receiver 112.

The eNB 102 may include a transceiver 107. The transceiver 107 may include a transmitter 115 with a modulator 127 and a receiver 117 with a demodulator 128. The transmitter 115 may encode signals to be sent to the user equipment (UE) 104 using an encoder 129. The encoded signals may then be transmitted using one or more antennas 199a-n. The eNB 102 may receive signals using one or more antennas 199a-n. The received signals may be decoded using a decoder 130 before being passed to the receiver 117.

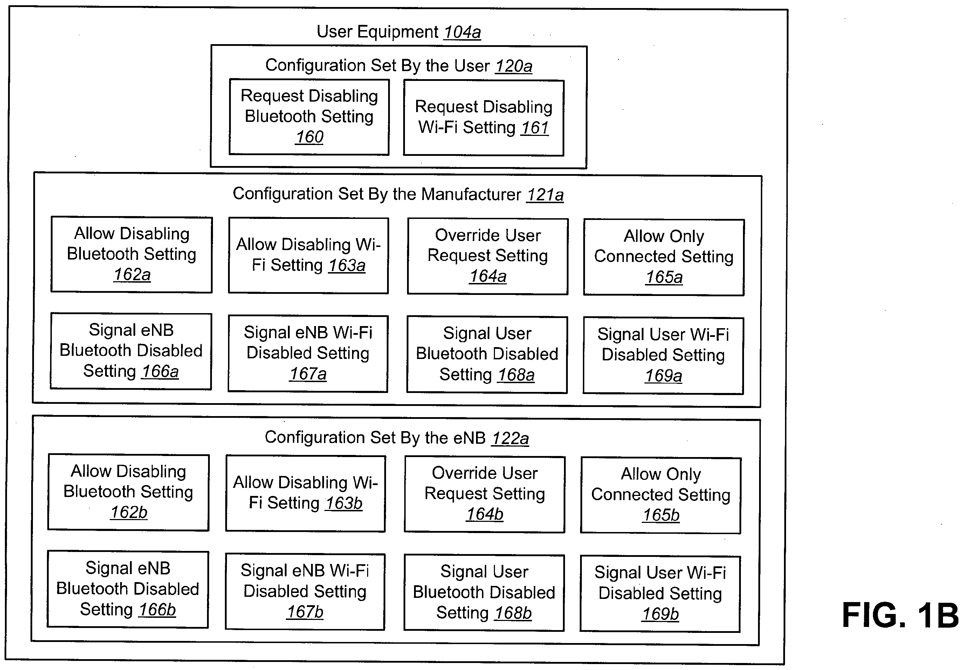

Figure 1B is a block diagram of a user equipment (UE) 104a for use in the present systems and methods. The user equipment (UE) 104a of Figure 1B may be one configuration of the user equipment (UE) 104 of Figure 1A. The user equipment (UE) 104a may include a configuration 120a set by the user, a configuration 121a set by the manufacturer and a configuration 122a set by the eNB 102.

The configuration 120a set by the user may include a request disabling Bluetooth setting 160 that may be set to TRUE (indicating the user has selected Bluetooth to be disabled) or FALSE (indicating the user has selected Bluetooth to not be disabled). The configuration 120a set by the user may also include a request disabling Wi-Fi setting 160 that may be set to TRUE (indicating the user has selected Wi-Fi to be disabled) or FALSE (indicating the user has selected Wi-Fi to not be disabled).

The configuration 121a set by the manufacturer may include an allow disabling Bluetooth setting 162a indicating whether the user equipment (UE) 104a may allow the disabling of Bluetooth. The configuration 121a set by the manufacturer may also include an allow disabling Wi-Fi setting 163a indicating whether the user equipment (UE) 104a may allow the disabling of Wi-Fi.

The configuration 121a set by the manufacturer may include an override user request setting 164a indicating whether the manufacturer settings should override the settings input by a user. The configuration 121a set by the manufacturer may also include an allow only connected setting 165a. When the allow only connected setting 165a is FALSE, the ISM controller 124 may ignore the current state of connectivity between the user equipment (UE) 104b and the Long Term Evolution (LTE) network, with the affect that the eNB_Mode_Generator(), HPC_Event_Generator() and ISM_State_Machine() (discussed below in relation to Figure 3) are always executed. When the allow only connected setting 165a is TRUE, the ISM controller 124 may first determine the current state of connectivity between the user equipment (UE) 104b and the Long Term Evolution (LTE) network. If the user equipment (UE) 104b is in RRC_Connected, then the eNB_Mode_Generator(), HPC_Event_Generator() and ISM_State_Machine() may always be executed. If the user equipment (UE) 104b is not in RRC_Connected, then the ISM controller 124 needs to determine whether it is needed to reset the configurations of the default state of the ISM controller 124.

The configuration 121a set by the manufacturer may include a signal eNB Bluetooth disabled setting 166a. The configuration 121a set by the manufacturer may also include a signal eNB Wi-Fi disabled setting 167a. The configuration 121a set by the manufacturer may further include a signal user Bluetooth disabled setting 168a. The configuration 121a set by the manufacturer may also include a signal user Wi-Fi disabled setting 169a. When the ISM controller 124 has disabled the Wi-Fi transceiver 108, the user equipment (UE) 104b may determine whether to inform the eNB 102 that the Wi-Fi transceiver 108 is disabled. If signal eNB Wi-Fi disabled setting 168a is set to TRUE, the user equipment (UE) 104b may inform the eNB 102 that the Wi-Fi transceiver 108 has been disabled. Likewise, if signal user Wi-Fi disabled setting 169a is set to TRUE, the user equipment (UE) 104b may inform the user that the Wi-Fi transceiver 108 has been disabled. Similarly, if the signal eNB Bluetooth disabled setting 166a is set to TRUE, the user equipment (UE) 104b may inform the eNB 102 that the Bluetooth transceiver 110 has been disabled. Likewise, if the signal user Bluetooth disabled setting 167a is set to TRUE, the user equipment (UE) 104b may inform the user that the Bluetooth transceiver 110 has been disabled.

The configuration 122a set by the eNB 102 may include an override user request setting 164b indicating whether the eNB 102 settings should override the settings input by a user. The configuration 122a set by the eNB 102 may also include an allow only connected setting 165b. The allow only connected setting 165b may operate similarly to the allow only connected setting 165a discussed above. The configuration 122a set by the eNB 102 may further include a signal eNB Bluetooth disabled setting 166b. The configuration 122a set by the eNB 102 may also include a signal eNB Wi-Fi disabled setting 167b. The configuration 122a set by the eNB 102 may further include a signal user Bluetooth disabled setting 166b. The configuration 122a set by the eNB 102 may also include a signal user Wi-Fi disabled setting 169b. The signal eNB Bluetooth disabled setting 166b, signal eNB Wi-Fi disabled setting 167b, signal user Bluetooth disabled setting 168b and signal user Wi-Fi disabled setting 169b of the configuration 122a set by the eNB 102 may have similar functions as their respective counterparts in the configuration 121a set by the manufacturer.

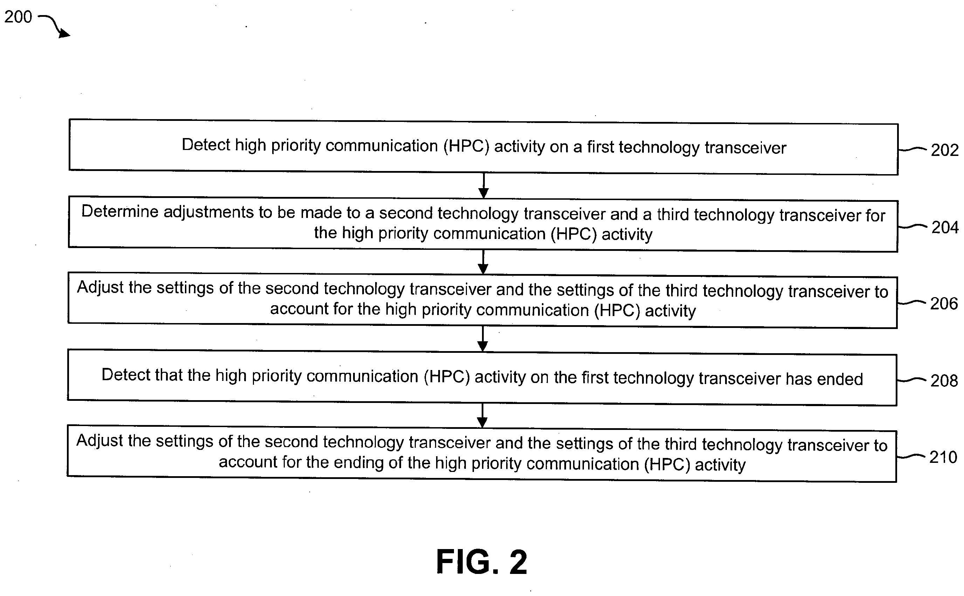

Figure 2 is a flow diagram of a method 200 for responding to High Priority Communication (HPC) activity on a first technology transceiver. The first technology transceiver may be a Long Term Evolution (LTE) transceiver 106, a Wi-Fi Transceiver 108 or a Bluetooth transceiver 110. The method 200 may be performed by a user equipment (UE) 104. The user equipment (UE) 104 may detect 202 High Priority Communication (HPC) activity on the first technology transceiver. The user equipment (UE) 104 may determine 204 adjustments to be made to a second technology transceiver (e.g., a Wi-Fi transceiver 108, a Bluetooth transceiver 110 or a Long Term Evolution (LTE) transceiver 106) and a third technology transceiver (e.g., a Wi-Fi transceiver, a Bluetooth transceiver 110 or a Long Term Evolution (LTE) transceiver 106) for the High Priority Communication (HPC) activity. For example, the adjustments may include shutting off transmissions of the Wi-Fi transceiver 108 while continuing to transmit using the Bluetooth transceiver 110. In another example, the adjustments may include shutting off transmissions of the Bluetooth transceiver 110 while continuing to transmit using the Wi-Fi transceiver 108. In yet another example, the adjustments may include shutting off transmissions of both the Bluetooth transceiver 110 and the Wi-Fi transceiver 108. One benefit of such a method 200 is the flexible adjustment of either the second technology transceiver, the third technology transceiver or both.

The user equipment (UE) 104 may then adjust 206 the settings of the second technology transceiver and/or the settings of the third technology transceiver to account for the High Priority Communication (HPC) activity. In one configuration, the user equipment (UE) 104 may adjust 206 the settings of the second technology transceiver and settings of the third technology transceiver by turning off power amplifiers 119 in the transceivers. For example, the user equipment (UE) 104 may adjust 206 the settings of the Wi-Fi transceiver 108 and settings of the Bluetooth transceiver 110 by turning off the respective power amplifiers 119. In another configuration, the user equipment (UE) 104 may adjust 206 the settings of the second technology transceiver and the third technology transceiver by sending a logical command to each to turn off transmissions. In yet another configuration, the user equipment (UE) 104 may adjust 206 the settings of the second technology transceiver by turning off power amplifiers 119 and adjust 206 the settings of the third technology transceiver by sending a logical command to the third transceiver to turn off transmissions.

One benefit of allowing the user equipment (UE) 104 to adjust 206 the settings of the Wi-Fi transceiver 108 and the settings of the Bluetooth transceiver 110 is that it provides the network operator the means to disable the functionality of the Wi-Fi transceiver 108 and the Bluetooth transceiver 110 as means to prioritize the Long Term Evolution (LTE) transceiver 106 transmit and receive functions while the user equipment (UE) 104 is servicing emergency messaging. Another benefit of allowing the user equipment (UE) 104 to adjust 206 the settings of the Wi-Fi transceiver 108 and the settings of the Bluetooth transceiver 110 is that it provides the device user the means to disable the functionality of the Wi-Fi transceiver 108 and the Bluetooth transceiver 110 as means to prioritize the Long Term Evolution (LTE) transceiver 106 transmit and receive functions while the user equipment (UE) 104 is servicing emergency messaging. Yet another benefit of allowing the user equipment (UE) 104 to adjust 206 the settings of the Wi-Fi transceiver 108 and the settings of the Bluetooth transceiver 110 is that it provides the device user with an indication that communication via Wi-Fi and/or Bluetooth is disabled while the Long Term Evolution (LTE) transceiver 106 is servicing high value and high priority communications.

The user equipment (UE) 104 may next detect 208 that the High Priority Communication (HPC) activity on the first technology transceiver has ended. For example, if the first technology transceiver is a Long Term Evolution (LTE) transceiver 106, the Long Term Evolution (LTE) receiver 112a may no longer be receiving High Priority Communication (HPC) activity that could receive interference due to the transmissions of the second technology transceiver and/or the third technology transceiver. The user equipment (UE) 104 may then adjust 210 the settings of the second technology transceiver and/or the third technology transceiver to account for the ending of the High Priority Communication (HPC) activity. For example, if the transmissions of the Bluetooth transceiver 110 were shut off, the user equipment (UE) 104 may turn the transmissions of the Bluetooth transceiver 110 back on.

Figure 3 is a block diagram of an ISM controller 324 for use in the present systems and methods. The ISM controller 324 of Figure 3 may be one configuration of the ISM controller 124 of Figure 1A. As discussed above, the ISM controller 324 is the logical entity implemented in the user equipment (UE) 104 to manage the features and functions necessary to enable and disable the Wi-Fi transceiver 108 and/or the Bluetooth transceiver 110 in response to High Priority Communication (HPC) activity on the Long Term Evolution (LTE) transceiver 106. The ISM controller 324 may manage both the Wi-Fi transceiver 108 and the Bluetooth transceiver 110 according to a configuration 120 set by the user, a configuration 121 set by the manufacturer or a configuration 122 set by the eNB 102.

The ISM controller 324 may execute from time to time at the direction of a higher level operating system. The operating system may trigger the ISM controller 324 to execute when a new Radio Resource Control (RRC) message is received or transmitted by the Long Term Evolution (LTE) protocol stack, when a new configuration 120 set by the user is entered or when the Non-Access Stratum (NAS) layer detects a change in the Long Term Evolution (LTE) configuration. The ISM controller 324 may also be triggered to execute periodically.

The ISM controller 324 may be configured to execute functions as necessary to enable and disable the Wi-Fi transceiver 108 and/or the Bluetooth transceiver 110 only when the user equipment (UE) 104 is in the Long Term Evolution (LTE) E-UTRA state RRC_CONNECTED. When the ISM controller 324 is not configured to execute functions as necessary only when the user equipment (UE) 104 is in the Long Term Evolution (LTE) E-UTRA state RRC_CONNECTED, the ISM controller 324 may execute those functions regardless of the Long Term Evolution (LTE)-UTRA state. The ability of the ISM controller 324 to be configured to execute only when the user equipment (UE) 104 is in the Long Term Evolution (LTE) E-UTRA state RRC_CONNECTED may be configured by the eNB 102 and signaled to the user equipment (UE) 104 via Long Term Evolution (LTE) signaling or configured by default settings provisioned at the time of manufacture of the user equipment (UE) 104.

The ISM controller 324 may disable the Wi-Fi transceiver 108 and/or the Bluetooth transceiver 110 as a means to remove the interference caused by Wi-Fi/Bluetooth transmissions that falls on the Long Term Evolution (LTE) receiver 112a when High Priority Communication (HPC) is active on the Long Term Evolution (LTE) transceiver 106. The ISM controller 324 may enable/disable a Wi-Fi transceiver 108 by sending a command to the logical entity that controls the Wi-Fi transceiver 108 or by disabling the power amplifiers 119a of the Wi-Fi transceiver 108. The ISM controller 324 may enable/disable a Bluetooth transceiver 110 by sending a command to the logical entity that controls the Bluetooth transceiver 110 or by disabling the power amplifiers 119b of the Bluetooth transceiver 110. The ISM controller 324 may disable the power amplifiers 119 when it is not possible to logically disable the ISM band transceivers.

The ISM controller 324 may be responsive to indications that one or more High Priority Communications (HPCs) are, or will soon be, active on the Long Term Evolution (LTE) transceiver 106. The ISM controller 324 may also be responsive to indications that one or more High Priority Communications (HPCs) are no longer active on the Long Term Evolution (LTE) transceiver 106. The source of the High Priority Communication (HPC) indication may be the reception by the user equipment (UE) 104 of a Long Term Evolution (LTE) Radio Resource Control (RRC) message SystemInformationBlockType 1 (via the broadcast control channel (BCCH) Logical channel) that includes scheduling information of type sibType10, sibType11 or sibType12-v920. The source of the High Priority Communication (HPC) indication may also be the reception by the user equipment (UE) 104 of a Long Term Evolution (LTE) Radio Resource Control (RRC) message SystemInformation (via the BCCH Logical channel) that include an Information Element (IE) of type SystemInformationBlockType 10, SystemInformationBlockType 11 or SystemInformationBlockType12-r9. The source of the High Priority Communication (HPC) indication may further be the transmission by the user equipment (UE) 104 of a Long Term Evolution (LTE) Radio Resource Control (RRC) message RRCConnectionRequest (via the common control channel (CCCH) Logical channel) that requests a signaling of a mobile originated emergency call via the EstablishmentCause Information Element (IE) set to "emergency." The source of the High Priority Communication (HPC) indication may also be the determination by the Non-Access Stratum (NAS) that one or more DRBs has exceeded the minimum level required before a DRB is designated as a "High QoS" DRB.

The ISM controller 324 may be responsive to external commands, such as from the eNB 102 or the user, to control its operation. The ability of the ISM controller 324 to disable/enable the Wi-Fi transceiver 108 and/or the Bluetooth transceiver 110 when a High Priority Communication (HPC) is active may be configured by the user via a user interface on the user equipment (UE) 104. The ability of the ISM controller 324 to disable/enable the Wi-Fi transceiver 108 and/or the Bluetooth transceiver 110 when a High Priority Communication (HPC) is active may also be configured by default settings provisioned at the time of the user equipment (UE) 104 manufacture that may override the configuration 120 set by the user. The ability of the ISM controller 324 to disable/enable the Wi-Fi transceiver 108 and/or the Bluetooth transceiver 110 when a High Priority Communication (HPC) is active may further be configured by the eNB 102 and signaled to the user equipment (UE) 104 via Long Term Evolution (LTE) signaling that may override the configuration 121 chosen by default settings provisioned at the time of the user equipment (UE) 104 manufacture and/or override the configuration 120 set by the user.

The ISM controller 324 may include ISM_State_Machine 331. ISM_State_Machine 331 may be a logical entity used by the ISM controller 324 to define how and under what circumstances the relationship between the ISM controller 324 and the Wi-Fi transceiver 108 and the relationship between the ISM controller 324 and the Bluetooth transceiver 110 are modified. ISM_State_Machine 331 may maintain the current state and process events relative to the current state to generate new states of the ISM controller 324. ISM_State_Machine 331 may also execute functionality associated with a state.

The ISM controller 324 may include LTE_State_Generator 332. The LTE_State_Generator 332 may be a logical entity used by the ISM controller 324 to determine the operating state of the Long Term Evolution (LTE) protocol stack. For the purpose of the ISM controller 324, the operating state of the Long Term Evolution (LTE) protocol stack is either E-UTRA RRC_CONNECTED or not E-UTRA RRC_CONNECTED. The operating state of the Long Term Evolution (LTE) protocol stack may be used to synchronize the operation of the ISM controller 324 with the level of connectivity between the Long Term Evolution (LTE) protocol stack and the eNB 102.

When the LTE_State_Generator 332 detects an indication that user equipment (UE) 104 has received a Radio Resource Control (RRC) message RRCConnectionRelease, the LTE_State_Generator 332 may set the ISM controller 324 operating state 334 LTE_RRC_Connected = FALSE. When the LTE_State_Generator 332 detects an indication that user equipment (UE) 104 has received a Radio Resource Control (RRC) message RRCConnectionReconfiguration and an indication that the user equipment (UE) 104 has transmitted a Radio Resource Control (RRC) message RRCConnectionReconfigurationComplete and the RRC-TransactionIdentifier is the same for both messages, the LTE_State_Generator 332 may set the ISM controller 324 operating state 334 LTE_RRC_Connected = TRUE. When the LTE_State_Generator 332 sets the operating state 334 of the ISM controller 324 LTE_RRC_Connected = FALSE, the ISM controller 324 will not execute ISM_State_Machine 331, eNB_Mode_Generator 338 and HPC_Event_Generator 340, but will execute User_Mode_Generator 336.

User_Mode_Generator 336 may be a logical entity that is part of the ISM controller 324. The User_Mode_Generator 336 may be used by the ISM controller 324 to obtain Operating Parameters chosen by the user. The Operating Parameters may express the user's desire that the ISM controller 324 should or should not disable the Wi-Fi transceiver 108 and/or Bluetooth transceiver 110 when High Priority Communication (HPC) is active.

When the User_Mode_Generator 336 receives an indication that the Wi-Fi transceiver 108 can be disabled when a High Priority Communication (HPC) is active, the User_Mode_Generator 336 may set the Operating Parameter Request_Disabling_Wi_Fi = TRUE and make a copy in Non-Volatile storage. The User_Mode_Generator 336 can receive this indication only from the user. When the User_Mode_Generator 336 receives an indication that the Wi-Fi transceiver 108 can not be disabled when a High Priority Communication (HPC) is active, the User_Mode_Generator 336 may set the Operating Parameter Request_Disabling_Wi_Fi = FALSE and make a copy in Non-Volatile storage. The User_Mode_Generator 336 can receive this indication only from the user.

When the User_Mode_Generator 336 receives an indication that the Bluetooth transceiver 110 can be disabled when a High Priority Communication (HPC) is active, the User_Mode_Generator 336 may set the Operating Parameter Request_Disabling_BT = TRUE and make a copy in Non-Volatile storage. The User_Mode_Generator 336 can receive this indication only from the user. When the User_Mode_Generator 336 receives an indication that the Bluetooth transceiver 110 cannot be disabled when an High Priority Communication (HPC) is active, the User_Mode_Generator 336 may set the Operating Parameter Request_Disabling_BT = FALSE and make a copy in Non-Volatile storage. The User_Mode_Generator 336 can receive this indication only from the user.

When the User_Mode_Generator 336 receives an indication that would effect an Operating Parameter, and one or more of the ISM transceivers are disabled (i.e. ISM_Mode_Disabled_BT == TRUE or ISM_Mode_Disabled_WiFi == TRUE), the User_Mode_Generator 336 may make a copy in Non-Volatile storage but will not update the working copy of the Operating Parameter until High Priority Communication (HPC) activity has terminated.

The eNB_Mode_Generator 338 may be a logical entity that is part of the ISM Controller 324. The eNB_Mode_Generator 338 may be used by the ISM Controller 324 to obtain Operating Modes sent by the core network 105 via the eNB 102 to the user equipment (UE) 104 or directly by the eNB 102 to the user equipment (UE) 104. The Operating Modes may be used to configure the functionality of the ISM_State_Machine 331. The Operating Modes may express a configuration for the user equipment (UE) 104 such that the ISM Controller 324 should or should not disable the Wi-Fi transceiver 108 when a High Priority Communication (HPC) is active. The Operating Modes may also express a configuration for the user equipment (UE) 104 such that the ISM Controller 324 should or should not disable the Bluetooth transceiver 110 when a High Priority Communication (HPC) is active. The Operating Modes may further express a configuration for the user equipment (UE) 104 such that the ISM Controller 324 should or should not execute only when the user equipment (UE) 104 is in the state E-UTRA RRC_CONNECTED. The eNB_Mode_Generator 338 may accept messages from the Non-Access Stratum (NAS) layer of the user equipment (UE) 104 as sent by the core network 105, via the eNB 102 to the user equipment (UE) 104. The eNB_Mode_Generator 338 may also accept messages from the Access Stratum (AS) layer of the user equipment (UE) 104 as sent by the eNB 102 to the user equipment (UE) 104.

When the eNB_Mode_Generator 338 receives an indication that the Wi-Fi transceiver 108 can be disabled when a High Priority Communication (HPC) is active, the eNB_Mode_Generator 338 will set the Operating Mode Allow_Disabling_Wi-Fi = TRUE and make a copy in Non-Volatile storage. The eNB_Mode_Generator 338 can receive this indication only from the Long Term Evolution (LTE) network. When the eNB_Mode_Generator 338 receives an indication that the Wi-Fi transceiver 108 cannot be disabled when a High Priority Communication (HPC) is active, the eNB_Mode_Generator 338 will set the Operating Mode Allow_Disabling_Wi-Fi = FALSE and make a copy in Non-Volatile storage. The eNB_Mode_Generator 338 can receive this indication only from the Long Term Evolution (LTE) network.

When the eNB_Mode_Generator 338 receives an indication that the Bluetooth transceiver 110 can be disabled when a High Priority Communication (HPC) is being received by the Long Term Evolution (LTE) transceiver 106, it will set the Operating Mode Allow_Disabling_BT = TRUE and make a copy in Non-Volatile storage. The eNB_Mode_Generator 338 can receive this indication only from the Long Term Evolution (LTE) network. When the eNB_Mode_Generator 338 receives an indication that the Bluetooth transceiver 110 cannot be disabled when a High Priority Communication (HPC) is being received by the Long Term Evolution (LTE) transceiver 106, it will set the Operating Mode Allow_Disabling_BT = FALSE and make a copy in Non-Volatile storage. The eNB_Mode_Generator 338 can receive this indication only from the Long Term Evolution (LTE) network.

When the eNB_Mode_Generator 338 receives an indication that the user's requests to disable/enable the Bluetooth transceiver 110 and/or the Wi-Fi transceiver 108 are to be overridden (i.e., the user's requests are ignored by the ISM_State_Machine 331) when a High Priority Communication (HPC) is being received by the Long Term Evolution (LTE) transceiver 106, it will set the Operating Mode Override_User_Request = TRUE and make a copy in Non-Volatile storage. The eNB_Mode_Generator 338 can receive this indication only from the Long Term Evolution (LTE) network.

When the eNB_Mode_Generator 338 receives an indication that the user's requests to disable/enable the Bluetooth transceiver 110 and/or the Wi-Fi transceiver 108 are not to be overridden (i.e., the user's requests are accepted by the ISM_State_Machine 331) when a High Priority Communication (HPC) is being received by the Long Term Evolution (LTE) transceiver 106, it will set the Operating Mode Override_User_Request = FALSE and make a copy in Non-Volatile storage. The eNB_Mode_Generator 338 can receive this indication only from the Long Term Evolution (LTE) network.

When the eNB_Mode_Generator 338 receives an indication that the ISM Controller 324 can only operate when the user equipment (UE) 104 is in the state E-UTRA RRC_CONNECTED, it will set the Operating Mode Allow_Only_Connected = TRUE and make a copy in Non-Volatile, storage. The eNB_Mode_Generator 338 can receive this indication only from the Long Term Evolution (LTE) network.

When the eNB_Mode_Generator 338 receives an indication that the ISM Controller 324 can operate regardless of the E-UTRA state of the user equipment (UE) 104, it will set the Operating Mode Allow_Only_Connected = FALSE and make a copy in Non-Volatile storage. The eNB_Mode_Generator 338 can receive this indication only from the Long Term Evolution (LTE) network.

When the eNB_Mode_Generator 338 receives an indication that the ISM Controller 324 can inform the eNB 102 when the Wi-Fi transceiver 108 has been disabled, it will set the Operating Mode Sig_eNB_Wi-Fi_Disabled = TRUE and make a copy in Non-Volatile storage. When the eNB_Mode_Generator 338 receives an indication that the ISM Controller 324 cannot inform the eNB 102 when the Wi-Fi transceiver 108 has been disabled, it will set the Operating Mode Sig_eNB_Wi-Fi_Disabled = FALSE and make a copy in Non-Volatile storage. The eNB_Mode_Generator 338 can receive these indications only from the Long Term Evolution (LTE) network.

When the eNB_Mode_Generator 338 receives an indication that the ISM Controller 324 can inform the eNB 102 when the Bluetooth transceiver 110 has been disabled, it will set the Operating Mode Sig_eNB_BT_Disabled = TRUE and make a copy in Non-Volatile storage. When the eNB_Mode_Generator 338 receives an indication that the ISM Controller 324 cannot inform the eNB 102 when the Bluetooth transceiver 110 has been disabled, it will set the Operating Mode Sig_eNB_BT_Disabled = FALSE and make a copy in Non-Volatile storage. The eNB_Mode_Generator 338 can receive these indications only from the Long Term Evolution (LTE) network.

When the eNB_Mode_Generator 338 receives an indication that the ISM Controller 324 can inform the user when the Wi-Fi transceiver 108 has been disabled, it will set the Operating Mode Sig_User_Wi-Fi_Disabled = TRUE and make a copy in Non-Volatile storage. When the eNB_Mode_Generator 338 receives an indication that the ISM Controller 324 cannot inform the user when the Wi-Fi transceiver 108 has been disabled, it will set the Operating Mode Sig_User_Wi-Fi_Disabled = FALSE and make a copy in Non-Volatile storage. The eNB_Mode_Generator 338 can receive these indications only from the Long Term Evolution (LTE) network.

When the eNB_Mode_Generator 338 receives an indication that the ISM Controller 324 can inform the user when the Bluetooth transceiver 110 has been disabled, it will set the Operating Mode Sig_User_BT_Disabled = TRUE and make a copy in Non-Volatile storage. When the eNB_Mode_Generator 338 receives an indication that the ISM Controller 324 cannot inform the user when the Bluetooth transceiver 110 has been disabled, it will set the Operating Mode Sig_User_BT_Disabled = FALSE and make a copy in Non-Volatile storage. The eNB_Mode_Generator 338 can receive these indications only from the Long Term Evolution (LTE) network.

When the eNB_Mode_Generator 338 receives an indication that would effect an Operating Mode, and one or more of the ISM transceivers are disabled (i.e., ISM_Mode_Disabled_BT == TRUE or ISM_Mode_Disabled_WiFi == TRUE), it will make a copy in Non-Volatile storage but will not update the working copy of the Operating mode until High Priority Communication (HPC) activity has terminated.

The ISM controller 324 may include an HPC_Event_Generator 340. The HPC_Event_Generator 340 is a logical entity that may be used by the ISM Controller 324 to obtain High Priority Communication (HPC) Events. The events are used as inputs to the ISM_State_Machine 331. The HPC_Event_Generator 340 may track the E-UTRA Radio Resource Control (RRC) Protocol messages exchanged between the user equipment (UE) 104 and the eNB 102. A High Priority Communication (HPC) event is generated in response to the starting of any High Priority Communication (HPC) activity. An event is generated in response to the termination of all active High Priority Communication (HPC) or the termination of all active High Priority Communication (HPC) timers. The HPC_Event_Generator 340 uses the variable HPC_State to track whether any High Priority Communication (HPC) is currently active or not.

When the HPC_Event_Generator 340 detects that any High Priority Communication (HPC) indication has become active, it will set the local event variable Event_Active_HPC = TRUE and pass the event to the ISM_State_Machine 331 for processing. The HPC_Event_Generator 340 will generate an event indicating that a High Priority Communication (HPC) is active when the following condition is true:
((HPC_State == Inactive) -AND-
   ((Reception of an RRC SystemInformationBlockType1 message that includes scheduling information of type sibType10, sibType11 or sibType12-v920) -OR- (Detection of High QOS assigned to DRB) -OR-
   (Detection of e911 call activity)))

The HPC_Event_Generator 340 may detect e911 call activity by the Non-Access Stratum (NAS) establishing a packet data network (PDN) connection for emergency bearer services, the Non-Access Stratum (NAS) has a PDN connection for emergency bearer services established or the transmission of a Radio Resource Control (RRC) RRCConnectionRequest message that contains an establishmentCause set to emergency. When the HPC_Event_Generator 340 generates an event indicating that a High Priority Communication (HPC) is active due to the reception of sibType10, sibType11 or sibType12-v920, the respective flags and timers will be set:
Tracking_SIB, Tracking_SIB10, SIB10_Time and Tracking_SIB11, SIB11_Time and Tracking_SIB12, SIB12_Time.

When the HPC_Event_Generator 340 generates an event indicating that a High Priority Communication (HPC) is active due to e911 activity, the Tracking_e911 flag is set. When the HPC_Event_Generator 340 generates an event indicating that a High Priority Communication (HPC) is active due to a High QoS assigned to a DRB, the Tracking_HDRB flag is set.

When the HPC_Event_Generator 340 detects that all conditions associated with the completion of High Priority Communication (HPC) activity have been satisfied, it will set the local event variable ISM_Event_Inactive_HPC = TRUE and pass the event to the ISM_State_Machine 331 for processing. The HPC_Event_Generator 340 will not generate an event indicating that a High Priority Communication (HPC) is inactive until the following condition is true:
((HPC_State != Inactive) -AND-
   (((Tracking_SIB10 == FALSE) -OR-
   (SystemInformationBlockType10 is received -OR- SIB10_Time has expired)) -OR-
   ((Tracking_SIB11 == FALSE) -OR-
   ((SystemInformationBlockType11 is received - AND-
   warningMessageSegmentType set to lastSegment) -OR-
   SIB11_Time has expired)) -OR-
   ((Tracking_SIB12 == FALSE) -OR- (SIB12_Time has expired)) - OR-
   ((Tracking_HDRB == FALSE) -OR- (Detection no DRBs are assigned a High QOS)) -OR- ((Tracking_e911 == FALSE) -OR-(Detection of the end of e911 call activity)) ))

The HPC_Event_Generator 340 may detect the end of e911 call activity by determining that the Non-Access Stratum (NAS) is releasing a PDN connection for emergency bearer services, the Non-Access Stratum (NAS) has released a PDN connection for emergency bearer services or the reception of a Radio Resource Control (RRC) RRCConnectionRelease message. If Allow_Only_Connected == TRUE, then the logic for tracking the state of e911 completion as part of the logic to determine the end of High Priority Communication (HPC) activity via receptions of RRCConnectionRelease is defined here and implemented in the flow diagrams below for completeness and symmetry of the algorithms. However, from a practical point of view this condition is not executed because reception of RRCConnectionRelease causes the ISM_State_Machine 331 to terminate and return to default setting.

When the ISM Controller 324 detects that it is running for the first time after user equipment (UE) 104 Power On, it will initialize all other working variables and Operating States 334 to a default setting (e.g., set LTE_RRC_Connected to FALSE) and set all Operating Modes and Operating Parameters to the values stored in Non-Volatile RAM. When the Operating Mode Allow_Only_Connected = TRUE and the ISM Controller 324 detects that the Long Term Evolution (LTE) Radio Resource Control (RRC) Protocol layer state is not RRC_CONNECTED via the reception of an RRCConnectionRelease message and (ISM_Mode_Disabled_BT = TRUE or ISM_Mode_Disabled_WiFi = TRUE), it will terminate the ISM_State_Machine 331, initialize all working variables and Operating States 334 to a default setting, set all Operating Modes and Operating Parameters to the values stored in Non-Volatile memory and re-set the Wi-Fi transceiver 108 and the Bluetooth transceiver 110 to their default settings if necessary.

The ISM controller 324 may be located in the Radio Resource Control (RRC) layer, the Non-Access Stratum (NAS) layer or outside of the Long Term Evolution (LTE) function (e.g., another functional block or inside of an ISM transceiver). When the ISM controller 324 is located in the Non-Access Stratum (NAS) layer, IDC related information (used frequency, power or interference level) and RRC_Messages may be provided to the Non-Access Stratum (NAS) layer from the Radio Resource Control (RRC) layer. When the ISM controller 324 is located in the Radio Resource Control (RRC) layer, the Non-Access Stratum (NAS) bearer status may be provided to the Radio Resource Control (RRC) layer from the Non-Access Stratum (NAS) layer.

The ISM_State_Machine 331 may be described using the following pseudo code:
- If the event Event_Active_HPC == TRUE
   ∘ Event_Active_HPC = FALSE
   ∘ If (Allow_Disabling_BT == TRUE) AND ((Override_User_Request == TRUE) OR (Request_Disabling_BT == TRUE))
   ∘ If there is a logical link to the Bluetooth transceiver controller
      ∘ Send command to Bluetooth logical entity to turn off Tx function
   ∘ Else
      ∘ Disable the power amplifiers of the Bluetooth transceiver
   ∘ If Sig_eNB_BT_Disabled == TRUE
   ∘ Inform the eNB that Bluetooth transmissions have been disabled
   ∘ If Sig_User_BT_Disabled == TRUE
   ∘ Inform the user that the Bluetooth is disabled
   ∘ Set mode ISM_Mode_Disabled_BT = TRUE
   ∘ If (Allow_Disabling_Wi-Fi == TRUE) AND ((Override_User_Request == TRUE) OR (Request_Disabling_Wi-Fi == TRUE))
      ∘ If there is a logical link to the Wi-Fi transceiver controller
         ∘ Send command to Wi-Fi logical entity to turn off Tx function
      ∘ Else
         ∘ Disable the power amplifiers of the Wi-Fi transceiver
      ∘ If Sig_eNB_Wi-Fi_Disabled == TRUE
      ∘ Inform the eNB that Wi-Fi transmissions have been disabled
      ∘ If Sig_User_Wi-Fi_Disabled == TRUE
      ∘ Inform the user that the Wi-Fi is disabled.
      ∘ Set mode ISM_Mode_Disabled_WiFi = TRUE

//The ISM Controller may disable the transmit functionality of the Wi-Fi transceiver and/or the Bluetooth transceivers, although they may be allowed to receive
- If the event Event_Inactive_HPC == TRUE
   • Event_Inactive_HPC = FALSE
   • If the ISM mode ISM_Mode_Disabled_BT == TRUE
      ∘ If there is a logical link to the Bluetooth transceiver controller
         ∘ Send command to the Bluetooth logical entity to turn on Tx function
      ∘ Else
         ∘ Enable the power amplifiers of the Bluetooth transceiver
      ∘ If Sig_eNB_BT_Disabled == TRUE
      ∘ Inform the eNB that Bluetooth transmissions have been enabled
      ∘ If Sig_User_BT_Disabled == TRUE
      ∘ Inform the user that the Bluetooth is enabled
      ∘ Set mode ISM_Mode_Disabled_BT = FALSE
- If the ISM mode ISM_Mode_Disabled_Wi-Fi == TRUE
   ∘ If there is a logical link to the Wi-Fi transceiver controller
      ∘ Send command to Wi-Fi logical entity to turn on Tx function
      ∘ Else
         ∘ Enable the power amplifiers of the Wi-Fi transceiver
      ∘ If Sig_eNB_Wi-Fi_Disabled == TRUE
         ∘ Inform the eNB that Wi-Fi transmissions have been enabled
      ∘ If Sig_User_Wi-Fi_Disabled == TRUE
      ∘ Inform the user that Wi-Fi is enabled
      ∘ Set mode ISM_Mode_Disabled_BT = FALSE
- Update the working copies Operating Parameters and Operating Modes with the values in Non-Volatile memory //The ISM Controller may enable transmit functionality of the Wi-Fi transceiver and/or the Bluetooth transceiver

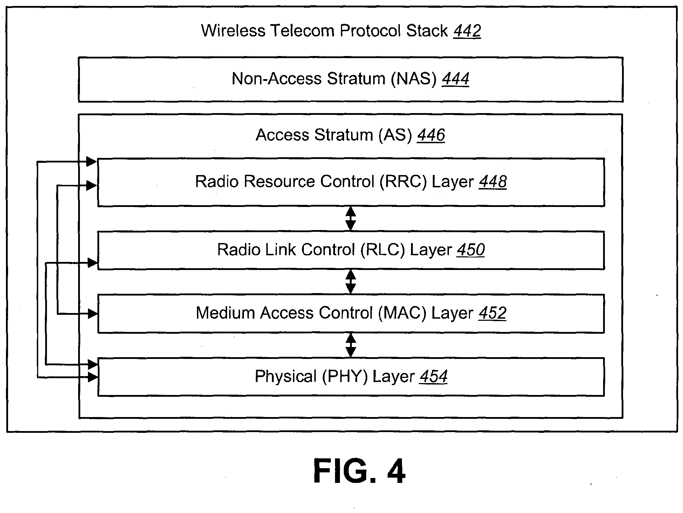

Figure 4 is a block diagram illustrating a wireless telecom protocol stack 442. The wireless telecom protocol stack 442 may include a Non-Access Stratum (NAS) 444 and an Access Stratum (AS) 446. The Non-Access Stratum (NAS) 444 is a functional layer that forms the stratum above the Long Term Evolution (LTE) control plane and includes the protocols that handle activities between the user equipment (UE) 104 and the core network 105. The Access Stratum (AS) 446 is a functional layer that includes the protocols that handle activities between the user equipment (UE) 104 and the access network (i.e., the eNB 102). The Access Stratum (AS) 446 may include the Radio Resource Control (RRC) layer 448, the Radio Link Control (RLC) layer 450, the Medium Access Control (MAC) layer 452 and the Physical (PHY) layer 454. The Radio Resource Control (RRC) layer 448 is the top most layer of the Access Stratum (AS) 446 used for processing Long Term Evolution (LTE) Radio Resource Control (RRC) type messages.

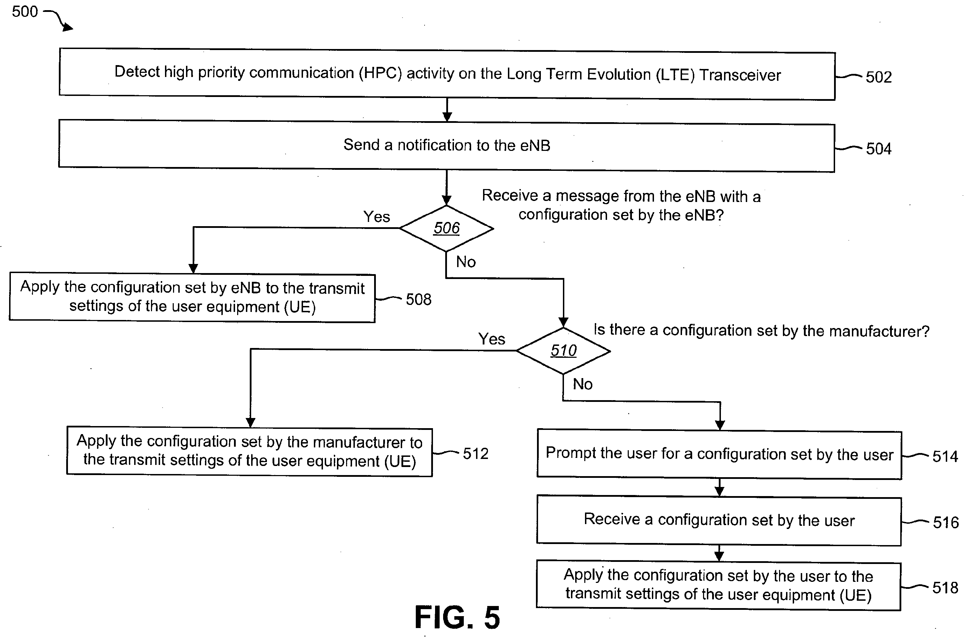

Figure 5 is a flow diagram of another method 500 for responding to High Priority Communication (HPC) activity on a Long Term Evolution (LTE) transceiver 106. The method 500 may be performed by a user equipment (UE) 104. The user equipment (UE) 104 may detect 502 High Priority Communication (HPC) activity on the Long Term Evolution (LTE) transceiver 106. The user equipment (UE) 104 may then send 504 a notification to the eNB 102. The user equipment (UE) 104 may determine 506 whether it has received a message from the eNB 102 with a configuration 122 set by the eNB 102.

If the user equipment (UE) 104 has received a message from the eNB 102 with a configuration 122 set by the eNB 102, the user equipment (UE) 104 may apply 508 the configuration 122 set by the eNB 102 to the transmit settings 123 of the user equipment (UE) 104. If the user equipment (UE) 104 has not received a message from the eNB 102 with a configuration 122 set by the eNB 102, the user equipment (UE) 104 may determine 510 whether there is a configuration 121 set by the manufacturer. If there is a configuration set 121 by the manufacturer, the user equipment (UE) 104 may apply 512 the configuration 121 set by the manufacturer to the transmit settings 123 of the user equipment (UE) 104.

If there is not a configuration 121 set by the manufacture, the user equipment (UE) 104 may prompt 514 the user for a configuration 120 set by the user. The user equipment (UE) 104 may then receive 516 a configuration 120 set by the user. The user equipment (UE) 104 may apply 518 the configuration 120 set by the user to the transmit settings 123 of the user equipment (UE) 104. If the user equipment (UE) 104 does not receive a configuration 120 set by the user, the user equipment (UE) 104 may disable the functions (i.e., Bluetooth and Wi-Fi) until the user provides the configuration 120 set by the user.

The user equipment (UE) 104 may prioritize the configuration 120 set by the user, the configuration 121 set by the manufacturer and the configuration 122 set by the eNB 102 in may different ways. For example, although the configuration 122 set by the eNB 102 is illustrated in Figure 5 as having the highest priority while the configuration 120 set by the user is illustrated as having the lowest priority, the configuration 120 set by the user may instead have the highest priority while the configuration 122 set by the eNB 102 may have the lowest priority. As another example, the configuration 121 set by the manufacturer may have the highest priority, the configuration 122 set by the eNB 102 may have the next highest priority and the configuration 120 set by the user may have the lowest priority. The priorities of the configuration 120 set by the user, the configuration 121 set by the manufacturer and the configuration 122 set by the eNB 102 may vary for each user equipment (UE) 104.

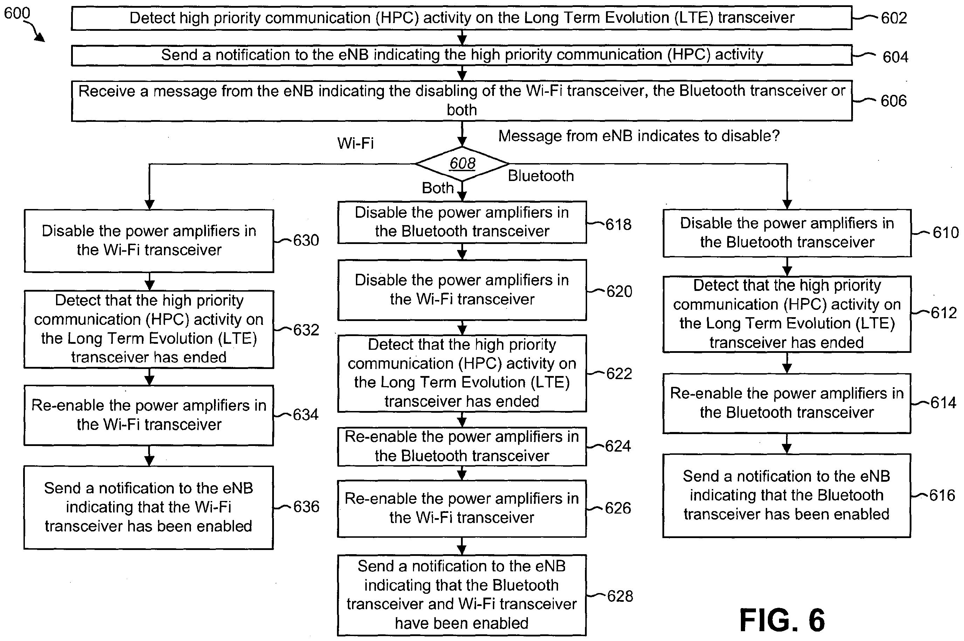

Figure 6 is a flow diagram of a method 600 for responding to High Priority Communication (HPC) activity on a Long Term Evolution (LTE) transceiver 106 using a configuration set by an eNB 102. The method 600 may be performed by a user equipment (UE) 104. The user equipment (UE) 104 may detect 602 High Priority Communication (HPC) activity on the Long Term Evolution (LTE) transceiver 106. The user equipment (UE) 104 may send 604 a notification to the eNB 102 indicating the High Priority Communication (HPC) activity. The user equipment (UE) 104 may receive 606 a message from the eNB 102 indicating the disabling of the Wi-Fi transceiver 108, the Bluetooth transceiver 110 or both. The user equipment (UE) 104 may determine 608 whether the message from the eNB 102 indicates to disable Wi-Fi, Bluetooth or both.

If the message from the eNB 102 indicates that the user equipment (UE) 104 should disable Bluetooth, the user equipment (UE) 104 may disable 610 the power amplifiers 119b in the Bluetooth transceiver 110. The user equipment (UE) 104 may then detect 612 that the High Priority Communication (HPC) activity on the Long Term Evolution (LTE) transceiver 106 has ended. The user equipment (UE) 104 may re-enable 614 the power amplifiers 119b in the Bluetooth transceiver 110. The user equipment (UE) 104 may then send 616 a notification to the eNB 102 indicating that the Bluetooth transceiver 110 has been enabled.

If the message from the eNB 102 indicates that the user equipment (UE) 104 should disable Wi-Fi, the user equipment (UE) 104 may disable 630 the power amplifiers 119a in the Wi-Fi transceiver 108. The user equipment (UE) 104 may then detect 632 that the High Priority Communication (HPC) activity on the Long Term Evolution (LTE) transceiver 106 has ended. The user equipment (UE) 104 may re-enable 634 the power amplifiers 119a in the Wi-Fi transceiver 108. The user equipment (UE) 104 may then send 636 a notification to the eNB 102 indicating that the Wi-Fi transceiver 108 has been enabled.

If the message from the eNB 102 indicates that the user equipment (UE) 104 should disable both Wi-Fi and Bluetooth, the user equipment (UE) 104 may disable 618 the power amplifiers 119b in the Bluetooth transceiver 110. The user equipment (UE) 104 may also disable 620 the power amplifiers 119a in the Wi-Fi transceiver 108. The user equipment (UE) 104 may then detect 622 that the High Priority Communication (HPC) activity on the Long Term Evolution (LTE) transceiver 106 has ended. The user equipment (UE) 104 may re-enable 624 the power amplifiers 119b in the Bluetooth transceiver 110. The user equipment (UE) 104 may also re-enable 626 the power amplifiers 119a in the Wi-Fi transceiver 108. The user equipment (UE) 104 may then send 628 a notification to the eNB 102 indicating that the Bluetooth transceiver 110 and the Wi-Fi transceiver 108 have been enabled.

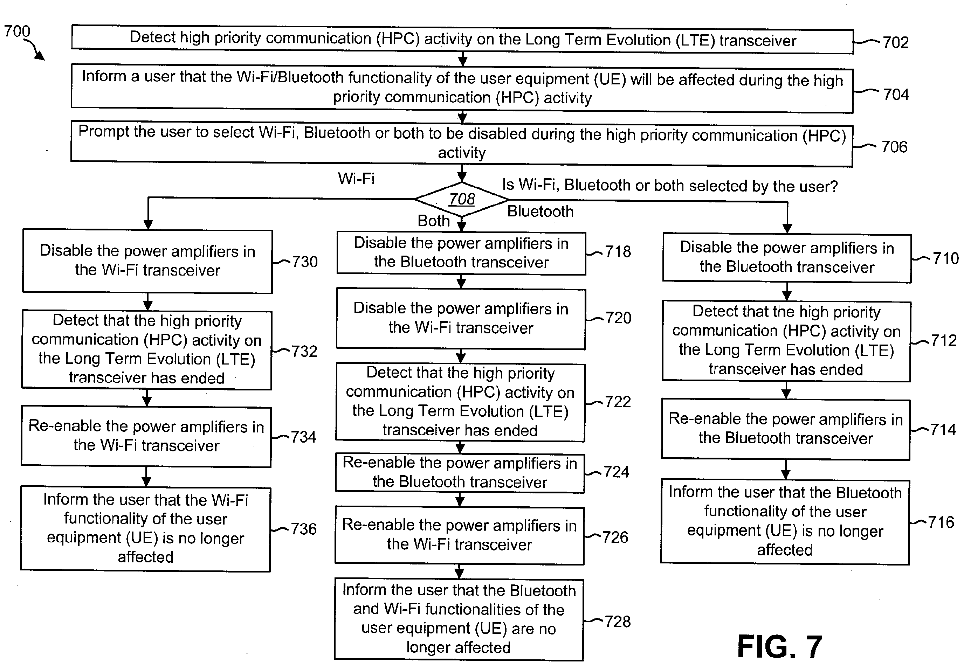

Figure 7 is a flow diagram of a method 700 for responding to High Priority Communication (HPC) activity on a Long Term Evolution (LTE) transceiver 106 using a configuration 120 set by a user. The method 700 may be performed by a user equipment (UE) 104. The user equipment (UE) 104 may detect 702 High Priority Communication (HPC) activity on the Long Term Evolution (LTE) transceiver 106. The user equipment (UE) 104 may inform 704 a user that the Wi-Fi/Bluetooth functionality of the user equipment (UE) 104 will be affected during the High Priority Communication (HPC) activity. In one configuration, the user equipment (UE) 104 may inform 704 a user that the Wi-Fi/Bluetooth functionality of the user equipment (UE) 104 will be affected during the High Priority Communication (HPC) activity using audio means, visual means, tactile means or a combination. The user equipment (UE) 104 may then prompt 706 the user to select Wi-Fi, Bluetooth or both to be disabled during the High Priority Communication (HPC) activity. The user equipment (UE) 104 may determine 708 whether Wi-Fi, Bluetooth or both is selected by the user.

If Bluetooth is selected by the user, the user equipment (UE) 104 may disable 710 the power amplifiers 119b in the Bluetooth transceiver 110. The user equipment (UE) 104 may then detect 712 that the High Priority Communication (HPC) activity on the Long Term Evolution (LTE) transceiver 106 has ended. The user equipment (UE) 104 may re-enable 714 the power amplifiers 119b in the Bluetooth transceiver 110. The user equipment (UE) 104 may also inform 716 the user that the Bluetooth functionality of the user equipment (UE) 104 is no longer affected. The user equipment (UE) 104 may inform 716 the user via audio means, visual means, tactile means or a combination.

If Wi-Fi is selected by the user, the user equipment (UE) 104 may disable 730 the power amplifiers 119a in the Wi-Fi transceiver 108. The user equipment (UE) 104 may then detect 732 that the High Priority Communication (HPC) activity on the Long Term Evolution (LTE) transceiver 106 has ended. The user equipment (UE) 104 may re-enable 734 the power amplifiers 119a in the Wi-Fi transceiver 108. The user equipment (UE) 104 may also inform 736 the user that the Wi-Fi functionality of the user equipment (UE) 104 is no longer affected. The user equipment (UE) 104 may inform 736 the user via audio means, visual means, tactile means or a combination.

If the user indicates that the user equipment (UE) 104 should disable both Wi-Fi and Bluetooth, the user equipment (UE) 104 may disable 718 the power amplifiers 119b in the Bluetooth transceiver 110. The user equipment (UE) 104 may also disable 720 the power amplifiers 119a in the Wi-Fi transceiver 108. The user equipment (UE) 104 may then detect 722 that the High Priority Communication (HPC) activity on the Long Term Evolution (LTE) transceiver 106 has ended. The user equipment (UE) 104 may re-enable 724 the power amplifiers 119b in the Bluetooth transceiver 110. The user equipment (UE) 104 may also re-enable 726 the power amplifiers 119a in the Wi-Fi transceiver 108. The user equipment (UE) 104 may then inform 728 the user that the Bluetooth and Wi-Fi functionalities of the user equipment (UE) 104 are no longer affected. The user equipment (UE) 104 may inform 728 the user via audio means, visual means, tactile means or a combination.

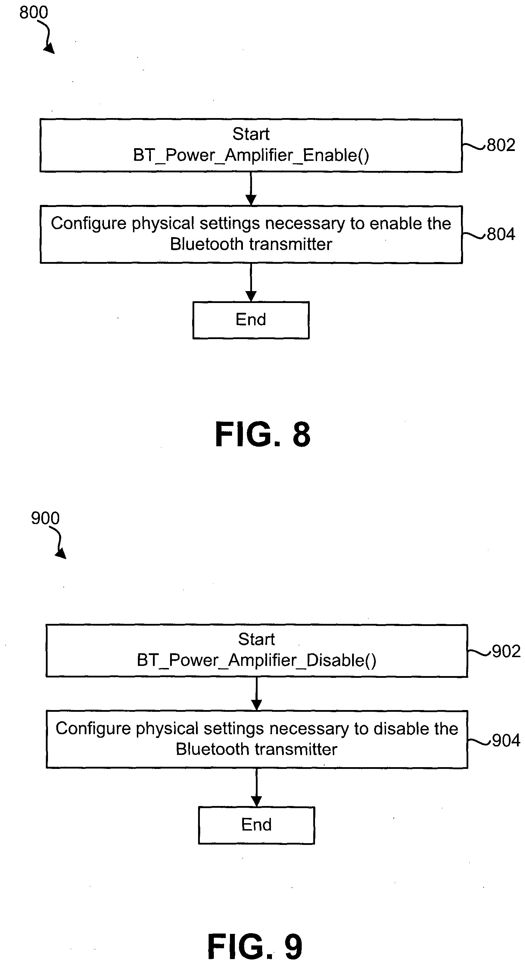

Figure 8 is a flow diagram of a method for enabling a power amplifier 119b in a Bluetooth transceiver 110. The method 800 may be performed by a user equipment (UE) 104. The method may be called by the ISM_State_Machine()331 Part#3. The user equipment (UE) 104 may start 802 BT_Power_Amplifier_Enable(). The user equipment (UE) 104 may configure 804 physical settings necessary to enable the Bluetooth transmitter 110. The method 800 may then end.

Figure 9 is a flow diagram of a method 900 for disabling a power amplifier 119b in a Bluetooth transceiver 110. The method 900 may be performed by a user equipment (UE) 104. The method 900 may be called by the ISM_State_Machine() 331 Part#3. The user equipment (UE) 104 may start 902 BT_Power_Amplifier_Disable(). The user equipment (UE) 104 may configure 904 physical settings necessary to disable the Bluetooth transmitter 110. The method 900 may then end.

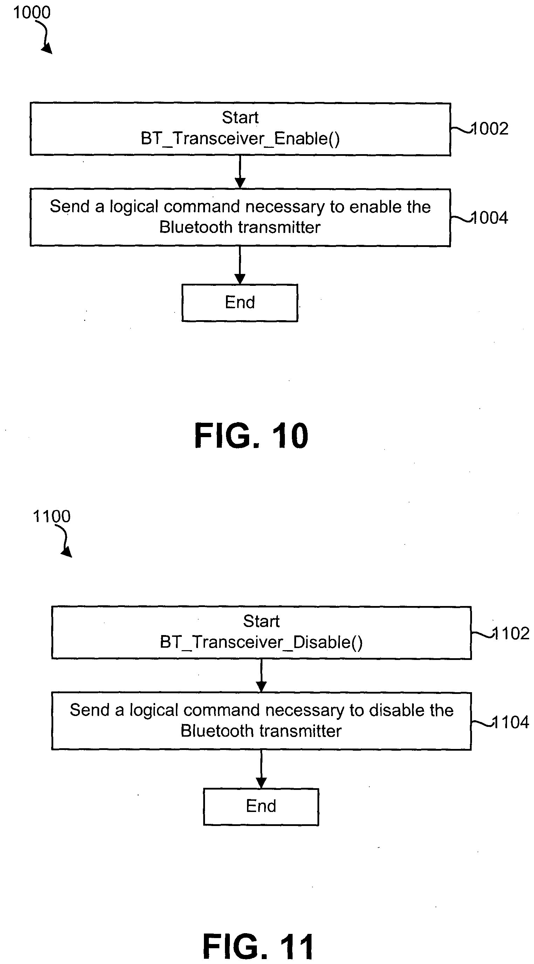

Figure 10 is a flow diagram of a method 1000 for logically enabling a Bluetooth transceiver 110. The method 1000 may be performed by a user equipment (UE) 104. The method 1000 may be called by the ISM_State_Machine() 331 Part#3. The user equipment (UE) 104 may start 1002 BT_Transceiver_Enable(). The user equipment (UE) 104 may send 1004 a logical command to enable the Bluetooth transmitter 110. The method 1000 may then end.

Figure 11 is a flow diagram of a method 1100 for logically disabling a Bluetooth transceiver 110. The method 1100 may be performed by a user equipment (UE) 104. The method 1100 may be called by the ISM_State_Machine() 331 Part#2. The user equipment (UE) 104 may start 1102 BT_Transceiver_Disable(). The user equipment (UE) 104 may send 1104 a logical command to disable the Bluetooth transmitter 110. The method 1100 may then end.

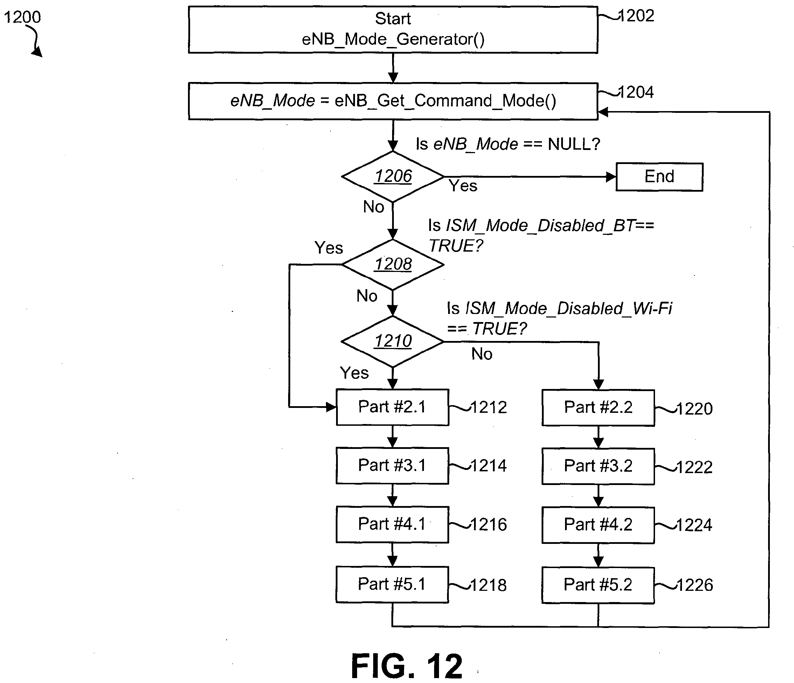

Figure 12 is a flow diagram of a method 1200 for parsing commands from an eNB 102 to set and clear Operating Modes. The method 1200 may be performed by a user equipment (UE) 104. The method 1200 may be performed by the eNB_Mode_Generator 338 and called by the ISM Controller 324.

The user equipment (UE) 104 may start 1202 eNB_Mode_Generator() 338. The user equipment (UE) 104 may set 1204 eNB_Mode = eNB_Get_Command_Mode(). The user equipment (UE) 104 may determine 1206 whether eNB_Mode is equal to NULL. If eNB_Mode is equal to NULL, then the method 1200 may end. If eNB_Mode is not equal to NULL, then the user equipment (UE) 104 may determine 1208 whether ISM_Mode_Disabled_BT is equal to TRUE. If ISM_Mode_Disabled_BT is equal to TRUE, then the user equipment (UE) 104 may execute 1212 part #2.1, execute 1214 Part #3.1, execute 1216 Part #4.1 and execute 1218 Part #5.1.

If ISM_Mode_Disabled_BT is not equal to TRUE, then the user equipment (UE) 104 may determine 1210 whether ISM_Mode_Disabled_Wi-Fi is equal to TRUE. If ISM_Mode_Disabled_Wi-Fi is equal to TRUE, The user equipment (UE) 104 may execute 1220 Part #2.2, execute 1222 Part #3.2, execute 1224 Part #4.2 and execute 1226 Part #5.2. If ISM_Mode_Disabled_Wi-Fi is not equal to TRUE, then the user equipment (UE) 104 may execute 1212 Part #2.1, execute 1214 Part #3.1, execute 1216 Part #4.1 and execute 1218 Part #5.1.

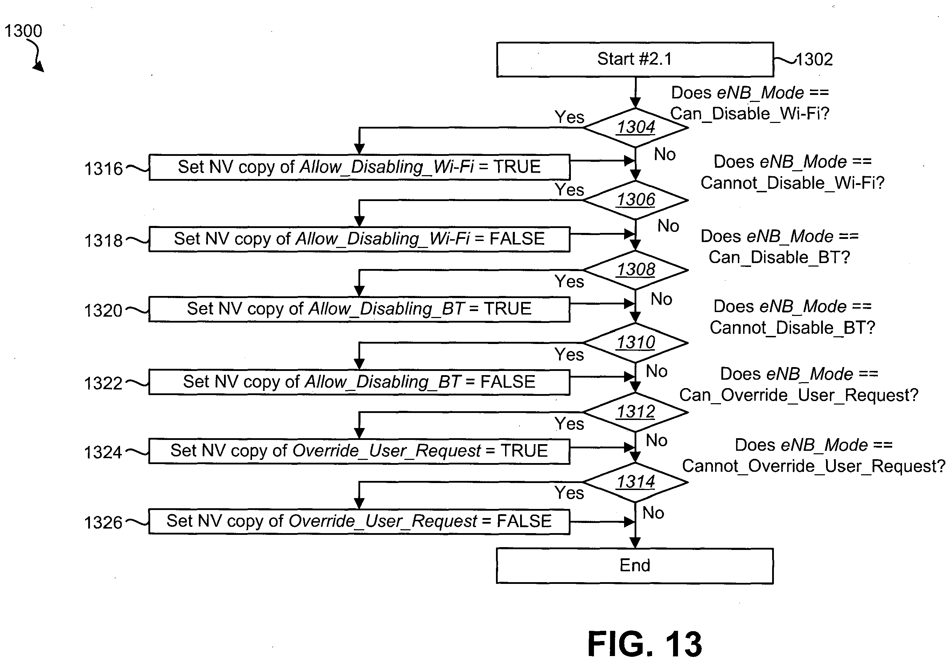

Figure 13 is a flow diagram of another method 1300 for parsing commands from an eNB 102 to set and clear Operating Modes. The method 1300 may be performed by a user equipment (UE) 104. The method 1300 may be performed by eNB_Mode_Generator 338 Part#2.1 and called by the ISM Controller 324. The eNB_Mode_Generator 338 may update the non-volatile (NV) RAM copy only if the High Priority Communication (HPC) is active.

The user equipment (UE) 104 may start 1302 #2.1. The user equipment (UE) 104 may determine 1304 whether eNB_Mode equals Can_Disable_Wi-Fi. If eNB_Mode equals Can_Disable_Wi-Fi, then the user equipment (UE) 104 may set 1316 the Non-Volatile (NV) copy of Allow_Disabling_Wi-Fi = TRUE and determine 1306 whether eNB_Mode equals Cannot_Disable_Wi-Fi. If eNB_Mode does not equal Can_Disable_Wi-Fi, then the user equipment (UE) 104 may determine 1306 whether eNB_Mode equals Cannot_Disable_Wi-Fi. If eNB_Mode equals Cannot_Disable_Wi-Fi, then the user equipment (UE) 104 may set 1318 the Non-Volatile (NV) copy of Allow_Disabling_Wi-Fi = FALSE.

If eNB_Mode does not equal Cannot_Disable_Wi-Fi, then the user equipment (UE) 104 may determine 1308 whether eNB_Mode equals Can_Disable_BT. If eNB_Mode equals Can_Disable_BT, then the user equipment (UE) 104 may set 1320 the Non-Volatile (NV) copy of Allow_Disabling_BT = TRUE and determine 1310 whether eNB_Mode equals Cannot_Disable_BT. If eNB_Mode does not equal Can_Disable_BT, then the user equipment (UE) 104 may determine 1310 whether eNB_Mode equals Cannot_Disable_BT. If eNB_Mode equals Cannot_Disable_BT, then the user equipment (UE) 104 may set 1322 the Non-Volatile (NV) copy of Allow_Disabling_BT = FALSE. If eNB_Mode does not equal Cannot_Disable_BT, then the user equipment (UE) 104 may determine 1312 whether eNB_Mode equals Can_Override_User_Request.

If eNB_Mode equals Can_Override_User_Request, then the user equipment (UE) 104 may set 1324 the Non-Volatile (NV) copy of Override_User_Request = TRUE and determine 1314 whether eNB_Mode equals Cannot_Override_User_Request. If eNB_Mode does not equal Can_Override_User_Request, then the user equipment (UE) 104 may determine 1314 whether eNB_Mode equals Cannot_Override_User_Request. If eNB_Mode equals Cannot_Override_User_Request, the user equipment (UE) 104 may set 1326 the Non-Volatile (NV) copy of Override_User_Request = FALSE and the method 1300 may end. If eNB_Mode does not equal Cannot_Override_User_Request, the method may end.

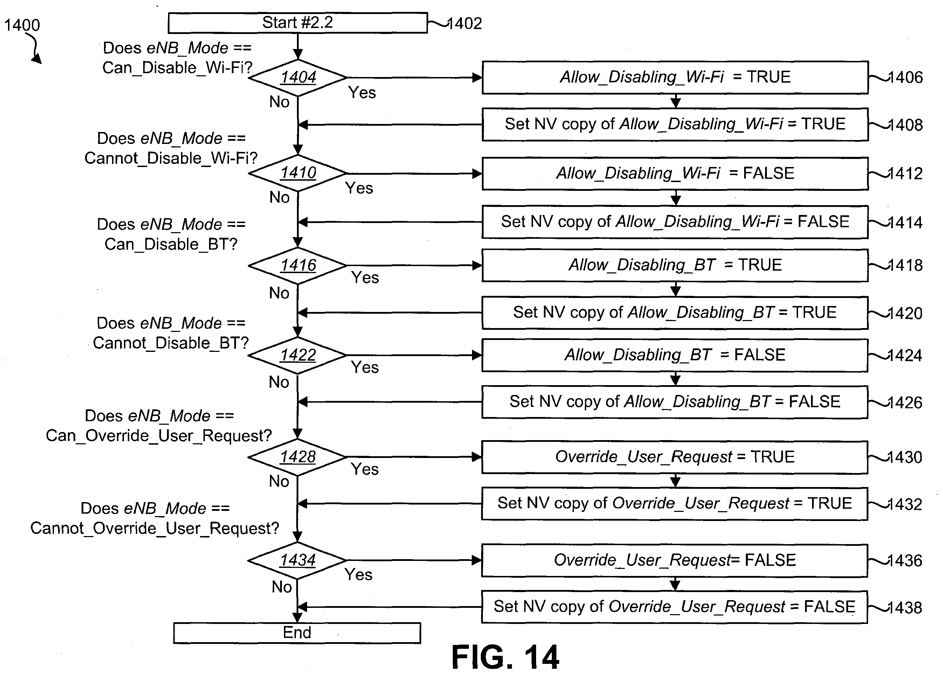

Figure 14 is a flow diagram of yet another method 1400 for parsing commands from an eNB 102 to set and clear Operating Modes. The method 1400 may be performed by a user equipment (UE) 104. The method 1400 may be performed by eNB_Mode_Generator 338 Part#2.2 and called by the ISM Controller 324. The eNB_Mode_Generator 338 may update the non-volatile (NV) RAM copy only if the High Priority Communication (HPC) is active.

The user equipment (UE) 104 may start 1402 #2.2. The user equipment (UE) 104 may determine 1404 whether eNB_Mode equals Can_Disable_Wi-Fi. If eNB_Mode equals Can_Disable_Wi-Fi, the user equipment (UE) 104 may set 1406 Allow_Disabling_Wi-Fi = TRUE and set 1408 the Non-Volatile (NV) copy of Allow_Disabling_Wi-Fi = TRUE. The user equipment (UE) 104 may then determine 1410 whether eNB_Mode equals Cannot_Disable_Wi-Fi. If eNB_Mode does not equal Can_Disable_Wi-Fi, then the user equipment (UE) 104 may determine 1410 whether eNB_Mode equals Cannot_Disable_Wi-Fi.

If eNB_Mode equals Cannot_Disable_Wi-Fi, the user equipment (UE) 104 may set 1412 Allow_Disabling_Wi-Fi = FALSE and the user equipment (UE) 104 may set 1414 the Non-Volatile (NV) copy of Allow_Disabling_Wi-Fi = FALSE. The user equipment (UE) 104 may then determine 1416 whether eNB_Mode equals Can_Disable_BT. If eNB_Mode does not equal Cannot_Disable_Wi-Fi, then the user equipment (UE) 104 may determine 1416 whether eNB_Mode equals Can_Disable_BT.

If eNB_Mode equals Can_Disable_BT, then the user equipment (UE) 104 may set 1418 Allow_Disabling_BT = TRUE and the user equipment (UE) 104 may set 1420 the Non-Volatile (NV) copy of Allow_Disabling_BT = TRUE. The user equipment (UE) 104 may then determine 1422 whether eNB_Mode equals Cannot_Disable_BT. If eNB_Mode does not equal Can_Disable_BT, then the user equipment (UE) 104 may determine 1422 whether eNB_Mode equals Cannot_Disable_BT.

If eNB_Mode equals Cannot_Disable_BT, then the user equipment (UE) 104 may set 1424 Allow_Disabling_BT = FALSE and the user equipment (UE) 104 may set 1426 the Non-Volatile (NV) copy of Allow_Disabling_BT = FALSE. The user equipment (UE) 104 may determine 1428 whether eNB_Mode equals Can_Override_User_Request. If eNB_Mode does not equal Cannot_Disable_BT, then the user equipment (UE) 104 may determine 1428 whether eNB_Mode equals Can_Override_User_Request.

If eNB_Mode equals Can_Override_User_Request, then the user equipment (UE) 104 may set 1430 Override_User_Request = TRUE and set 1432 the Non-Volatile (NV) copy of Override_User_Request = TRUE. The user equipment (UE) 104 may then determine 1434 whether eNB_Mode equals Cannot_Override_User_Request. If eNB_Mode does not equal Can_Override_User_Request, the user equipment (UE) 104 may determine 1434 whether eNB_Mode equals Cannot_Override_User_Request.

If eNB_Mode equals Cannot_Override_User_Request, then the user equipment (UE) 104 may set 1436 Override_User_Request= FALSE and the user equipment (UE) 104 may set 1438 the Non-Volatile (NV) copy of Override_User_Request = FALSE. The method 1400 may then end. If eNB_Mode does not equal Cannot_Override_User_Request, then the method 1400 may end.

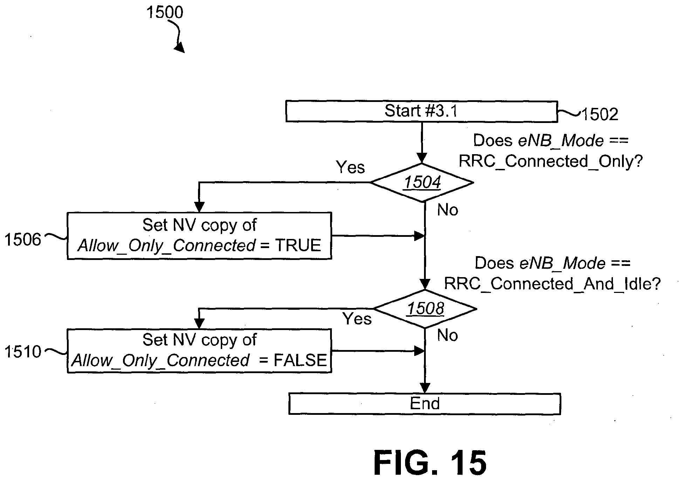

Figure 15 is a flow diagram of another method 1500 for parsing commands from an eNB 102 to set and clear Operating Modes. The method 1500 may be performed by a user equipment (UE) 104. In one configuration, the method 1500 may be performed by eNB_Mode_Generator 338 Part#3.1 and called by the ISM Controller 324. The eNB_Mode_Generator 338 may update the non-volatile (NV) RAM copy only if the High Priority Communication (HPC) is active.

The user equipment (UE) 104 may start 1502 #3.1. The user equipment (UE) 104 may determine 1504 whether eNB_Mode equals RRC_Connected_Only. If eNB_Mode equals RRC_Connected_Only, then the user equipment (UE) 104 may set 1506 the Non-Volatile (NV) copy of Allow_Only_Connected = TRUE. If eNB_Mode does not equal RRC_Connected_Only, the user equipment (UE) 104 may determine 1508 whether eNB_Mode equals RRC_Connected_And_Idle. If eNB_Mode equals RRC_Connected_And_Idle, then the user equipment (UE) 104 may set 1510 the Non-Volatile (NV) copy of Allow_Only_Connected = FALSE and the method 1500 may end. If eNB_Mode does not equal RRC_Connected_And_Idle, then the method 1500 may end.

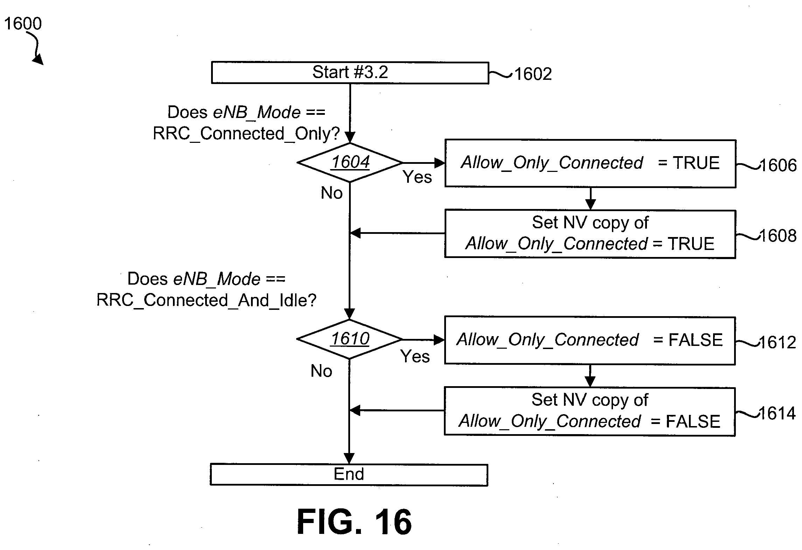

Figure 16 is a flow diagram of another method 1600 for parsing commands from an eNB 102 to set and clear Operating Modes. The method 1600 may be performed by a user equipment (UE) 104. In one configuration, the method 1600 may be performed by eNB_Mode_Generator 338 Part#3.2 and called by the ISM Controller 324. The eNB_Mode_Generator 338 may update the non-volatile (NV) RAM copy only if the High Priority Communication (HPC) is active.

The user equipment (UE) 104 may start 1602 #3.2. The user equipment (UE) 104 may determine 1604 whether eNB_Mode equals RRC_Connected_Only. If eNB_Mode equals RRC_Connected_Only, then the user equipment (UE) 104 may set 1606 Allow_Only_Connected = TRUE and the user equipment (UE) 104 may set 1608 the Non-Volatile (NV) copy of Allow_Only_Connected = TRUE. The user equipment (UE) 104 may then determine 1610 whether eNB_Mode equals RRC_Connected_And_Idle. If eNB_Mode does not equal RRC_Connected_Only, then the user equipment (UE) 104 may determine 1610 whether eNB_Mode equals RRC_Connected_And_Idle.

If eNB_Mode equals RRC_Connected_And_Idle, the user equipment (UE) 104 may set 1612 Allow_Only_Connected = FALSE and the user equipment (UE) 104 may set 1614 the Non-Volatile (NV) copy of Allow_Only_Connected = FALSE. The method 1600 may then end. If eNB_Mode does not equal RRC_Connected_And_Idle, then the method 1600 may end.

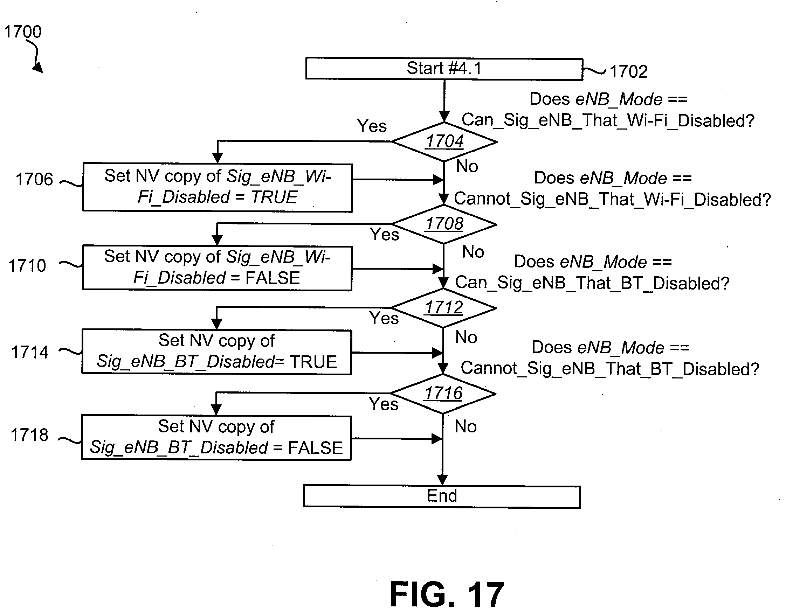

Figure 17 is a flow diagram of yet another method 1700 for parsing commands from an eNB 102 to set and clear Operating Modes. The method 1700 may be performed by a user equipment (UE) 104. In one configuration, the method 1700 may be performed by eNB_Mode_Generator 338 Part#4.1 and called by the ISM Controller 324. The eNB_Mode_Generator 338 may update the non-volatile (NV) RAM copy only if the High Priority Communication (HPC) is active.

The user equipment (UE) 104 may start 1702 #4.1. The user equipment (UE) 104 may determine 1704 whether eNB_Mode equals Can_Sig_eNB_That_Wi-Fi_Disabled. If eNB_Mode equals Can_Sig_eNB_That_Wi-Fi_Disabled, then the user equipment (UE) 104 may set 1706 the Non-Volatile (NV) copy of Sig_eNB_Wi-Fi_Disabled = TRUE and determine 1708 whether eNB_Mode equals Cannot_Sig_eNB_That_Wi-Fi_Disabled. If eNB_Mode does not equal Can_Sig_eNB_That_Wi-Fi_Disabled, the user equipment (UE) 104 may determine 1708 whether eNB_Mode equals Cannot_Sig_eNB_That_Wi-Fi_Disabled. If eNB_Mode equals Cannot_Sig_eNB_That_Wi-Fi_Disabled, the user equipment (UE) 104 may set 1710 the Non-Volatile (NV) copy of Sig_eNB_Wi-Fi_Disabled = FALSE and determine 1712 whether eNB_Mode equals Can_Sig_eNB_That_BT_Disabled. If eNB_Mode does not equal Cannot_Sig_eNB_That_Wi-Fi_Disabled, then the user equipment (UE) 104 may determine 1712 whether eNB_Mode equals Can_Sig_eNB_That_BT_Disabled.

If eNB_Mode equals Can_Sig_eNB_That_BT_Disabled, then the user equipment (UE) 104 may set 1714 the Non-Volatile (NV) copy of Sig_eNB_BT_Disabled = TRUE and determine 1716 whether eNB_Mode equals Cannot_Sig_eNB_That_BT_Disabled. If eNB_Mode does not equal Can_Sig_eNB_That_BT_Disabled, the user equipment (UE) 104 may determine 1716 whether eNB_Mode equals Cannot_Sig_eNB_That_BT_Disabled. If eNB_Mode equals Cannot_Sig_eNB_That_BT_Disabled, then the user equipment (UE) 104 may set 1718 the Non-Volatile (NV) copy of Sig_eNB_BT_Disabled = FALSE and the method 1700 may end. If eNB_Mode equals Cannot_Sig_eNB_That_BT_Disabled, then the method 1700 may end.

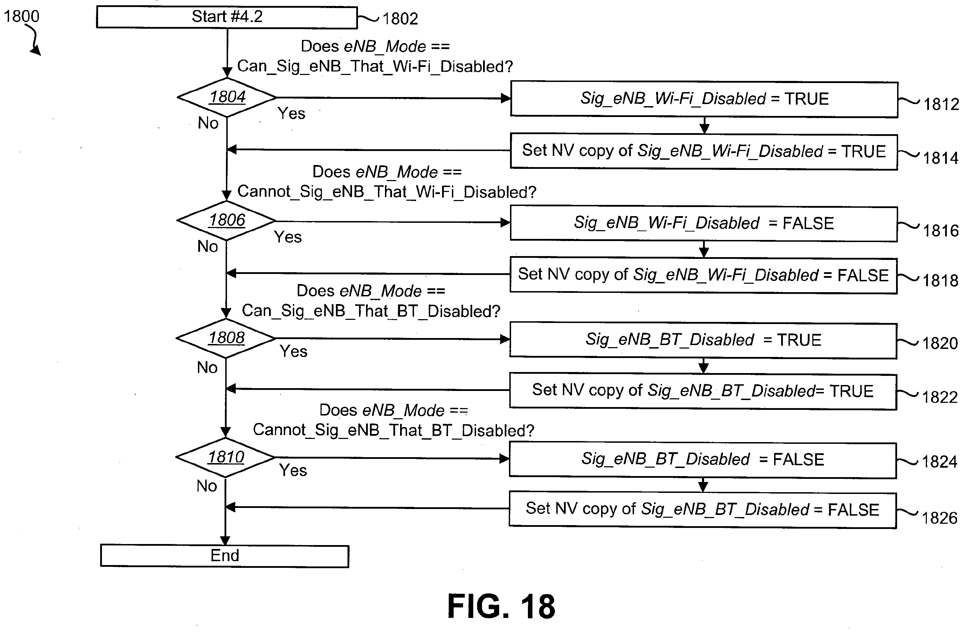

Figure 18 is a flow diagram of another method 1800 for parsing commands from an eNB 102 to set and clear Operating Modes. The method 1800 may be performed by a user equipment (UE) 104. In one configuration, the method 1800 may be performed by eNB_Mode_Generator 338 Part#4.2 and called by the ISM Controller 324. The eNB_Mode_Generator 338 may update the non-volatile (NV) RAM copy only if the High Priority Communication (HPC) is active.

The user equipment (UE) 104 may start 1802 #4.2. The user equipment (UE) 104 may determine 1804 whether eNB_Mode equals Can_Sig_eNB_That_Wi-Fi_Disabled. If eNB_Mode equals Can_Sig_eNB_That_Wi-Fi_Disabled, then the user equipment (UE) 104 may set 1812 Sig_eNB_Wi-Fi_Disabled = TRUE and the user equipment (UE) 104 may set 1814 the Non-Volatile (NV) copy of Sig_eNB_Wi-Fi_Disabled = TRUE. The user equipment (UE) 104 may then determine 1806 whether eNB_Mode equals Cannot_Sig_eNB_That_Wi-Fi_Disabled. If eNB_Mode does not equal Can_Sig_eNB_That_Wi-Fi_Disabled, then the user equipment (UE) 104 may determine 1806 whether eNB_Mode equals Cannot_Sig_eNB_That_Wi-Fi_Disabled.

If eNB_Mode equals Cannot_Sig_eNB_That_Wi-Fi_Disabled, then the user equipment (UE) 104 may set 1816 Sig_eNB_Wi-Fi_Disabled = FALSE and set 1818 the Non-Volatile (NV) copy of Sig_eNB_Wi-Fi_Disabled = FALSE. The user equipment (UE) 104 may then determine 1808 whether eNB_Mode equals Can_Sig_eNB_That_BT_Disabled. If eNB_Mode does not equal Cannot_Sig_eNB_That_Wi-Fi_Disabled, then the user equipment (UE) 104 may determine 1808 whether eNB_Mode equals Can_Sig_eNB_That_BT_Disabled.

If eNB_Mode equals Can_Sig_eNB_That_BT_Disabled, then the user equipment (UE) 104 may set 1820 that Sig_eNB_BT_Disabled = TRUE and set 1822 the Non-Volatile (NV) copy of Sig_eNB_BT_Disabled = TRUE. The user equipment (UE) 104 may then determine 1810 whether eNB_Mode equals Cannot_Sig_eNB_That_BT_Disabled. If eNB_Mode does not equal Can_Sig_eNB_That_BT_Disabled, then the user equipment (UE) 104 may determine 1810 whether eNB_Mode equals Cannot_Sig_eNB_That_BT_Disabled.

If eNB_Mode equals Cannot_Sig_eNB_That_BT_Disabled, then the user equipment (UE) 104 may set 1824 Sig_eNB_BT_Disabled = FALSE and set 1826 the Non-Volatile (NV) copy of Sig_eNB_BT_Disabled = FALSE. The method 1800 may then end. If eNB_Mode does not equal Cannot_Sig_eNB_That_BT_Disabled, then the method 1800 may end.

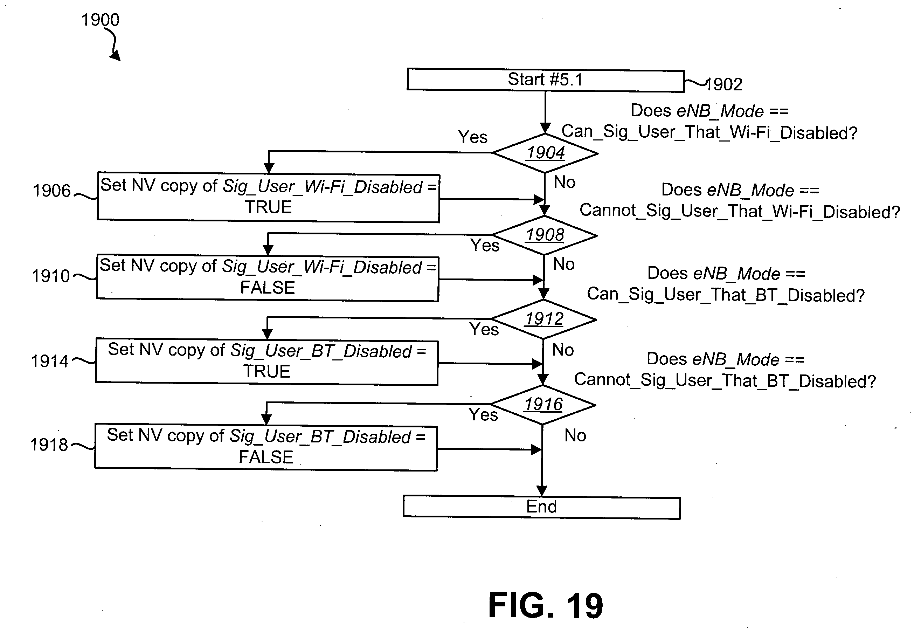

Figure 19 is a flow diagram of yet another method 1900 for parsing commands from an eNB 102 to set and clear Operating Modes. The method 1900 may be performed by a user equipment (UE) 104. In one configuration, the method 1900 may be performed by eNB_Mode_Generator 338 Part#5.1 and called by the ISM Controller 324. The eNB_Mode_Generator 338 may update the non-volatile (NV) RAM copy only if the High Priority Communication (HPC) is active.

The user equipment (UE) 104 may start 1902 #5.1. The user equipment (UE) 104 may determine 1904 whether eNB_Mode equals Can_Sig_User_That_Wi-Fi_Disabled. If eNB_Mode equals Can_Sig_User_That_Wi-Fi_Disabled, then the user equipment (UE) 104 may set 1906 the Non-Volatile (NV) copy of Sig_User_Wi-Fi_Disbled = TRUE and determine 1908 whether eNB_Mode equals Cannot_Sig_User_That_Wi-Fi_Disabled. If eNB_Mode does not equal Can_Sig_User_That_Wi-Fi_Disabled, then the user equipment (UE) 104 may determine 1908 whether eNB_Mode equals Cannot_Sig_User_That_Wi-Fi_Disabled. If eNB_Mode equals Cannot_Sig_User_That_Wi-Fi_Disabled, then the user equipment (UE) 104 may set 1910 the Non-Volatile (NV) copy of Sig_User_Wi-Fi_Disabled = FALSE and determine 1912 whether eNB_Mode equals Can_Sig_User_That_BT_Disabled. If eNB_Mode does not equal Cannot_Sig_User_That_Wi-Fi_Disabled, then the user equipment (UE) 104 may determine 1912 whether eNB_Mode equals Can_Sig_User_That_BT_Disabled.

If eNB_Mode equals Can_Sig_User_That_BT_Disabled, then the user equipment (UE) 104 may set 1914 the Non-Volatile (NV) copy of Sig_User_BT_Disabled = TRUE and determine 1916 whether eNB_Mode equals Cannot_Sig_User_That_BT_Disabled. If eNB_Mode does not equal Can_Sig_User_That_BT_Disabled, then the user equipment (UE) 104 may determine 1916 whether eNB_Mode equals Cannot_Sig_User_That_BT_Disabled. If eNB_Mode equals Cannot_Sig_User_That_BT_Disabled, then the user equipment (UE) 104 may set 1918 the Non-Volatile (NV) copy of Sig_User_BT_Disabled = FALSE and the method 1900 may end. If eNB_Mode does not equal Cannot_Sig_User_That_BT_Disabled, then the method 1900 may end.

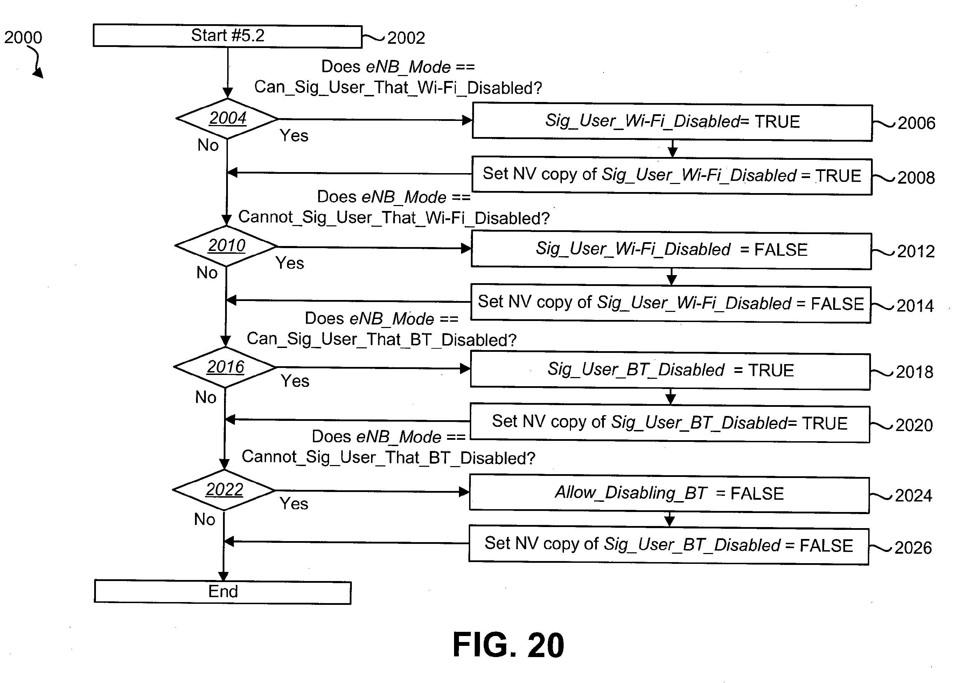

Figure 20 is a flow diagram of another method 2000 for parsing commands from an eNB 102 to set and clear Operating Modes. The method 2000 may be performed by a user equipment (UE) 104. In one configuration, the method 2000 may be performed by eNB_Mode_Generator 338 Part#5.2 and called by the ISM Controller 324. The eNB_Mode_Generator 338 may update the non-volatile (NV) RAM copy only if the High Priority Communication (HPC) is active.

The user equipment (UE) 104 may start 2002 #5.2. The user equipment (UE) 104 may determine 2004 whether eNB_Mode equals Can_Sig_User_That_Wi-Fi_Disabled. If eNB_Mode equals Can_Sig_User_That_Wi-Fi_Disabled, then the user equipment (UE) 104 may set 2006 Sig_User_Wi-Fi_Disabled = TRUE and set 2008 the Non-Volatile (NV) copy of Sig_User_Wi-Fi_Disabled = TRUE. The user equipment (UE) 104 may then determine 2010 whether eNB_Mode equals Cannot_Sig_User_That_Wi-Fi_Disabled. If eNB_Mode does not equal Can_Sig_User_That_Wi-Fi_Disabled, the user equipment (UE) 104 may determine 2010 whether eNB_Mode equals Cannot_Sig_User_That_Wi-Fi_Disabled.

If eNB_Mode equals Cannot_Sig_User_That_Wi-Fi_Disabled, then the user equipment (UE) 104 may set 2012 Sig_User_Wi-Fi_Disabled = FALSE and the user equipment (UE) 104 may set 2014 the Non-Volatile (NV) copy of Sig_User_Wi-Fi_Disabled = FALSE. The user equipment (UE) 104 may then determine 2016 whether eNB_Mode equals Can_Sig_User_That_BT_Disabled. If eNB_Mode does not equal Cannot_Sig_User_That_Wi-Fi_Disabled, then the user equipment (UE) 104 may determine 2016 whether eNB_Mode equals Can_Sig_User_That_BT_Disabled.

If eNB_Mode equals Can_Sig_User_That_BT_Disabled, then the user equipment (UE) 104 may set 2018 Sig_User_BT_Disabed = TRUE and the user equipment (UE) 104 may set 2020 the Non-Volatile (NV) copy of Sig_User_BT_Disabled = TRUE. The user equipment (UE) 104 may then determine 2022 whether eNB_Mode equals Cannot_Sig_User_That_BT_Disabled. If eNB_Mode does not equal Can_Sig_User_That_BT_Disabled, then the user equipment (UE) 104 may determine 2022 whether eNB_Mode equals Cannot_Sig_User_That_BT_Disabled.

If eNB_Mode equals Cannot_Sig_User_That_BT_Disabled, then the user equipment (UE) 104 may set 2024 Allow_Disabling_BT = FALSE and the user equipment (UE) 104 may set 2026 the Non-Volatile (NV) copy of Sig_User_BT_Disabled = FALSE. The method 2000 may then end. If eNB_Mode does not equal Cannot_Sig_User_That_BT_Disabled, then the method 2000 may end.

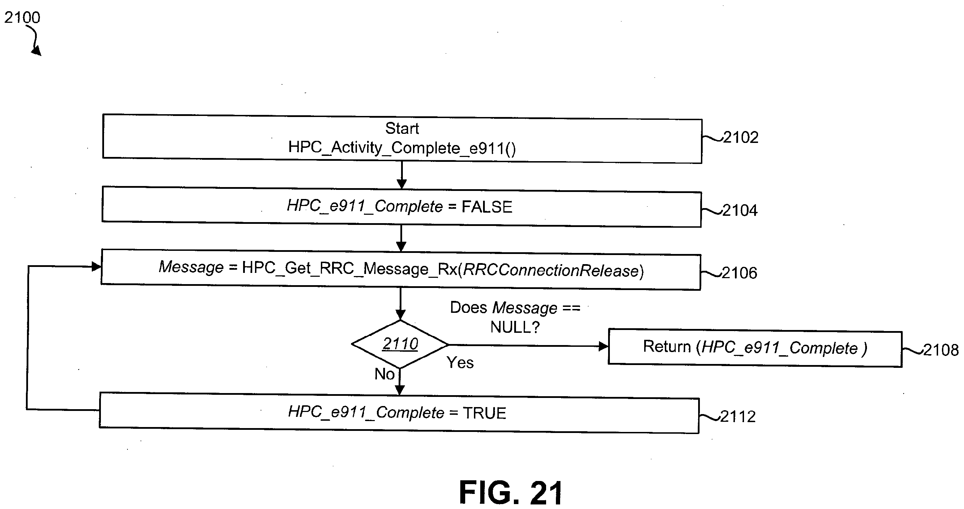

Figure 21 is a flow diagram of a method 2100 for completing an e911 call. The method 2100 may be performed by a user equipment (UE) 104. In one configuration, the method 2100 may be called by HPC_Activity_Completion. The method 2100 may return TRUE when the LTE transceiver receives an RRCConnectionRelease. If Allow_Only_Connected == TRUE, then the reception of an RRCConnectionRelease message by the LTE RRC layer will be detected in the LTE_State_Generator. This may cause the ISM Controller 324 to terminate all activity and reset all state variables to the default setting before this code is ever executed (i.e., this may terminate the ISM_State_Machine 331 and return the active settings of the ISM band configuration to default).

The user equipment (UE) 104 may start 2102 HPC_Activity_Complete_e911(). The user equipment (UE) 104 may then set 2104 HPC_e911_Compete = FALSE and set 2106 Message = HPC_Get_RRC_Message_Rx(RRCConnectionRelease). The user equipment (UE) 104 may determine 2110 whether the Message equals NULL. If the Message equals NULL, then the user equipment (UE) 104 may Return(HPC_e911_Complete) 2108. If the Message does not equal NULL, then the user equipment (UE) 104 may set 2112 HPC_e911_Complete = TRUE and set 2106 Message = HPC_Get_RRC_Message_Rx(RRCConnectionRelease).

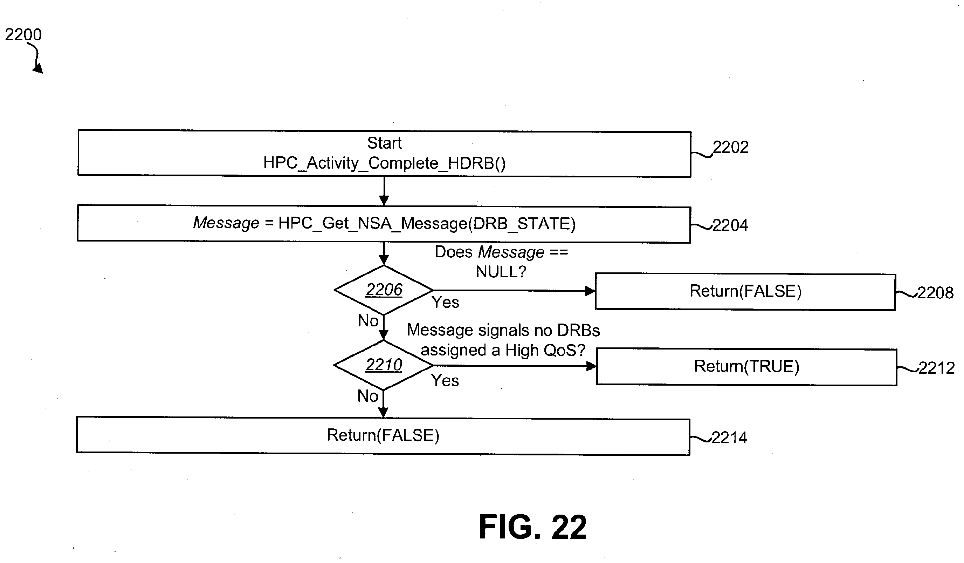

Figure 22 is a flow diagram of a method 2200 for determining whether the Non-Access Stratum (NAS) 444 has signaled that no DRBs are currently assigned to a high QoS. The method 2200 may be performed by a user equipment (UE) 104. The method 2200 may be called by HPC_Activity_Completion().

The user equipment (UE) 104 may start 2202 HPC_Activity_Complete_HDRB(). The user equipment (UE) 104 may set 2204 Message = HPC_Get_NSA_Message(DRB_STATE). The user equipment (UE) 104 may determine 2206 whether the Message equals NULL. If the Message equals NULL, the user equipment (UE) 104 may Return 2208 (FALSE). If the Message does not equal NULL, then the user equipment (UE) 104 may determine 2210 whether the Message signals no DRBs assigned a High QoS. If the Message signals no DRBs assigned a High QoS, then the user equipment (UE) 104 may Return 2212 (TRUE). If the Message does not signal no DRBs assigned a High QoS, then the user equipment (UE) 104 may Return 2214 (FALSE).

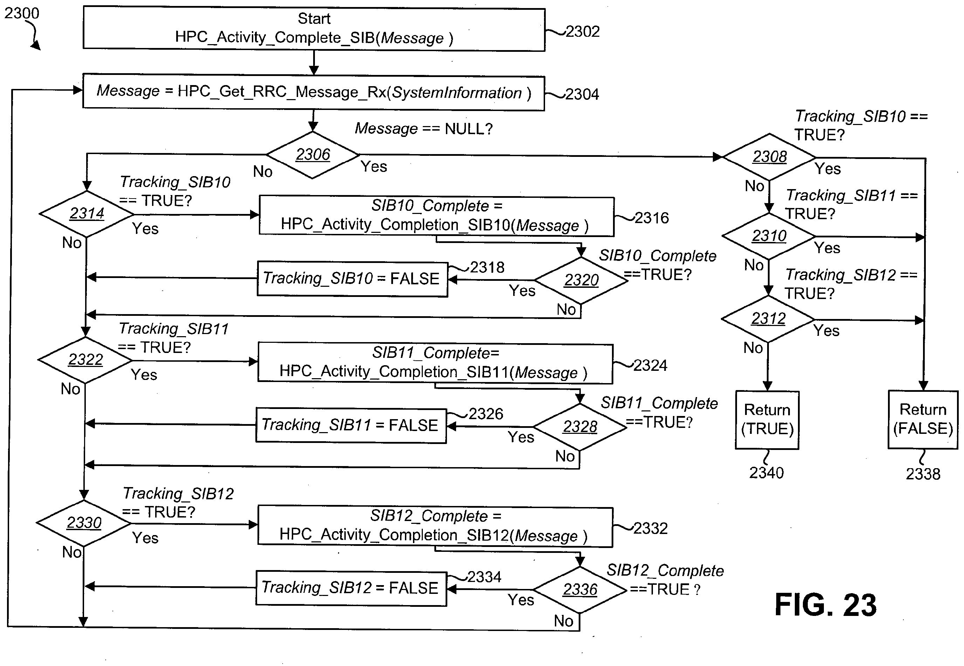

Figure 23 is a flow diagram of a method 2300 for detecting High Priority Communication (HPC) activity. The method 2300 may be performed by a user equipment (UE) 104. The method 2300 may be called by HPC_Activity_Completion().

The user equipment (UE) 104 may start 2302 HPC_Actvity_Complete_SIB(Message). The user equipment (UE) 104 may set 2304 the Message = HPC_Get_RRC_Message_Rx(SystemInformation). The user equipment (UE) 104 may determine 2306 whether Message equals NULL. If Message equals NULL, then the user equipment (UE) 104 may determine 2308 whether Tracking_SIB10 equals TRUE. If Tracking_SIB 10 equals TRUE, then the user equipment (UE) 104 may set Return 2338 (FALSE). If Tracking_SIB10 does not equal TRUE then the user equipment (UE) 104 may determine 2310 whether Tracking_SIB11 equals TRUE. If Tracking_SIB11 equals TRUE, the user equipment (UE) 104 may set Return 2338 (FALSE). If Tracking_SIB11 does not equal TRUE, then the user equipment (UE) 104 may determine 2312 whether Tracking_SIB12 equals TRUE. If Tracking_SIB12 equals TRUE, then the user equipment (UE) 104 may Return 2338 (FALSE). If Tracking_SIB12 does not equal TRUE, then the user equipment (UE) 104 may Return 2340 (TRUE).

If Message does not equal NULL then the user equipment (UE) 104 may determine 2314 whether Tracking_SIB10 equals TRUE. If Tracking_SIB10 equals TRUE, then the user equipment (UE) 104 may set 2316 SIB10_Complete = HPC_Activity_Completion_SIB10(Message). The user equipment (UE) 104 may then determine 2320 whether SIB10_Complete equals TRUE. If SIB10_Complete equals TRUE, the user equipment (UE) 104 may set 2318 Tracking_SIB10 = FALSE and determine 2322 whether Tracking_SIB11 equals TRUE. If SIB10_Complete does not equal TRUE, the user equipment (UE) 104 may determine 2322 whether Tracking_SIB11 equals TRUE.

If Tracking_SIB11 equals TRUE, then the user equipment (UE) 104 may set 2324 SIB11_Complete = HPC_Activity_Completion_SIB11 (Message). The user equipment (UE) 104 may then determine 2328 whether SIB11_Complete equals TRUE. If SIB11_Complete equals TRUE, the user equipment (UE) 104 may set 2326 Tracking_SIB11 = FALSE and determine 2330 whether Tracking_SIB12 equals TRUE. If SIB11_Complete does not equal TRUE, the user equipment (UE) 104 may determine 2330 whether Tracking_SIB12 equals TRUE. If Tracking_SIB11 does not equal TRUE, the user equipment (UE) 104 may determine 2330 whether Tracking_SIB12 equals TRUE.

If Tracking_SIB12 equals TRUE, then the user equipment (UE) 104 may set 2332 SIB12_Complete = HPC_Activity_Completion_SIB12(Message). The user equipment (UE) 104 may then determine 2336 whether SIB12_Complete equals TRUE. If SIB12_Complete equals TRUE, the user equipment (UE) 104 may set 2334 Tracking_SIB12 = FALSE and set 2304 the Message = HPC_Get_RRC_Message_Rx(SystemInformation). If SIB12_Complete does not equal TRUE, the user equipment (UE) 104 may set 2304 the Message = HPC_Get_RRC_Message_Rx(SystemInformation) . If Tracking_SIB12 does not equal TRUE, the user equipment (UE) 104 may set 2304 the Message = HPC_Get_RRC_Message_Rx(SystemInformation).

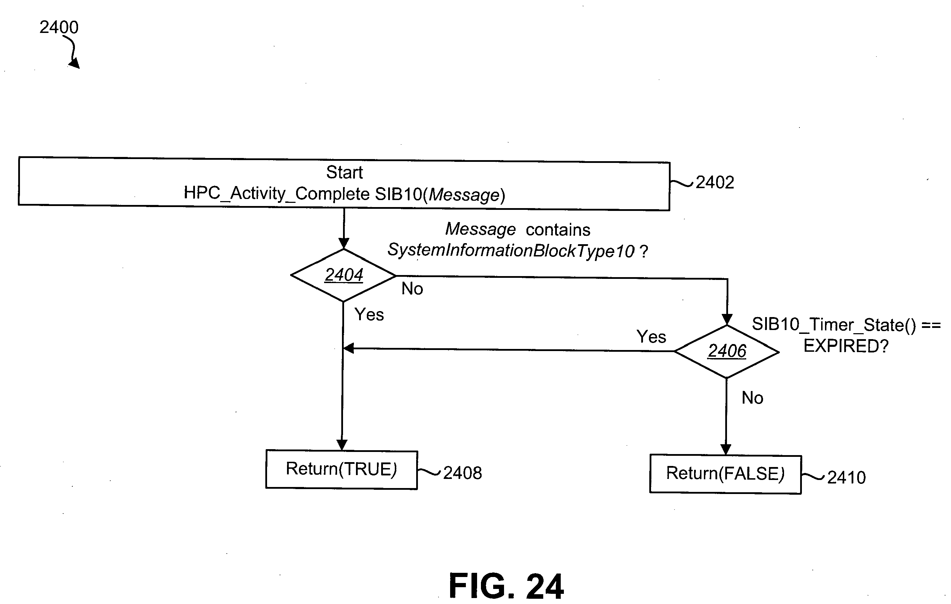

Figure 24 is a flow diagram of a method 2400 for determining whether the SIB10_Timer has expired. The method 2400 may be performed by a user equipment (UE) 104. The method 2400 may be called by HPC_Activity_Complete_SIB().

The user equipment (UE) 104 may start 2402 HPC_Activity_Complete SIB10(Message). The user equipment (UE) 104 may determine 2404 whether Message contains SystemInformationBlockType10. If Message contains SystemInformationBlockType10, then the user equipment (UE) 104 may Return 2408 (TRUE). If Message does not contain SystemInformationBlockType10, the user equipment (UE) 104 may determine 2406 whether SIB10_Timer_State() equals EXPIRED. If SIB10_Timer_State() equals EXPIRED, then the user equipment (UE) 104 may Return 2408 (TRUE). If SIB10_Timer_State() does not equal EXPIRED, then the user equipment (UE) 104 may Return 2410 (FALSE).

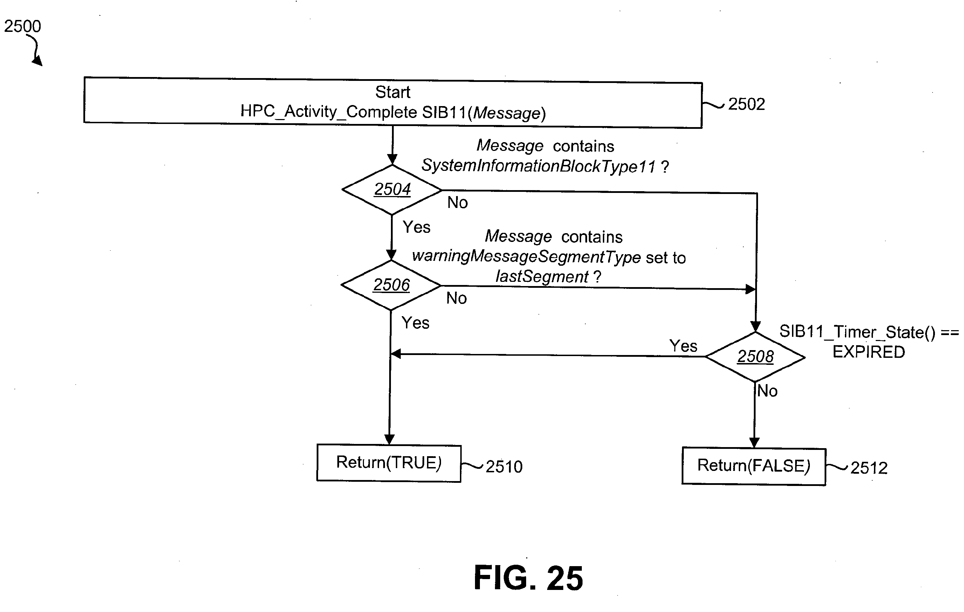

Figure 25 is a flow diagram of a method 2500 for determining whether the SIB11_Timer has expired. The method 2500 may be performed by a user equipment (UE) 104. The method 2500 may be called by HPC_Activity_Complete_SIB().

The user equipment (UE) 104 may start 2502 HPC_Activity_Complete SIB11(Message). The user equipment (UE) 104 may determine 2504 whether Message contains SystemInformationBlockType11. If Message contains SystemInformationBlockType11, the user equipment (UE) 104 may determine 2506 whether Message contains warningMessageSegmentType set to lastSegment. If Message contains warningMessageSegmentType set to lastSegment, then the user equipment (UE) 104 may Return 2510 (TRUE). If Message does not contain warningMessageSegmentType set to lastSegment, then the user equipment (UE) 104 may determine 2508 whether SIB11_Timer_State() equals EXPIRED.

If Message does not contain SystemInformationBlockType11, then the user equipment (UE) 104 may determine 2508 whether SIB11_Timer_State() equals EXPIRED. If SIB11_Timer_State() equals EXPIRED, then the user equipment (UE) 104 may Return 2510 (TRUE). If SIB11_Timer_State() does not equal EXPIRED, then the user equipment (UE) 104 may Return 2512 (FALSE).

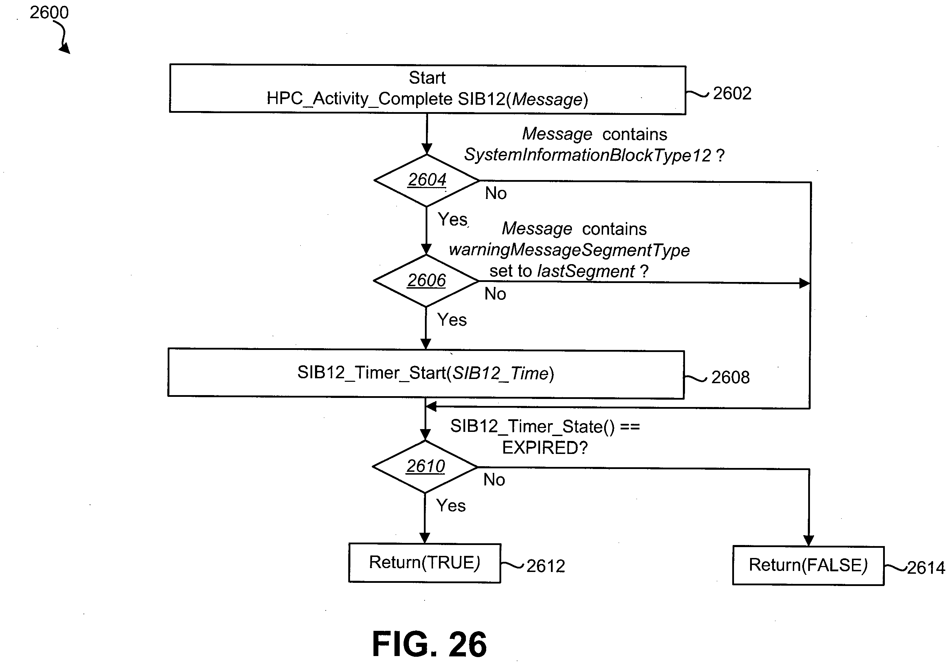

Figure 26 is a flow diagram of a method 2600 for determining whether the SIB12_Timer has expired. The method may be performed by a user equipment (UE) 104. The method may be called by HPC_Activity_Complete_SIB().

The user equipment (UE) 104 may start 2602 HPC_Activity_Complete SIB12(Message). The user equipment (UE) 104 may determine 2604 whether Message contains SystemInformationBlockType12. If Message contains SystemInformationBlockType12, then the user equipment (UE) 104 may determine 2606 whether Message contains warningMessageSegmentType set to lastSegment. If Message contains warningMessageSegmentType set to lastSegment, then the user equipment (UE) 104 may start 2608 HPC_Timer_Start(SIB12_Time). The user equipment (UE) 104 may then determine 2610 whether SIB12_Timer_State() is equal to EXPIRED. If Message does not contain SystemInformationBlockType12, then the user equipment (UE) 104 may determine 2610 whether the SIB12_Timer_State() is equal to EXPIRED. If Message does not contain warningMessageSegmentType set to lastSegment, then the user equipment (UE) 104 may determine 2610 whether the SIB12_Timer_State() is equal to EXPIRED.

If SIB12_Timer_State() equals EXPIRED, then the user equipment (UE) 104 may Return 2612 (TRUE). If SIB12_Timer_State() does not equal EXPIRED, then the user equipment (UE) 104 may Return 2614 (FALSE).

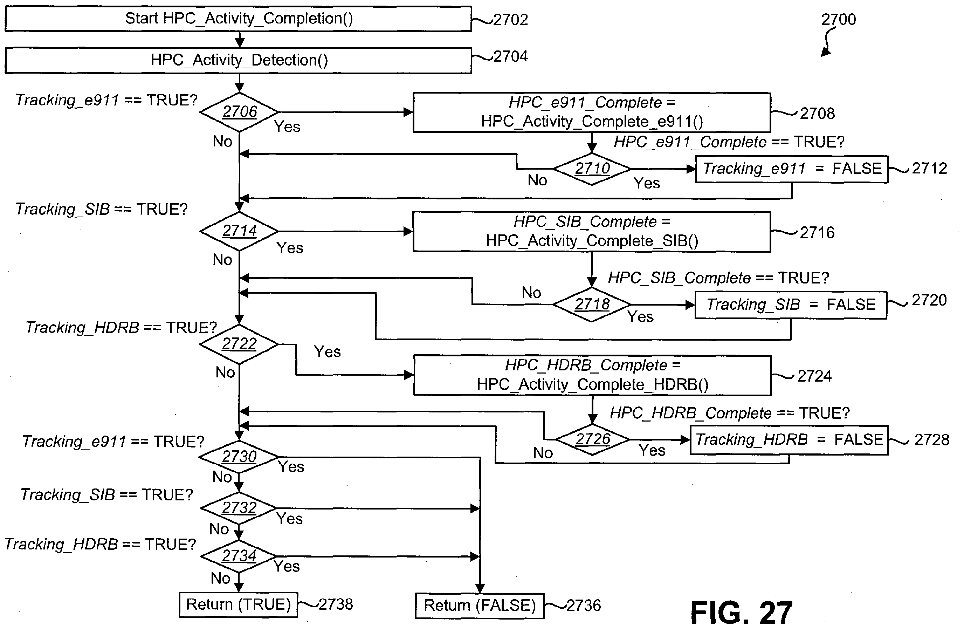

Figure 27 is a flow diagram of a method 2700 for determining when an e911 call has ended. The method 2700 may be performed by a user equipment (UE) 104. The method 2700 may be called by HPC_Event_Generator().

The user equipment (UE) 104 may start 2702 HPC_Activity_Completion(). The user equipment (UE) 104 may set 2704 HPC_Activity_Detection(). The user equipment (UE) 104 may determine 2706 whether Tracking_e911 equals TRUE. If Tracking_e911 equals TRUE, then the user equipment (UE) 104 may set 2708 HPC_e911_Complete = HPC_Activity_Complete_e911(). The user equipment (UE) 104 may then determine 2710 whether HPC_e911_Complete equals TRUE. If HPC_e911_Complete equals TRUE, the user equipment (UE) 104 may set 2712 Tracking_e911 equal to FALSE and determine 2714 whether Tracking_SIB equals TRUE. If HPC_e911_Complete does not equal TRUE, the user equipment (UE) 104 may determine 2714 whether Tracking_SIB equals TRUE. If Tracking_e911 does not equal TRUE, the user equipment (UE) 104 may determine 2714 whether Tracking_SIB equals TRUE.

If Tracking_SIB equals TRUE, then the user equipment (UE) 104 may set 2716 HPC_SIB_Complete = HPC_Activity_Complete_SIB(). The user equipment (UE) 104 may then determine 2718 whether HPC_SIB_Complete equals TRUE. If HPC_SIB_Complete equals TRUE, then the user equipment (UE) 104 may set 2720 Tracking_SIB = FALSE and the user equipment (UE) 104 may determine 2722 whether Tracking_HDRB equals TRUE. If HPC_SIB_Complete does not equal TRUE, then the user equipment (UE) 104 may determine 2722 whether Tracking_HDRB equals TRUE. If Tracking_SIB does not equal TRUE, the user equipment (UE) 104 may determine 2722 whether Tracking_HDRB equals TRUE.

If Tracking_HDRB equals TRUE, then the user equipment (UE) 104 may set 2724 HPC_HDRB_Complete = HPC_Activity_Complete_HDRB(). The user equipment (UE) 104 may then determine 2726 whether HPC_HDRB_Complete equals TRUE. If HPC_HDRB_Complete equals TRUE, then the user equipment (UE) 104 may set 2728 Tracking_HDRB = FALSE and the user equipment (UE) 104 may determine 2730 whether Tracking_e911 equals TRUE. If HPC_HDRB_Complete does not equal TRUE, then the user equipment (UE) 104 may determine 2730 whether Tracking_e911 equals TRUE. If Tracking_HDRB does not equal TRUE, then the user equipment (UE) 104 may determine 2730 whether Tracking_e911 equals TRUE.

If Tracking_e911 equals TRUE, then the user equipment (UE) 104 may Return 2736 (FALSE). If Tracking_e911 does not equal TRUE, the user equipment (UE) 104 may then determine 2732 whether Tracking_SIB equals TRUE. If Tracking_SIB equals TRUE, then the user equipment (UE) 104 may Return 2736 (FALSE). If Tracking_SIB does not equal TRUE, then the user equipment (UE) 104 may determine 2734 whether Tracking_HDRB equals TRUE. If Tracking_HDRB equals TRUE, then the user equipment (UE) 104 may Return 2736 (FALSE). If Tracking_HDRB does not equal TRUE, then the user equipment (UE) 104 may Return 2738 (TRUE).

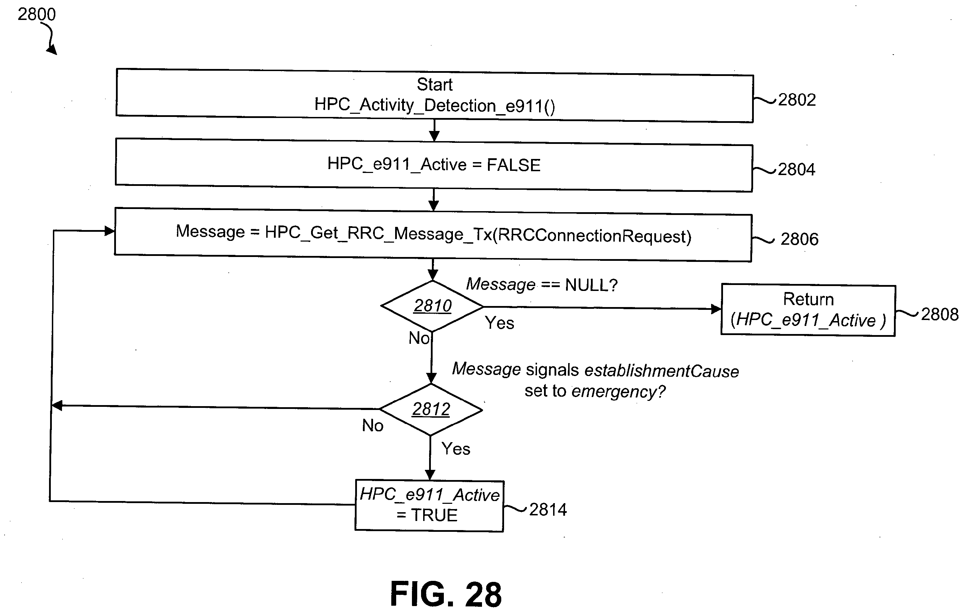

Figure 28 is a flow diagram of a method 2800 for detecting High Priority Communication (HPC) activity when the Long Term Evolution (LTE) transceiver 106 has transmitted an RRCConnectionRequest with establishmentCause set to emergency. The method 2800 may be performed by a user equipment (UE) 104. The method 2800 may be called by HPC_Activity_Detection().

The user equipment (UE) 104 may start 2802 HPC_Activity_Detection_e911() and then set 2804 HPC_e911_Active equal to FALSE. The user equipment (UE) 104 may next set 2806 Message equal to HPC_Get_RRC_Message_Tx(RRCConnectionRequest). The user equipment (UE) 104 may then determine 2810 whether Message equals NULL. If Message equals NULL, then the user equipment (UE) 104 may Return 2808 (HPC_e911_Active). If Message does not equal NULL, the user equipment (UE) 104 may determine 2812 whether Message signals establishmentCause set to emergency. If Message signals establishmentCause set to emergency, then the user equipment (UE) 104 may set 2814 HPC_e911_Active = TRUE and set 2810 Message equal to HPC_Get_RRC_Message_Tx(RRCConnectionRequest). If Message signals establishmentCause is not set to emergency, then the user equipment (UE) 104 may set 2810 Message equal to HPC_Get_RRC_Message_Tx(RRCConnectionRequest).

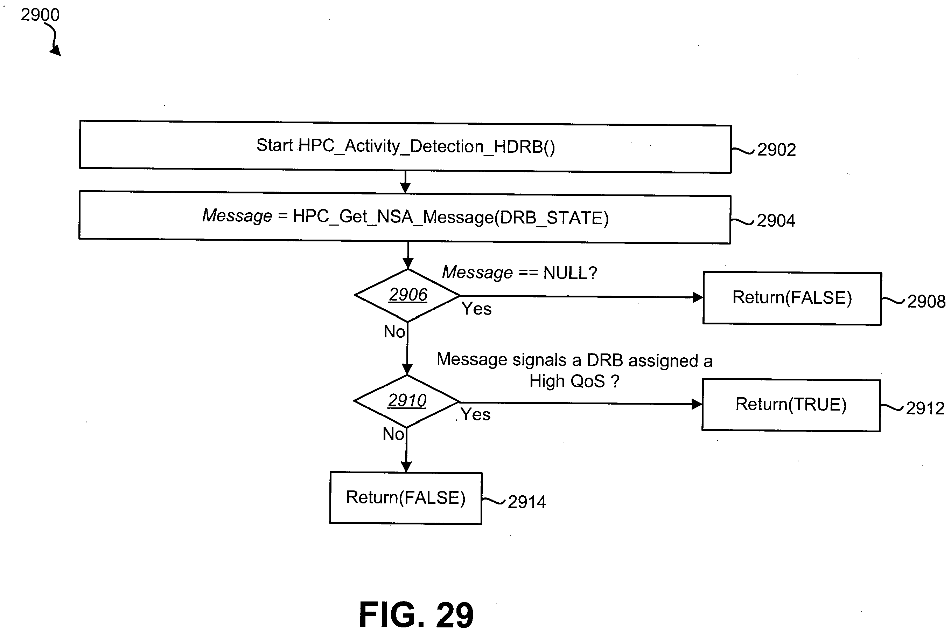

Figure 29 is a flow diagram of a method 2900 for detecting HPC activity when a DRB has been assigned a high QoS. The method 2900 may be performed by a user equipment (UE) 104. The method 2900 may be called by HPC_Activity_Detection().

The user equipment (UE) 104 may start 2902 HPC_Activity_Detection_HDRB(). The user equipment (UE) 104 may set 2904 Message = HPC_Get_NSA_Message(DRB_STATE). The user equipment (UE) 104 may then determine 2906 whether Message equals NULL. If Message equals NULL then the user equipment (UE) 104 may Return 2908 (FALSE). If Message does not equal NULL, then the user equipment (UE) 104 may determine 2910 whether Message signals a DRB assigned a High QoS. If Message signals a DRB assigned a High QoS, then the user equipment (UE) 104 may Return 2912 (TRUE). If Message does not signal a DRB assigned a High QoS, then the user equipment (UE) 104 may Return 2914 (FALSE).

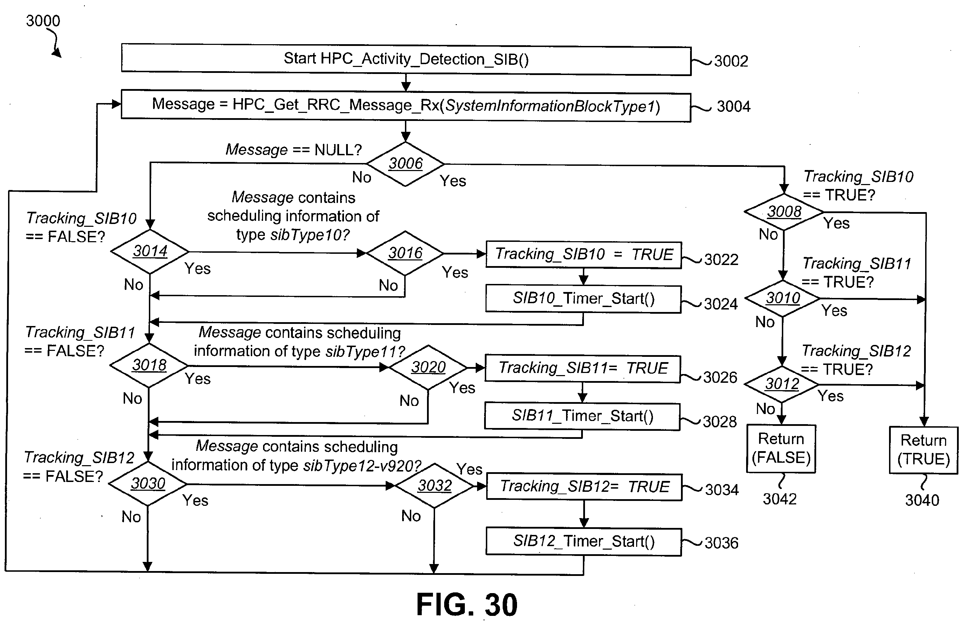

Figure 30 is a flow diagram of a method 3000 for detecting High Priority Communication (HPC) activity. The method 3000 may be performed by a user equipment (UE) 104. The method 3000 may be called by HPC_Activity_Detection().

The user equipment (UE) 104 may start 3002 HPC_Activity_Detection_SIB(). The user equipment (UE) 104 may set 3004 Message equal to HPC_Get_RRC_Message_Rx(SystemlnformationBlockType1). The user equipment (UE) 104 may then determine 3006 whether Message equals NULL. If Message equals NULL, then the user equipment (UE) 104 may determine 3008 whether Tracking_SIB10 equals TRUE. If Tracking_SIB10 equals TRUE then the user equipment (UE) 104 may Return 3040 (TRUE). If Tracking_SIB10 does not equal TRUE, the user equipment (UE) 104 may determine 3010 whether Tracking_SIB11 equals TRUE. If Tracking_SIB11 equals TRUE, the user equipment (UE) 104 may Return 3040 (TRUE). If Tracking_SIB11 does not equal TRUE, the user equipment (UE) 104 may determine 3012 whether Tracking_SIB12 equals TRUE. If Tracking_SIB12 equals TRUE, the user equipment (UE) 104 may Return 3040 (TRUE). If Tracking_SIB12 does not equal TRUE, then the user equipment (UE) 104 may Return 3042 (FALSE).

If Message does not equal NULL, the user equipment (UE) 104 may determine 3014 whether Tracking_SIB10 equals FALSE. If Tracking_SIB10 equals FALSE, the user equipment (UE) 104 determine 3016 whether Message contains scheduling information of type sibType10. If Message contains scheduling information of type sibType10, then the user equipment (UE) 104 may set 3022 Tracking_SIB10 = TRUE and start 3024 SIB 10_Timer_Start(). The user equipment (UE) 104 may then determine 3018 whether Tracking _SIB11 equals FALSE. If Message does not contain scheduling information of type sibType10, the user equipment (UE) 104 may determine 3018 whether Tracking_SIB11 equals FALSE. If Tracking_SIB10 does not equal FALSE, then the user equipment (UE) 104 may determine 3018 whether Tracking_SIB11 equals FALSE.

If Tracking_SIB11 equals FALSE, the user equipment (UE) 104 may determine 3020 whether Message contains scheduling information of type sibType11. If Message contains scheduling information of type sibType11, the user equipment (UE) 104 may set 3026 Tracking_SIB11 = TRUE and start 3028 SIB 11_Timer_Start(). The user equipment (UE) 104 may then determine 3030 whether Tracking_SIB12 equals FALSE. If Message does not contain scheduling information of type sibType11, then the user equipment (UE) 104 may determine 3030 whether Tracking_SIB12 equals FALSE. If TrackingSIB11 does not equal FALSE, then the user equipment (UE) 104 may determine 3030 whether Tracking_SIB12 equals FALSE.

If Tracking_SIB12 equals FALSE, then the user equipment (UE) 104 may determine 3032 whether Message contains scheduling information of type sibType12-v920. If Message contains scheduling information of type sibType12-v920, then the user equipment (UE) 104 may set 3034 Tracking_SIB12 = TRUE and start 3036 SIB12_Timer_Start(). The user equipment (UE) 104 may then set 3004 Message equal to HPC_Get_RRC_Message_Rx(SystemInformationBlockType1). If Message does not contain scheduling information of type sibTYpe12-v920, the user equipment (UE) 104 may set 3004 Message equal to HPC_Get_RRC_Message_Rx(SystemInformationBlockType1). If Tracking_SIB12 does not equal FALSE, then the user equipment (UE) 104 may set 3004 Message equal to HPC_Get_RRC_Message_Rx(SystemInformationBlockType 1).

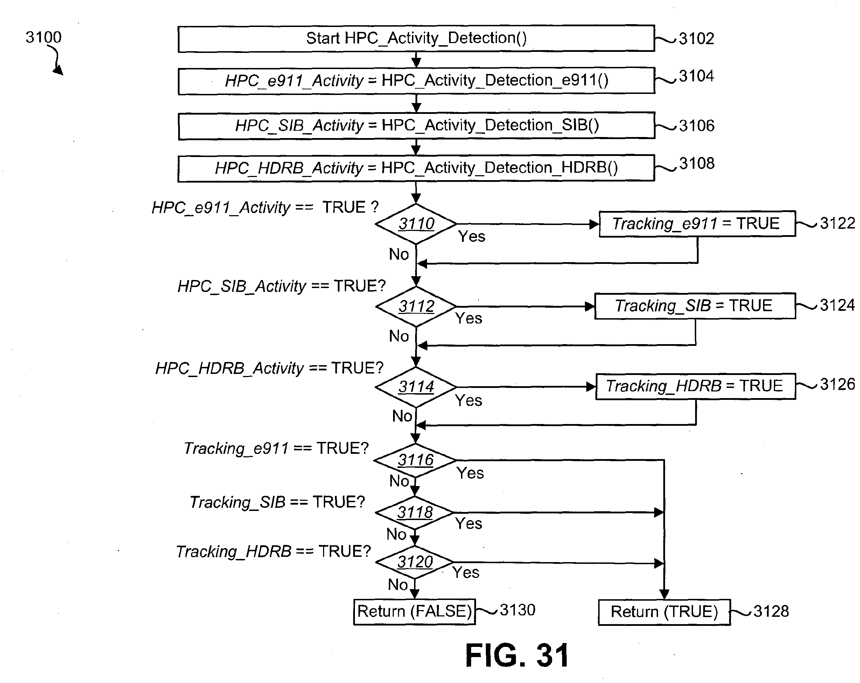

Figure 31 is a flow diagram of another method 3100 for detecting High Priority Communication (HPC) activity. The method 3100 may be performed by a user equipment (UE) 104. The method 3100 may be called by HPC_Event_Generator().

The user equipment (UE) 104 may start 3102 HPC_Activity_Detection(). The user equipment (UE) 104 may set 3104 HPC_e911_Activity = HPC_Activity_Detection_e911(), set 3106 HPC_SIB_Activity = HPC_Activity_Detection_SIB() and set 3108 HPC_HDRB_Activity = HPC_Activity_Detection_HDRB(). The user equipment (UE) 104 may then determine 3110 whether HPC_e911_Activity = TRUE. If HPC_e911_Activity = TRUE, the user equipment (UE) 104 may set 3122 Tracking_e911 = TRUE and then determine 3112 whether HPC_SIB_Activity = TRUE. If HPC_e911_Activity does not equal TRUE, then the user equipment (UE) 104 may then determine 3112 if HPC_SIB_Activity = TRUE.

If HPC_SIB_Activity = TRUE, the user equipment (UE) 104 may set 3124 Tracking_SIB = TRUE and determine 3114 whether HPC_HDRB_Activity = TRUE. If HPC_SIB_Activity does not equal TRUE, the user equipment (UE) 104 may determine 3114 if HPC_HDRB_Activity = TRUE. If HPC_HDRB_Activity = TRUE, then the user equipment (UE) 104 may set 3126 Tracking_HDRB = TRUE and determine 3116 whether Tracking_e911 = TRUE. If HPC_HDRB_Activity does not equal TRUE, the user equipment (UE) 104 may determine 3116 if Tracking_e911 = TRUE.

If Tracking_e911 = TRUE, the user equipment (UE) 104 may Return 3128 (TRUE). If Tracking_e911 does not equal TRUE, the user equipment (UE) 104 may determine 3118 whether Tracking_SIB = TRUE. If Tracking_SIB = TRUE, then the user equipment (UE) 104 may Return 3128 (TRUE). If Tracking_SIB does not equal TRUE, the user equipment (UE) 104 may determine 3120 if Tracking_HDRB = TRUE. If Tracking_HDRB = TRUE, the user equipment (UE) 104 may Return 3128 (TRUE). If Tracking_HDRB does not equal TRUE, the user equipment (UE) 104 may Return 3130 (FALSE).

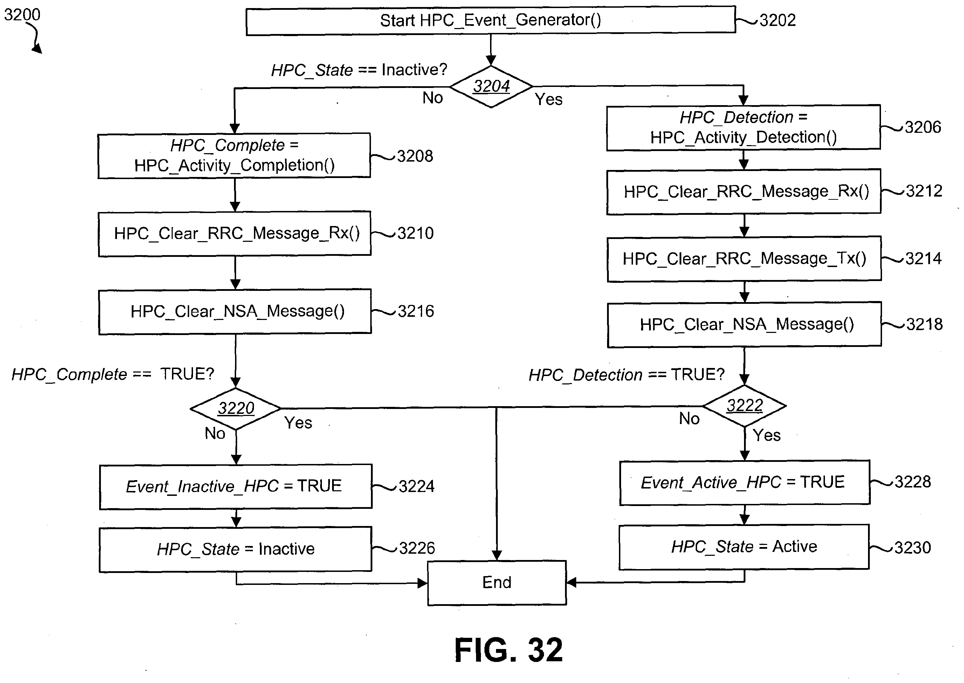

Figure 32 is a flow diagram of a method 3200 for detecting the beginning and end of High Priority Communication (HPC) activity. The method 3200 may be performed by a user equipment (UE) 104. The method 3200 may be called by the ISM Controller 324.

The user equipment (UE) 104 may start 3202 HPC_Event_Generator(). The user equipment (UE) 104 may determine 3204 whether HPC_State = Inactive. If HPC_State = Inactive, the user equipment (UE) 104 may set 3206 HPC_Detection = HPC_Activity_Detection(). The user equipment (UE) 104 may start 3212 HPC_Clear_RRC_Message_Rx(). The user equipment (UE) 104 may also start 3214 HPC_Clear_RRC_Message_Tx(). The user equipment (UE) 104 may then start 3218 HPC_Clear_NSA_Message(). The user equipment (UE) 104 may next determine 3222 whether HPC_Detection = TRUE. If HPC_Detection = TRUE, the user equipment (UE) 104 may set 3228 Event_Active_HPC = TRUE and set 3230 HPC_State = Active. If HPC_Detection does not equal TRUE, the method 3200 may end.

If the user equipment (UE) 104 determines 3204 that the HPC_State does not equal Inactive, the user equipment (UE) 104 may set 3208 HPC_Complete = HPC_Activity_Completion() and start 3210 HPC_Clear_RRC_Message_Rx(). The user equipment (UE) 104 may start 3216 HPC_Clear_NSA_Message(). The user equipment (UE) 104 may then determine 3220 if HPC_Complete = TRUE. If HPC_Complete = TRUE, the method 3200 may ends. If HPC_Complete does not equal TRUE, the user equipment (UE) 104 may set 3224 Event_Inactive_HPC = TRUE. The user equipment (UE) 104 may then set 3226 HPC_State = Inactive. The method 3200 may then end. If HPC_Complete does not equal TRUE, the method 3200 may end.

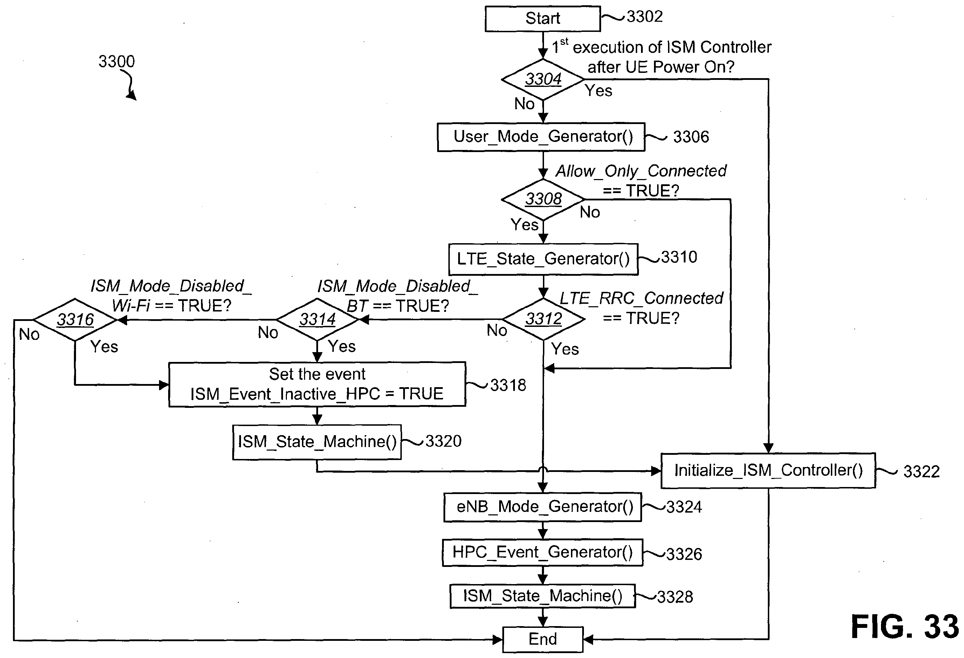

Figure 33 is a flow diagram of a method 3300 for starting the ISM controller 324. The method 3300 may be performed by a user equipment (UE) 104. The method 3300 may be called as an application by the user equipment (UE) 104.

The method may start 3302. The user equipment (UE) 104 may determine 3304 if there was a first execution of the ISM Controller 324 after user equipment (UE) 104 Power On. If there was a first execution of the ISM Controller 324 after user equipment (UE) 104 Power On, the user equipment (UE) 104 may start 3322 Initialize_ISM_Controller() and the method 3300 may end.

If 3304 there was not a first execution of the ISM Controller 324 after user equipment (UE) 104 Power On, the user equipment (UE) 104 may start 3306 User_Mode_Generator() 336. The user equipment (UE) 104 may then determine 3308 if Allow_Only_Connected = TRUE. If Allow_Only_Connected does not equal TRUE, the user equipment (UE) 104 may start 3324 eNB_Mode_Generator() 338. The user equipment (UE) 104 may then start 3326 HPC_Event_Generator() 340 and start 3328 ISM_State_Machine() 331. The method 3300 may then end.

If Allow_Only_Connected = TRUE, the user equipment (UE) 104 may start 3310 LTE_State_Generator() 332. The user equipment (UE) 104 may then determine 3312 if LTE_RRC_Connected = TRUE. If LTE_RRC_Connected = TRUE, the user equipment (UE) 104 may start 3324 eNB_Mode_Generator() 338. The user equipment (UE) 104 may then start 3326 HPC_Event_Generator() and start 3328 ISM_State_Machine(). The method 330 may then end. If LTE_RRC_Connected does not equal TRUE, the user equipment (UE) 104 may determine 3314 whether ISM_Mode_Disabled_BT = TRUE. If ISM_Mode_Disabled_BT = TRUE, the user equipment (UE) 104 may set 3318 the event ISM_Event_Inactive_HPC = TRUE. The user equipment (UE) 104 may then start 3320 ISM_State_Machine() 331 and start 3322 Initialize_ISM_Controller().

If ISM_Mode_Disabled_BT does not equal TRUE, the user equipment (UE) 104 may determine 3316 if ISM_Mode_Disabled_Wi-Fi = TRUE. If ISM_Mode_Disabled_Wi-Fi = TRUE, the user equipment (UE) 104 may set 3318 the event ISM_Event_Inactive_HPC = TRUE. If ISM_Mode_Disabled_Wi-Fi does not equal TRUE, the method 3300 may end.

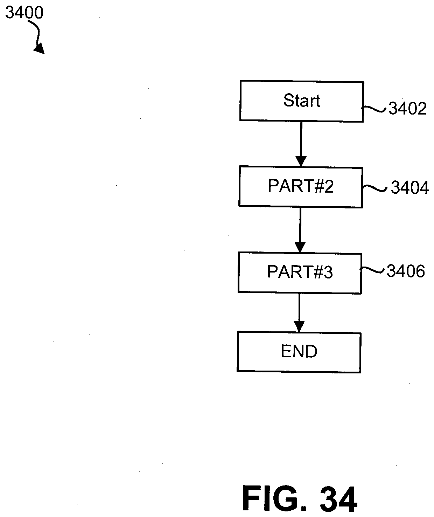

Figure 34 is a flow diagram of a method 3400 for running the ISM_State_Machine 331. The method 3400 may be performed by a user equipment (UE) 104. The method 3400 may be called by the ISM Controller 324. The method 3300 may start 3402. The user equipment (UE) 104 may start 3404 PART#2. The user equipment (UE) 104 may then start 3406 PART#3. The method 3400 may then end.

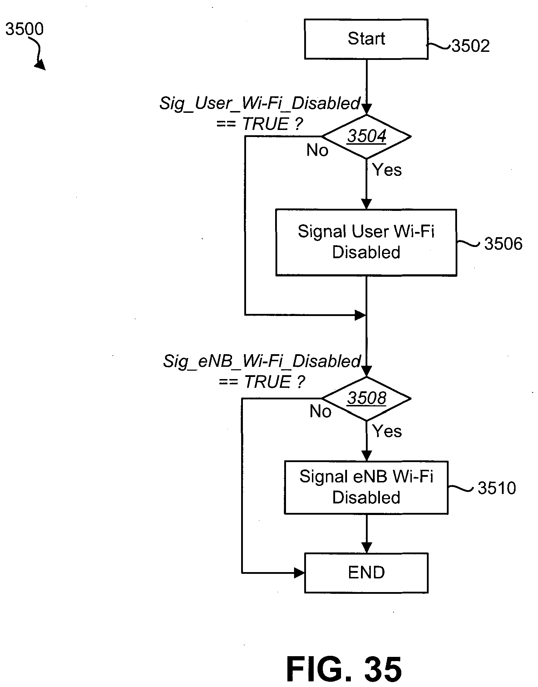

Figure 35 is a flow diagram of a method 3500 for informing a user and an eNB 102 that Wi-Fi is disabled. The method 3500 may be performed by a user equipment (UE) 104. The method 3500 may be called by the ISM_State_Machine() 331 Part#2.

The method 3500 may start 3502. The user equipment (UE) 104 may determine 3504 whether Sig_User_Wi-Fi_Disabled = TRUE. If Sig_User_Wi-Fi_Disabled = TRUE, the user equipment (UE) 104 may signal 3506 to the user that Wi-Fi is disabled. The user equipment (UE) 104 may then determine 3508 if Sig_eNB_Wi-Fi_Disabled = TRUE. If Sig_eNB_Wi-Fi_Disabled = TRUE, the user equipment (UE) 104 may signal 3510 to the eNB 102 that Wi-Fi is disabled. The method 3500 may then end. If Sig_eNB_Wi-Fi_Disabled does not equal TRUE, the method 3500 may end. If Sig_User_Wi-Fi_Disabled does not equal true, the user equipment (UE) 104 may then determine 3508 if Sig_eNB_Wi-Fi_Disabled = TRUE.

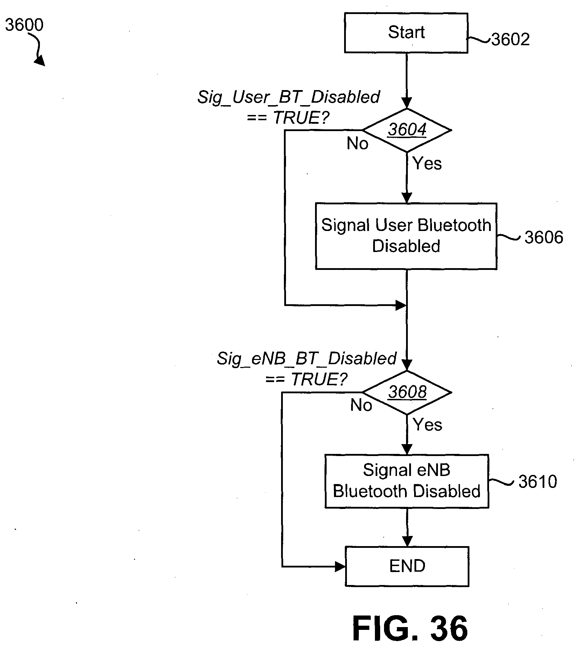

Figure 36 is a flow diagram of a method 3600 for informing a user and an eNB 102 that Bluetooth is disabled. The method 3600 may be performed by a user equipment (UE) 104. The method 3600 may be called by the ISM_State_Machine() 331 Part#2.

The method 3600 may start 3602. The user equipment (UE) 104 may determine 3604 if Sig_User_BT_Disabled = TRUE. If Sig_User_BT_Disabled = TRUE, the user equipment (UE) 104 may signal 3606 to the user that Bluetooth is disabled. The user equipment (UE) 104 may then determine 3608 if Sig_eNB_BT_Disabled = TRUE. If Sig_eNB_BT_Disabled = TRUE, the user equipment (UE) 104 may signal 3610 to the eNB 102 that Bluetooth is disabled. The method 3600 may then end. If 3608 Sig_eNB_BT_Disabled does not equal TRUE, the method 3600 may end. If Sig_User_BT_Disabled does not equal TRUE, the user equipment (UE) 104 may then determine 3608 if Sig_eNB_BT_Disabled = TRUE.

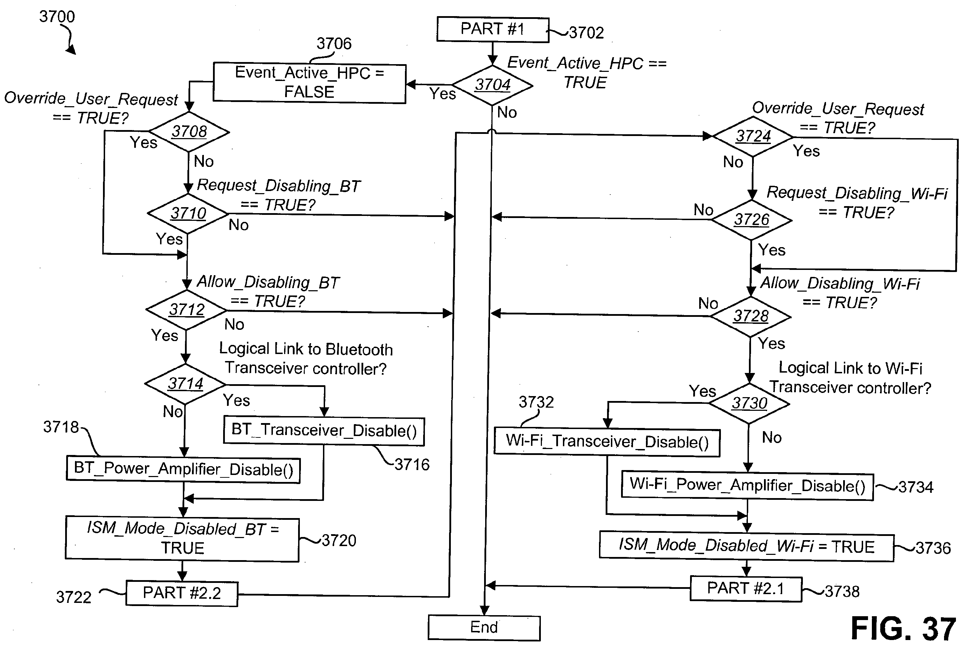

Figure 37 is a flow diagram of a method 3700 for processing an event indicating that High Priority Communication (HPC) activity has been detected. The method 3700 may be performed by a user equipment (UE) 104. The method 3700 may be performed on the ISM_State_Machine 331 and called by the ISM Controller 324.

PART # 1 may be started 3702. The user equipment (UE) 104 may determine 3704 if Event_Active_HPC == TRUE. If Event_Active_HPC does not equal TRUE, the method 3700 may end. If Event_Active_HPC == TRUE, the user equipment (UE) 104 may set 3706 Event_Active_HPC = FALSE. The user equipment (UE) 104 may then determine 3708 if Override_User_Request == TRUE. If Override_User_Request does not equal TRUE, the user equipment (UE) 104 may determine 3710 if Request_Disabling_BT == TRUE. If Request_Disabling_BT does not equal TRUE, the user equipment (UE) 104 may determine 3724 whether Override_User_Request == TRUE. If Request_Disabling_BT == TRUE, the user equipment (UE) 104 may determine 3712 if Allow_Disabling_BT == TRUE. If Override_User_Request == TRUE, the user equipment (UE) 104 may determine 3712 if Allow_Disabling_BT == TRUE.

If Allow_Disabling_BT does not equal TRUE, the user equipment (UE) 104 may determine 3724 if Override_User_Request == TRUE. If 3724 Override_User_Request does not equal TRUE, the user equipment (UE) 104 may determine 3726 whether Request_Disabling_Wi-Fi == TRUE. If Request_Disabling_Wi-Fi does not equal TRUE, the method 3700 may end. If 3726 Request_Disabling_Wi-Fi == TRUE, the user equipment (UE) 104 may determine 3728 if Allow_Disabling_Wi-Fi == TRUE. If Override_User_Request == TRUE, the user equipment (UE) 104 may determine 3728 whether Allow_disabling_Wi-Fi == TRUE.

If Allow_Disabling_Wi-Fi does not equal TRUE, the method 3700 may end. If Allow_Disabling_Wi-Fi == TRUE, the user equipment (UE) 104 may determine 3730 if there is a logical link to the Wi-Fi transceiver 108 controller. If there is a logical link to Wi-Fi transceiver 108 controller, the user equipment (UE) 104 may start 3732 Wi-Fi_Transceiver_Disable(). The user equipment (UE) 104 may then set 3736 ISM_Mode_Disabled_Wi-Fi = TRUE and execute 3738 Part #2.1. If there is not a logical link to the Wi-Fi transceiver 108 controller, the user equipment (UE) 104 may start 3734 Wi-Fi_Power_Amplifier_Disable() and set 3736 ISM_Mode_Disabled_Wi-Fi = TRUE.

If Allow_Disabling_BT equals TRUE, the user equipment (UE) 104 may determine 3714 if there is a logical link to the Bluetooth transceiver 110 controller. If there is a logical link to the Bluetooth transceiver 110 controller, the user equipment (UE) 104 may start 3716 BT_Transceiver_Disable(). The user equipment (UE) 104 may set 3720 ISM_Mode_Disabled_BT = TRUE. The user equipment (UE) 104 may then execute 3722 PART #2.2 and determine 3724 if Override_User_Request == TRUE. If there is not a logical link to the Bluetooth transceiver 110 controller, the user equipment (UE) 104 may start 3718 BT_Power_Amplifier_Disable(). The user equipment (UE) 104 may then set 3720 ISM_Mode_Disabled_BT = TRUE.

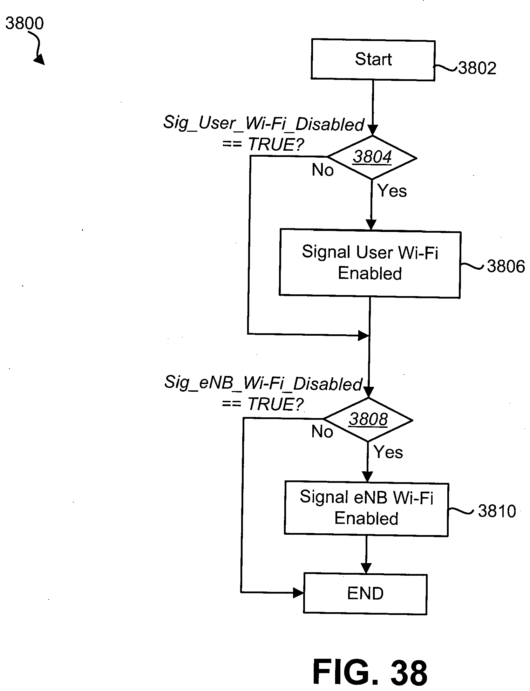

Figure 38 is a flow diagram of a method 3800 for informing a user and an eNB 102 that Wi-Fi is enabled when it was previously disabled. The method 3800 may be performed by a user equipment (UE) 104. The method 3800 may be Part#3.1 of the ISM_State_Machine 331 and called by the ISM Controller 324.

The method 3800 may start 3802. The user equipment (UE) 104 may determine 3604 if Sig_User_Wi-Fi_Disabled == TRUE. If Sig_User_Wi-Fi_Disabled == TRUE, the user equipment (UE) 104 may signal 3806 to the user that Wi-Fi is enabled. The user equipment (UE) 104 may then determine 3808 if Sig_eNB_Wi-Fi_Disabled == TRUE. If Sig_eNB_Wi-Fi_Disabled == TRUE, the user equipment (UE) 104 may signal 3810 to the eNB 102 that Wi-Fi is enabled. The method 3800 may then end. If Sig_eNB_Wi-Fi_Disabled does not equal TRUE, the method 3800 may end. If Sig_User_Wi-Fi_Disabled does not equal TRUE, the user equipment (UE) 104 may then determine 3808 if Sig_eNB_Wi-Fi_Disabled == TRUE.

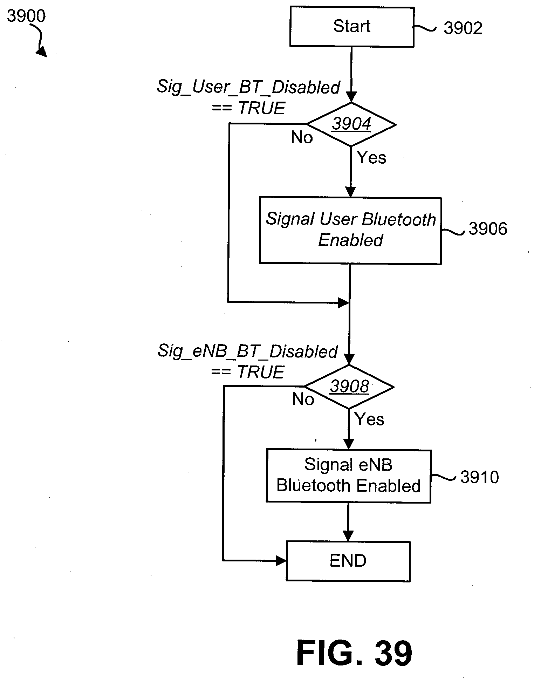

Figure 39 is a flow diagram of a method 3900 for informing a user and an eNB 102 that Bluetooth is enabled when it was previously disabled. The method 3900 may be performed by a user equipment (UE) 104. The method 3900 may be Part#3.2 of the ISM_State_Machine 331 and called by the ISM Controller 324.

The method 3900 may start 3902. The user equipment (UE) 104 may determine 3904 if Sig_User_BT_Disabled == TRUE. If Sig_User_BT_Disabled == TRUE, the user equipment (UE) 104 may signal 3906 to the user that Bluetooth is enabled. The user equipment (UE) 104 may then determine 3908 if Sig_eNB_BT_Disabled == TRUE. If Sig_eNB_BT_Disabled == TRUE, the user equipment (UE) 104 may signal 3910 to the eNB 102 that Bluetooth is enabled. The method 3900 may then end. If 3908 Sig_eNB_Wi-Fi_Disabled does not equal TRUE, the method 3900 may end. If 3904 Sig_User_BT_Disabled does not equal TRUE, the user equipment (UE) 104 may then determine 3908 if Sig_eNB_BT_Disabled == TRUE.

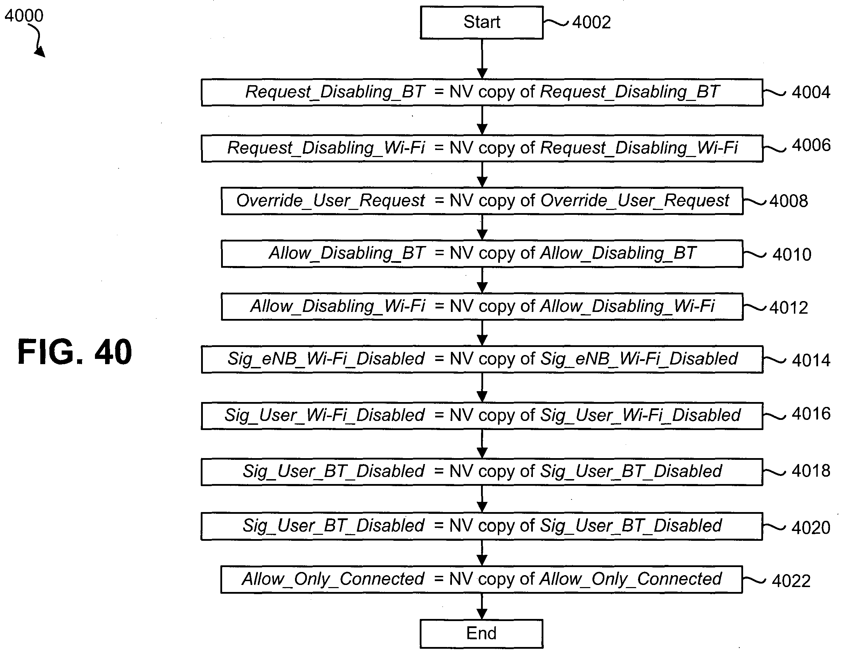

Figure 40 is a flow diagram of a method 4000 for updating the working copies of Operating Parameters and Operating Modes with those values stored in the non-volatile (NV) memory that may have changed during High Priority Communication (HPC) activity. The method 4000 may be performed by a user equipment (UE) 104. The method 4000 may be part#3.3 of the ISM_State_Machine 331 and may be called by the ISM Controller 324.

The method 4000 may start 4002. The user equipment (UE) 104 may set 4004 Request_Disabling_BT = Non-Volatile (NV) copy of Request_Disabling_BT. The user equipment (UE) 104 may also set 4006 Request_Disabling_Wi-Fi = Non-Volatile (NV) copy of Request_Disabling_Wi-Fi. The user equipment (UE) 104 may set 4008 Override_User_Request = Non-Volatile (NV) copy of Override_User_Request. The user equipment (UE) 104 may set 4010 Allow_Disabling_BT = Non-Volatile (NV) copy of Allow_Disabling_BT. The user equipment (UE) 104 may set 4012 Allow_Disabling_Wi-Fi = Non-Volatile (NV) copy of Allow_Disabling_Wi-Fi. The user equipment (UE) 104 may also set 4014 Sig_eNB_Wi-Fi_Disabled = Non-Volatile (NV) copy of Sig_eNB_Wi-Fi_Disabled. The user equipment (UE) 104 may further set 4016 Sig_User_Wi-Fi_Disabled = Non-Volatile (NV) copy of Sig_User_Wi-Fi_Disabled. The user equipment (UE) 104 may also set 4018 Sig_User_BT_Disabled = Non-Volatile (NV) copy of Sig_User_BT_Disabled. The user equipment (UE) 104 may set 4020 Sig_User_BT_Disabled = Non-Volatile (NV) copy of Sig_User_BT_Disabled. The user equipment (UE) 104 may further set 4022 Allow_Only_Connected = Non-Volatile (NV) copy of Allow_Only_Connected. The method 4000 may then end.

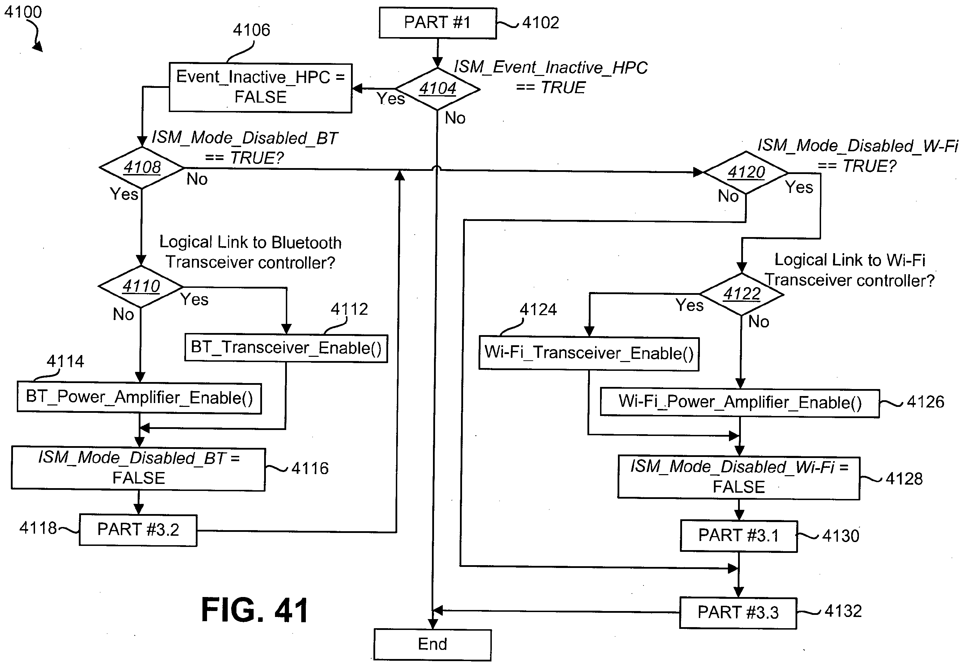

Figure 41 is a flow diagram of a method 4100 for processing an event indicating that all active High Priority Communications (HPCs) have terminated. The method 4100 may be performed by a user equipment (UE) 104. The method 4100 may be part of the ISM_State_Machine 331 and may be called by the ISM Controller 324.

PART # 1 may be executed 4102. The user equipment (UE) 104 may determine 4104 whether ISM_Event_Inactive_HPC == TRUE. If ISM_Event_Inactive_HPC does not equal TRUE, the method 4100 ends. If ISM_Event_Inactive_HPC == TRUE, the user equipment (UE) 104 may set 4106 Event_Inactive_HPC = FALSE. The user equipment (UE) 104 may then determine 4108 if ISM_Mode_Disabled_BT == TRUE. If ISM_Mode_Disabled_BT == TRUE, the user equipment (UE) 104 may determine 4110 if there is a logical link to the Bluetooth transceiver 110 controller. If there is a logical link to the Bluetooth transceiver 110 controller, the user equipment (UE) 104 may start 4112 BT_Transceiver_Enable() and set 4116 ISM_Mode_Disabled_BT = FALSE. If there is not a logical link to the Bluetooth transceiver 110 controller, the user equipment (UE) 104 may start 4114 BT_Power_Amplifier_Enable(). The user equipment (UE) 104 may then start 4116 ISM_Mode_Disabled_BT = FALSE. The user equipment (UE) 104 may then execute 4118 PART #3.2. The user equipment (UE) 104 may next determine 4120 whether ISM_Mode_Disabled_Wi-Fi == TRUE.

If 4108 ISM_Mode_Disabled_BT does not equal TRUE, the user equipment (UE) 104 may determine 4120 if ISM_Mode_Disabled_W-Fi == TRUE. If ISM_Mode_Disabled_W-Fi does not equal TRUE, Part #3.3 may be executed 4132. If ISM_Mode_Disabled_W-Fi == TRUE, the user equipment (UE) 104 may determine 4122 if there is a logical link to a Wi-Fi transceiver 108 controller. If there is not a logical link to a Wi-Fi transceiver 108 controller, the user equipment (UE) 104 may start 4126 Wi-Fi_Power_Amplifier_Enable() and set 4128 ISM_Mode_Disabled_Wi-Fi = FALSE. If there is a logical link to the Wi-Fi transceiver 108 controller, the user equipment (UE) 104 may start 4124 Wi-Fi_Transcevier_Enable() and set ISM_Mode_Disabled_Wi-Fi = FALSE. The user equipment (UE) 104 may then execute 4130 PART #3.1 and execute 4132 PART #3.3. The method 4100 may then end.

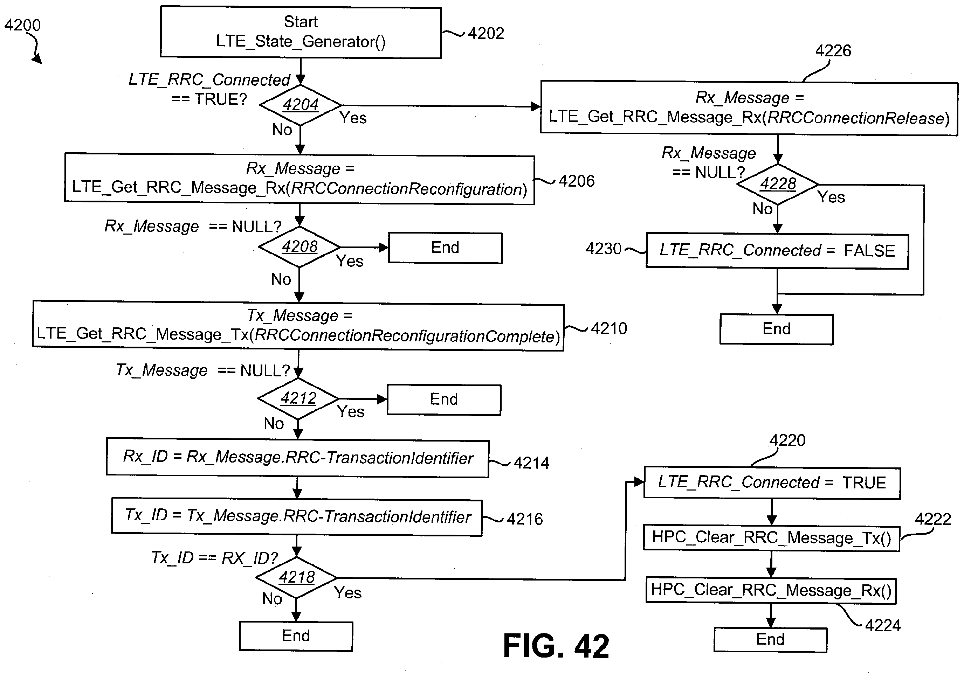

Figure 42 is a flow diagram of a method 4200 for adjusting the states of the LTE_State_Generator 332. The method may be performed by a user equipment (UE) 104. The method may be part of the LTE_State_Generator 332 and may be called by the ISM Controller 324.

The user equipment (UE) 104 may start 4202 the LTE_State_Generator() 332. The user equipment (UE) 104 may determine 4204 if LTE_RRC_Connected == TRUE. If LTE_RRC_Connected == TRUE, the user equipment (UE) 104 may set 4226 Rx_Message = LTE_Get_RRC_Message_Rx(RRCConnectionRelease). The user equipment (UE) 104 may then determine 4228 if Rx_Message == NULL. If Rx_Message == NULL, the method 4200 may end. If Message does not equal NULL, the user equipment (UE) 104 may set 4230 LTE_RRC_Connected = FALSE and the method 4200 may end.

If LTE_RRC_Connected does not equal TRUE, the user equipment (UE) 104 may set 4206 Rx_Message = LTE_Get_RRC_Message_Rx(RRC Connection Reconfiguration). The user equipment (UE) 104 may then determine 4208 if Rx_Message == NULL. If Rx_Message == NULL, the method 4200 may end. If Rx_Message is not equal to NULL, the user equipment (UE) 104 may set 4210 Tx_Message = LTE_Get_RRC_Message_Tx(RRCConnectionReconfigurationCom plete). The user equipment (UE) 104 may determine 4212 if Tx_Message == NULL. If Tx_Message == NULL, the method 4200 may end.

If Tx_Message is not equal to NULL, the user equipment (UE) 104 may set 4214 Rx_ID = Rx_Message.RRC-TransactionIdentifier. The user equipment (UE) 104 may set 4216 Tx_ID = Tx_Message.RRC-TransactionIdentifier. The user equipment (UE) 104 may determine 4218 whether Tx_ID == RX_ID. If Tx_ID is not equal to RX_ID, the method 4200 may end. If Tx_ID == RX_ID, the user equipment (UE) 104 may set 4220 LTE_RRC_Connected = TRUE. The user equipment (UE) 104 may also start 4222 HPC_Clear_RRC_Message_Tx(). The user equipment (UE) 104 may further start 4224 HPC_Clear_RRC_Message_Rx(). The method 4200 may then end.

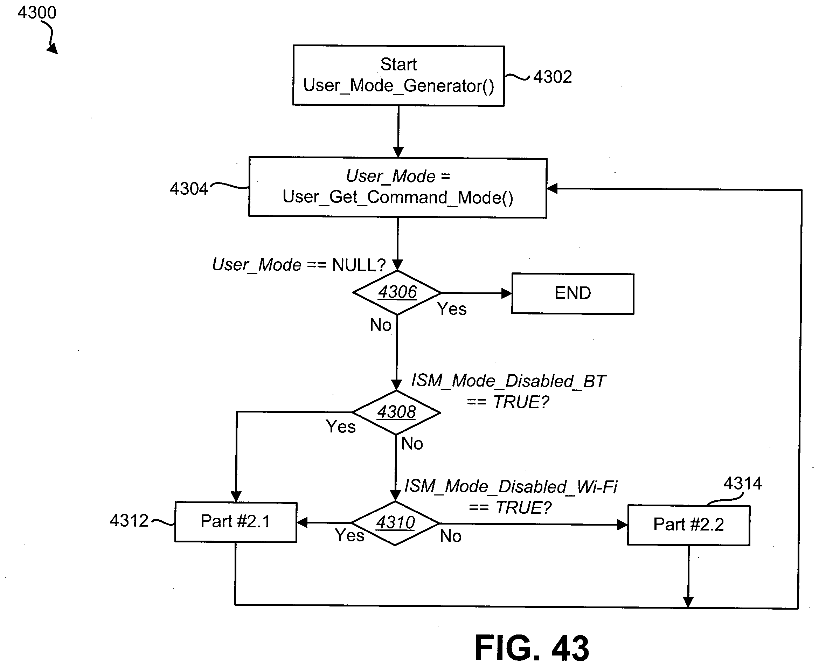

Figure 43 is a flow diagram of a method 4300 for receiving commands from a user. The method 4300 may be performed by a user equipment (UE) 104. The method 4300 may be part of the User_Mode_Generator 336 and may be called by the ISM Controller 324.

The user equipment (UE) 104 may start 4302 User_Mode_Generator() 336. The user equipment (UE) 104 may set 4304 User_Mode = User_Get_Command_Mode(). The user equipment (UE) 104 may determine 4306 whether User_Mode == NULL. If User_Mode == NULL, the method 4300 ends. If User_Mode is not equal to NULL, the user equipment (UE) 104 may determine 4308 whether ISM_Mode_Disabled_BT == TRUE. If ISM_Mode_Disabled_BT is not equal to TRUE, the user equipment (UE) 104 may determine 4310 if ISM_Mode_Disabled_Wi-Fi == TRUE. If ISM_Mode_Disabled_Wi-Fi is not equal to TRUE, the user equipment (UE) 104 may execute 4314 Part #2.2 and set 4304 User_Mode = User_Get_Command_Mode(). If 4310 ISM_Mode_Disabled_Wi-Fi == TRUE, the user equipment (UE) 104 may execute 4312 Part #2.1 and set 4304 User_Mode = User_Get_Command_Mode() and continue as previously described. If 4308 ISM_Mode_Disabled_BT == TRUE, the user equipment (UE) 104 may execute 4312 Part #2.1 and set 4304 User_Mode = User_Get_Command_Mode() and continue as previously described.

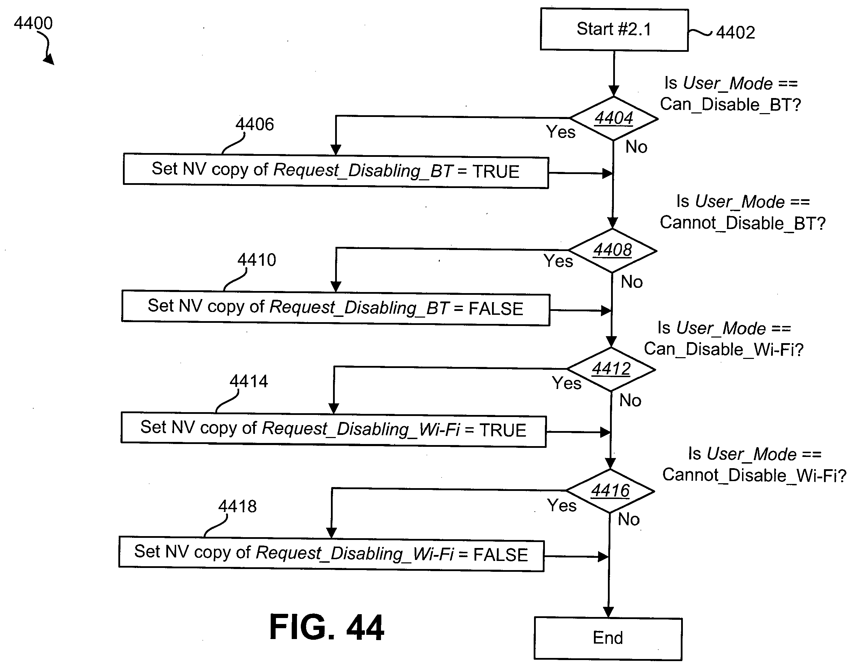

Figure 44 is a flow diagram of a method 4400 for parsing commands from a user relating to Wi-Fi. The method 4400 may be performed by a user equipment (UE) 104. The method 4400 may be part of the User_Mode_Generator 336 and may be called by the ISM controller 324.

The user equipment (UE) 104 may start 4402 Start #2.1. The user equipment (UE) 104 may determine 4404 whether User_Mode == Can_Disable_BT. If User_Mode == Can_Disable_BT, the user equipment (UE) 104 may set 4406 Non-Volatile (NV) copy of Request_Disabling_BT = TRUE and the user equipment (UE) 104 may determine 4408 if User_Mode == Cannot_Disable_BT. If User_Mode does not equal Can_Disable_BT, the user equipment (UE) 104 may determine 4408 if User_Mode == Cannot_Disable_BT.

If User_Mode == Cannot_Disable_BT, the user equipment (UE) 104 may set 4410 Non-Volatile (NV) copy of Request_Disabling_BT = FALSE. The user equipment (UE) 104 may then determine 4412 whether User_Mode == Can_Disable_Wi-Fi. If User_Mode does not equal Cannot_Disable_BT, the user equipment (UE) 104 may determine 4412 if User_Mode == Can_Disable_Wi-Fi.

If User_Mode == Can_Disable_Wi-Fi, the user equipment (UE) 104 may set 4414 Non-Volatile (NV) copy of Request_Disabling_Wi-Fi = TRUE. The user equipment (UE) 104 may then determine 4416 whether User_Mode == Cannot_Disable_Wi-Fi. If User_Mode does not equal Can_Disable_Wi-Fi, the user equipment (UE) 104 may determine 4416 if User_Mode == Cannot_Disable_Wi-Fi.

If User_Mode == Cannot_Disable_Wi-Fi, the user equipment (UE) 104 may set 4418 Non-Volatile (NV) copy of Request_Disabling_Wi-Fi = FALSE and the method 4400 may end. If User_Mode does not equal Cannot_Disable_Wi-Fi, the method 4400 may end.

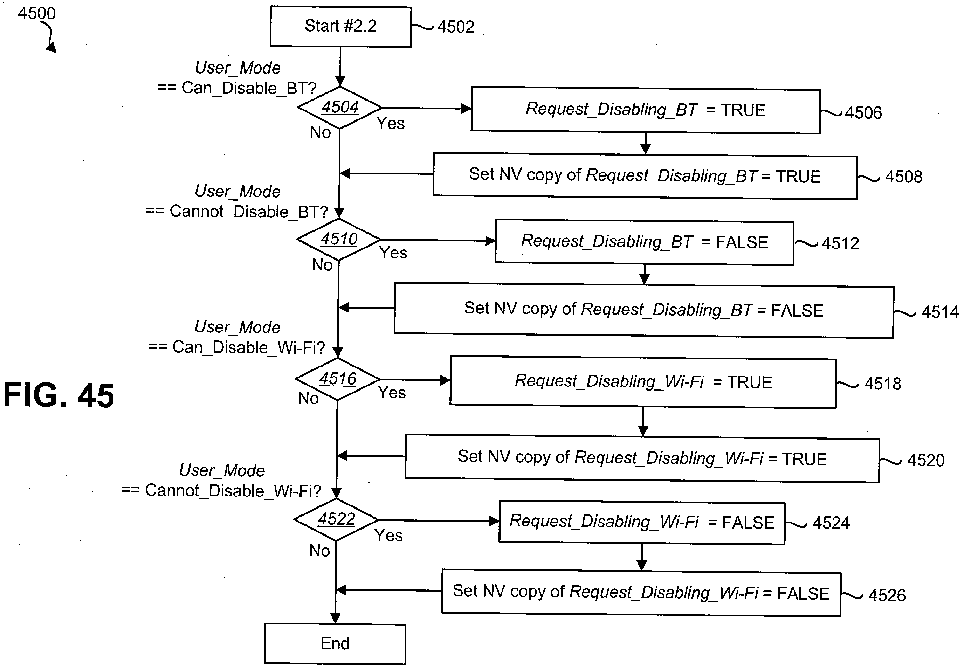

Figure 45 is a flow diagram of a method 4500 for parsing commands from a user relating to Bluetooth. The method 4500 may be performed by a user equipment (UE) 104. The method 4500 may be part of the User_Mode_Generator 336 and may be called by the ISM controller 324.

The user equipment (UE) 104 may start 4502 #2.2. The user equipment (UE) 104 may determine 4504 if User_Mode == Can_Disable_BT. If User_Mode == Can_Disable_BT, the user equipment (UE) 104 may set 4506 Request_Disabling_BT - TRUE and set 4508 Non-Volatile (NV) copy of Request_Disabling_BT = TRUE. The user equipment (UE) 104 may then determine 4510 if User_Mode == Cannot_Disable_BT. If User_Mode does not equal Can_Disable_BT, the user equipment (UE) 104 may determine 4510 if User_Mode == Cannot_Disable_BT.

If User_Mode == Cannot_Disable_BT, the user equipment (UE) 104 may set 4512 Request_Disabling_BT = FALSE and set 4514 Non-Volatile (NV) copy of Request_Disabling_BT = FALSE. The user equipment (UE) 104 may then determine 4516 if User_Mode == Can_Disable_Wi-Fi. If User_Mode does not equal Cannot_Disable_BT, the user equipment (UE) 104 may determine 4516 if User_Mode == Can_Disable₋Wi-Fi.

If User_Mode == Can_Disable_Wi-Fi, the user equipment (UE) 104 may set 4518 Request_Disabling_Wi-Fi = TRUE and set 4520 Non-Volatile (NV) copy of Request_Disabling_Wi-Fi = TRUE. The user equipment (UE) 104 may then determine 4522 if User_Mode == Cannot Disable Wi-Fi. If User_Mode does not equal Can_Disable_Wi-Fi, the user equipment (UE) 104 may determine 4522 if User_Mode == Cannot_Disable_Wi-Fi.

If User_Mode == Cannot_Disable_Wi-Fi, the user equipment (UE) 104 may set 4524 Request_Disabling_Wi-Fi = FALSE and set 4526 Non-Volatile (NV) copy of Request_Disabling_Wi-Fi = FALSE. The method 4500 may then end. If User_Mode does not equal Cannot_Disable_Wi-Fi, the method 4500 may end.

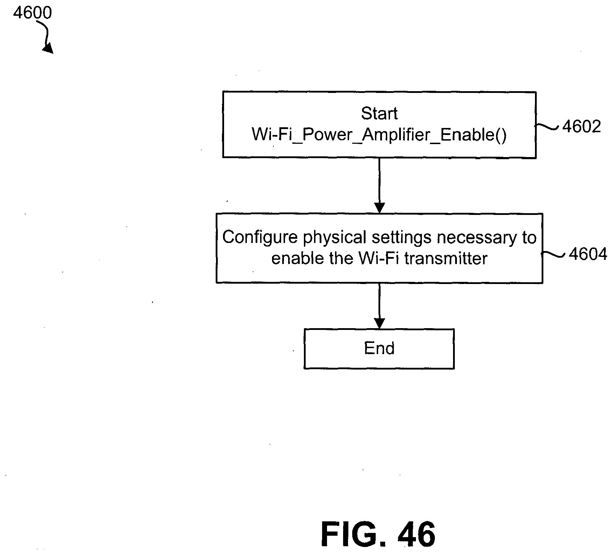

Figure 46 is a flow diagram of a method 4600 for enabling the power amplifier 119a in the Wi-Fi transceiver 108. The method 4600 may be performed by a user equipment (UE) 104. The method 4600 may be called by the ISM_State_Machine() 331 Part#3. The user equipment (UE) 104 may start 4602 Wi-Fi_Power_Amplifier_Enable(). The user equipment (UE) 104 may configure 4604 physical settings necessary to enable the Wi-Fi transmitter 114b. The method 4600 may end.

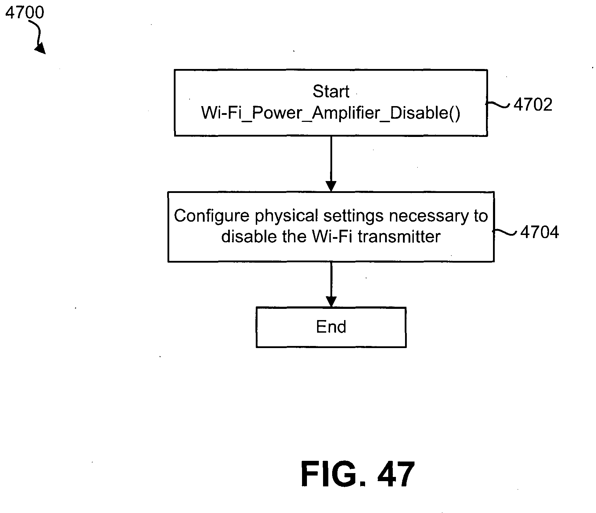

Figure 47 is a flow diagram of a method 4700 for disabling the power amplifier 119a in the Wi-Fi transceiver 108. The method 4700 may be performed by a user equipment (UE) 104. The method 4700 may be called by the ISM_State_Machine() 331 Part#3. The user equipment (UE) 104 may start 4702 Wi-Fi_Power_Amplifier_Disable(). The user equipment (UE) 104 may configure 4704 physical settings necessary to disable the Wi-Fi transmitter 114b. The method 4700 ends

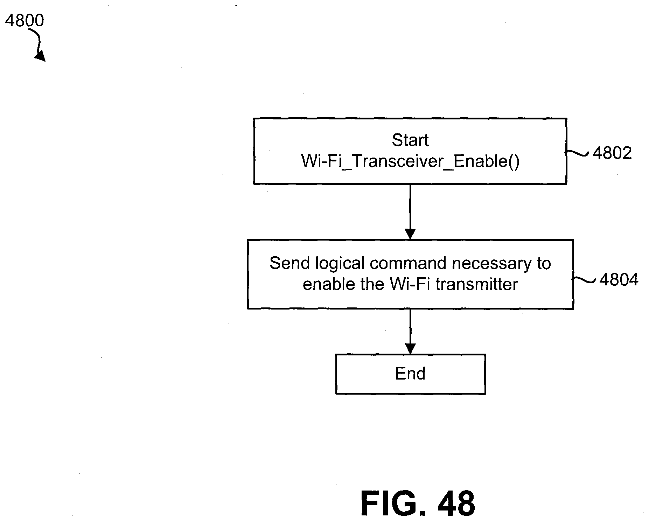

Figure 48 is a flow diagram of a method 4800 for logically enabling the Wi-Fi transceiver 108. The method 4800 may be performed by a user equipment (UE) 104. The method 4800 may be called by the ISM_State_Machine() 331 Part#3. The user equipment (UE) 104 may start 4802 Wi-Fi_Transceiver_Enable(). The user equipment (UE) 104 may send 4804 a logical command necessary to enable the Wi-Fi transmitter 114b. The method 4800 may end.

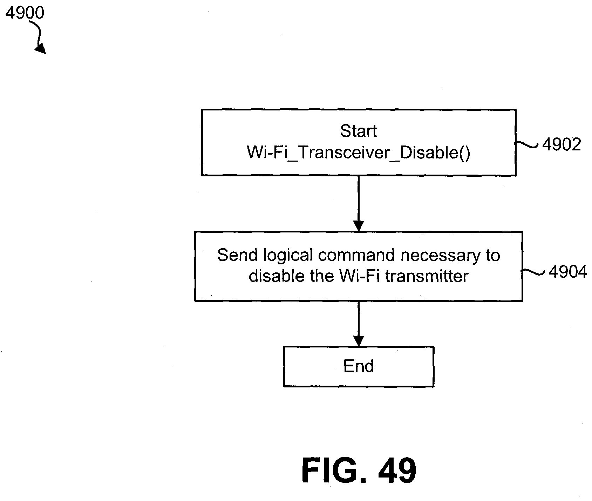

Figure 49 is a flow diagram of a method 4900 for logically disabling the Wi-Fi transceiver 108. The method 4900 may be performed by a user equipment (UE) 104. The method 4900 may be called by the ISM_State_Machine() 331 Part#3. The user equipment (UE) 104 may start 4902 Wi-Fi_Transceiver_Disable(). The user equipment (UE) 104 may send 4904 a logical command necessary to disable the Wi-Fi transmitter 114b. The method 4900 ends.

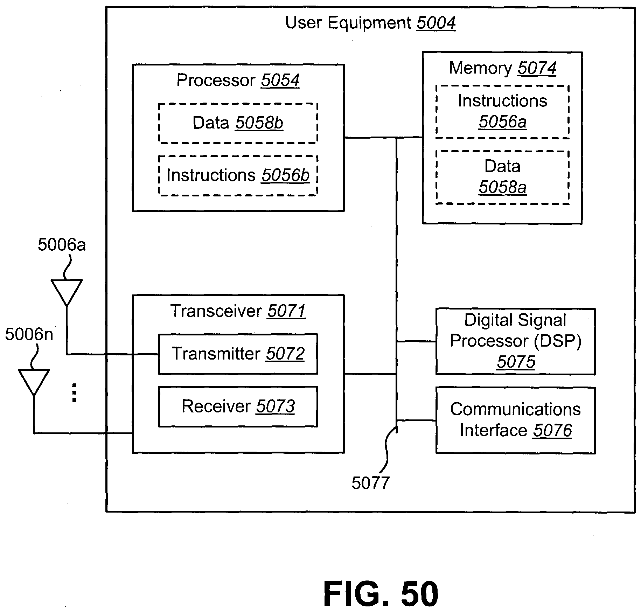

Figure 50 illustrates various components that may be utilized in a user equipment (UE) 5004. The user equipment (UE) 5004 may be utilized as the user equipment (UE) 104 illustrated previously. The user equipment (UE) 5004 includes a processor 5054 that controls operation of the user equipment (UE) 5004. The processor 5054 may also be referred to as a CPU. Memory 5074, which may include both read-only memory (ROM), random access memory (RAM) or any type of device that may store information, provides instructions 5056a and data 5058a to the processor 5054. A portion of the memory 5074 may also include non-volatile random access memory (NVRAM). Instructions 5056b and data 5058b may also reside in the processor 5054. Instructions 5056b and/or data 5058b loaded into the processor 5054 may also include instructions 5056a and/or data 5058a from memory 5074 that were loaded for execution or processing by the processor 5054. The instructions 5056b may be executed by the processor 5054 to implement the systems and methods disclosed herein.

The user equipment (UE) 5004 may also include a housing that contains a transmitter 5072 and a receiver 5073 to allow transmission and reception of data. The transmitter 5072 and receiver 5073 may be combined into a transceiver 5071. One or more antennas 5006a-n are attached to the housing and electrically coupled to the transceiver 5071.

The various components of the user equipment (UE) 5004 are coupled together by a bus system 5077, which may include a power bus, a control signal bus, and a status signal bus, in addition to a data bus. However, for the sake of clarity, the various buses are illustrated in Figure 50 as the bus system 5077. The user equipment (UE) 5004 may also include a digital signal processor (DSP) 5075 for use in processing signals. The user equipment (UE) 5004 may also include a communications interface 5076 that provides user access to the functions of the user equipment (UE) 5004. The user equipment (UE) 5004 illustrated in Figure 50 is a functional block diagram rather than a listing of specific components.

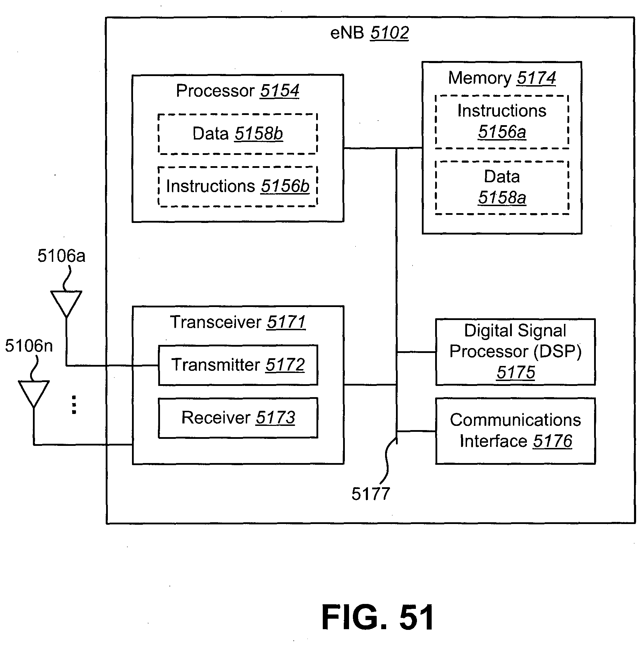

Figure 51 illustrates various components that may be utilized in an eNB 5102. The eNB 5102 may be utilized as the eNB 102 illustrated previously. The eNB 5102 may include components that are similar to the components discussed above in relation to the user equipment (UE) 5004, including a processor 5154, memory 5174 that provides instructions 5156a and data 5158a to the processor 5154, instructions 5156b and data 5158b that may reside in or be loaded into the processor 5154, a housing that contains a transmitter 5172 and a receiver 5173 (which may be combined into a transceiver 5171), one or more antennas 5106a-n electrically coupled to the transceiver 5171, a bus system 5177, a DSP 5175 for use in processing signals, a communications interface 5176 and so forth.

Unless otherwise noted, the use of '/' above represents the phrase "and/or."

The functions described herein may be implemented in hardware, software, firmware or any combination thereof. If implemented in software, the functions may be stored as one or more instructions on a computer-readable medium. The term "computer-readable medium" refers to any available medium that can be accessed by a computer or a processor. The term "computer-readable medium," as used herein, may denote a computer- and/or processor-readable medium that is non-transitory and tangible. By way of example, and not limitation, a computer-readable or processor-readable medium may comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer or processor. Disk and disc, as used herein, includes compact disc (CD), laser disc, optical disc, digital versatile disc (DVD), floppy disk and Blu-ray® disc where disks usually reproduce data magnetically, while discs reproduce data optically with lasers.

Each of the methods disclosed herein comprises one or more steps or actions for achieving the described method. The method steps and/or actions may be interchanged with one another and/or combined into a single step without departing from the scope of the claims. In other words, unless a specific order of steps or actions is required for proper operation of the method that is being described, the order and/or use of specific steps and/or actions may be modified without departing from the scope of the claims.

As used herein, the term "determining" encompasses a wide variety of actions and, therefore, "determining" can include calculating, computing, processing, deriving, investigating, looking up (e.g., looking up in a table, a database or another data structure), ascertaining and the like. Also, "determining" can include receiving (e.g., receiving information), accessing (e.g., accessing data in a memory) and the like. Also, "determining" can include resolving, selecting, choosing, establishing and the like.

The phrase "based on" does not mean "based only on," unless expressly specified otherwise. In other words, the phrase "based on" describes both "based only on" and "based at least on."

The term "processor" should be interpreted broadly to encompass a general purpose processor, a central processing unit (CPU), a microprocessor, a digital signal processor (DSP), a controller, a microcontroller, a state machine and so forth. Under some circumstances, a "processor" may refer to an application specific integrated circuit (ASIC), a programmable logic device (PLD), a field programmable gate array (FPGA), etc. The term "processor" may refer to a combination of processing devices, e.g., a combination of a DSP and a microprocessor, a plurality of microprocessors, one or more microprocessors in conjunction with a DSP core or any other such configuration.

The term "memory" should be interpreted broadly to encompass any electronic component capable of storing electronic information. The term memory may refer to various types of processor-readable media such as random access memory (RAM), read-only memory (ROM), non-volatile random access memory (NVRAM), programmable read-only memory (PROM), erasable programmable read-only memory (EPROM), electrically erasable PROM (EEPROM), flash memory, magnetic or optical data storage, registers, etc. Memory is said to be in electronic communication with a processor if the processor can read information from and/or write information to the memory. Memory may be integral to a processor and still be said to be in electronic communication with the processor.

The terms "instructions" and "code" should be interpreted broadly to include any type of computer-readable statement(s). For example, the terms "instructions" and "code" may refer to one or more programs, routines, subroutines, functions, procedures, etc. "Instructions" and "code" may comprise a single computer-readable statement or many computer-readable statements.

Software or instructions may also be transmitted over a transmission medium. For example, if the software is transmitted from a website, server, or other remote source using a coaxial cable, fiber optic cable, twisted pair, digital subscriber line (DSL) or wireless technologies such as infrared, radio, and microwave, then the coaxial cable, fiber optic cable, twisted pair, DSL, or wireless technologies such as infrared, radio and microwave are included in the definition of transmission medium.

It is to be understood that the claims are not limited to the precise configuration and components illustrated above. Various modifications, changes and variations may be made in the arrangement, operation and details of the systems, methods, and apparatus described herein without departing from the scope of the claims.

## Claims

1. A method for adjusting one or more Industrial, Scientific and Medical ISM transceivers (106, 108, 110) by a user equipment UE, comprising:
determining a high priority communication HPC activity state by detecting HPC activity on a Long Term Evolution LTE transceiver (106), wherein the HPC activity includes Commercial Mobile Alert System CMAS which is delivered via System Information Block Type 12;
receiving the HPC activity state from the LTE transceiver (106) by an ISM controller (324);
determining, by the ISM controller (324), adjustments to be made to the one or more ISM transceivers (106, 108, 110) to account for the HPC activity; and
sending commands adjusting settings of the one or more ISM transceivers (106, 108, 110) from the ISM controller (324) to the one or more ISM transceivers (106, 108, 110),
wherein the step of determining adjustments to be made to the one or more ISM transceivers (106, 108, 110) includes
(i) a step of providing a configuration set by a user, and
(ii) disabling functions of transceivers, except for the LTE transceiver (106), until the configuration set by the user is provided.

2. The method of claim 1, wherein the one or more ISM transceivers (106, 108, 110) comprises at least one of a Wi-Fi transceiver (108) and a Bluetooth transceiver (110).

3. The method of claim 1, wherein determining adjustments to be made to the one or more ISM transceivers (106, 108, 110) to account for the HPC activity comprises determining a configuration set by a manufacturer.

4. The method of claim 1, wherein determining adjustments to be made to the one or more ISM transceivers (106, 108, 110) to account for the HPC activity comprises:
sending a notification to an eNB indicating the HPC activity;
receiving a message from the eNB comprising a configuration set by the eNB.

5. The method of claim 1, wherein determining adjustments to be made to the one or more ISM transceivers (106, 108, 110) to account for the HPC activity comprises:
sending a notification to an eNB indicating the HPC activity; and
determining whether a message comprising a configuration has been received from the eNB.

6. The method of claim 1, wherein determining adjustments to be made to one or more ISM transceivers (106, 108, 110) to account for the HPC activity comprises:
receiving a configuration set by an eNB from the eNB;
determining that there is a configuration set by the manufacturer on the UE; and
overriding the configuration set by the manufacturer with the configuration set by the eNB.

7. The method of claim 1, wherein adjusting the settings of the one or more ISM transceivers (106, 108, 110) to account for an end of the HPC activity comprises turning the one or more ISM transceivers (106, 108, 110) back on.

8. A user equipment UE configured for adjusting of one or more Industrial, Scientific and Medical ISM transceivers (106, 108, 110), comprising:
a processor (5054);
memory (5074) in electronic communication with the processor (5054);
instructions stored in the memory (5074), the instructions being executable to:
determine a high priority communication HPC activity state by detecting HPC activity on a Long Term Evolution LTE transceiver (106), wherein the HPC activity includes Commercial Mobile Alert System CMAS which is delivered via System Information Block Type 12;
receive the HPC activity state from the LTE transceiver (106) by an ISM controller (324);
determine, by the ISM controller (324), adjustments to be made to the one or more ISM transceivers (106, 108, 110) to account for the HPC activity; and
send commands adjusting settings of the one or more ISM transceivers (106, 108, 110) from the ISM controller (324) to the one or more ISM transceivers (106, 108, 110),
wherein the step of determining adjustments to be made to the one or more ISM transceivers (106, 108, 110) includes
(i) a step of providing a configuration set by a user, and
(ii) disabling functions of transceivers, except for the LTE transceiver (106), until the configuration set by the user is provided.

9. The UE of claim 8, wherein the one or more ISM transceivers (106, 108, 110) comprises at least one of a Wi-Fi transceiver (108) and a Bluetooth transceiver (110).

10. The UE of claim 8, wherein the instructions executable to determine adjustments to be made to the one or more ISM transceivers (106, 108, 110) to account for the HPC activity comprise instructions executable to determine a configuration set by a manufacturer.

11. The UE of claim 8, wherein the instructions executable to determine adjustments to be made to the one or more ISM transceivers (106, 108, 110) to account for the HPC activity comprise instructions executable to:
send a notification to an end indicating the HPC activity; end receive a message from the eNB comprising a configuration set by the eNB.

12. The UE of claim 8, wherein the instructions executable to determine adjustments to be made to the one or more ISM transceivers (106, 108, 110) to account for the HPC activity comprise instructions executable to:
send a notification to an eNB indicating the HPC activity; and
determine whether a message comprising a configuration has been received from the eNB.

13. The UE of claim 8, wherein the instructions executable to determine adjustments to be made to one or more ISM transceivers (106, 108, 110) to account for the HPC activity comprise instructions executable to:
receive a configuration set by an eNB from the eNB;
determine that there is a configuration set by the manufacturer on the UE; and
override the configuration set by the manufacturer with the configuration set by the eNB.

14. The UE of claim 8, wherein the instructions executable to adjust the settings of the one or more ISM transceivers (106, 108, 110) to account for the end of the HPC activity comprise instructions executable to turn the one or more ISM transceivers (106, 108, 110) back on.

## Patentansprüche

1. Verfahren zum Einstellen einer oder mehrerer industrieller, wissenschaftlicher und medizinischer ISM-Sende-/Empfangsvorrichtungen (106, 108, 110) durch ein Nutzerendgerät UE, umfassend:
Bestimmen eines Aktivitätszustands für eine Kommunikation mit hoher Priorität HPC, indem eine HPC-Aktivität auf einer Sende-/Empfangsvorrichtung (106) für Long-Term-Evolution LTE detektiert wird, wobei die HPC-Aktivität ein kommerzielles mobiles Alarmsystem CMAS einschließt, das über einen Systeminformationsblock Typ 12 geliefert wird;
Empfangen des HPC-Aktivitätszustands von der LTE-Sende-/Empfangsvorrichtung (106) durch einen ISM-Controller (324);
Bestimmen, durch den ISM-Controller (324), von Einstellungen, die an der einen oder den mehreren ISM-Sende-/Empfangsvorrichtungen (106, 108, 110) vorzunehmen sind, um die HPC-Aktivität zu berücksichtigen; und
Senden von Befehlen, die Einstellungen der einen oder mehreren ISM-Sende-/Empfangsvorrichtungen (106, 108, 110) einstellen, von dem ISM-Controller (324) an die eine oder mehreren ISM-Sende-/Empfangsvorrichtungen (106, 108, 110),
wobei der Schritt zum Bestimmen von Einstellungen, die an der einen oder den mehreren ISM-Sende-/Empfangsvorrichtungen (106, 108, 110) vorzunehmen sind, umfasst
(i) einen Schritt zum Bereitstellen einer von einem Nutzer eingestellten Konfiguration, und
(ii) Deaktivieren von Funktionen von Sende-/Empfangsvorrichtungen, ausgenommen die LTE-Sende-/Empfangsvorrichtung (106), bis die vom Nutzer eingestellte Konfiguration bereitgestellt wird.

2. Verfahren nach Anspruch 1, wobei die eine oder mehreren ISM-Sende-/Empfangsvorrichtungen (106, 108, 110) zumindest eine einer WiFi-Sende-/Empfangsvorrichtung (108) und einer Bluetooth-Sende-/Empfangsvorrichtung (110) umfassen.

3. Verfahren nach Anspruch 1, wobei ein Bestimmen von Einstellungen, die an der einen oder den mehreren ISM-Sende-/Empfangsvorrichtungen (106, 108, 110) vorzunehmen sind, um die HPC-Aktivität zu berücksichtigen, ein Bestimmen einer von einem Hersteller eingestellten Konfiguration umfasst.

4. Verfahren nach Anspruch 1, wobei ein Bestimmen von Einstellungen, die an der einen oder den mehreren ISM-Sende-/Empfangsvorrichtungen (106, 108, 110) vorzunehmen sind, um die HPC-Aktivität zu berücksichtigen, umfasst:
Senden einer Mitteilung an eine eNB, die die HPC-Aktivität anzeigt;
Empfangen einer Nachricht von der eNB mit einer durch die eNB eingestellten Konfiguration.

5. Verfahren nach Anspruch 1, wobei ein Bestimmen von Einstellungen, die an der einen oder den mehreren ISM-Sende-/Empfangsvorrichtungen (106, 108, 110) vorzunehmen sind, um die HPC-Aktivität zu berücksichtigen, umfasst:
Senden einer Mitteilung an eine eNB, die die HPC-Aktivität anzeigt;
und
Bestimmen, ob eine Nachricht mit einer Konfiguration von der eNB empfangen worden ist.

6. Verfahren nach Anspruch 1, wobei ein Bestimmen von Einstellungen, die an einer oder mehreren ISM-Sende-/Empfangsvorrichtungen (106, 108, 110) vorzunehmen sind, um die HPC-Aktivität zu berücksichtigen, umfasst:
Empfangen einer von einer eNB eingestellten Konfiguration von der eNB;
Bestimmen, dass es auf dem UE eine vom Hersteller eingestellte Konfiguration gibt; und
Überschreiben der vom Hersteller eingestellten Konfiguration mit der durch die eNB eingestellten Konfiguration.

7. Verfahren nach Anspruch 1, wobei ein Einstellen der Einstellungen der einen oder mehreren ISM-Sende-/Empfangsvorrichtungen (106, 108, 110), um ein Ende der HPC-Aktivität zu berücksichtigen, ein Wiedereinschalten der einen oder mehreren ISM-Sende-/Empfangsvorrichtungen (106, 108, 110) umfasst.

8. Nutzerendgerät UE, das dafür eingerichtet ist, eine oder mehrere industrielle, wissenschaftliche und medizinische ISM-Sende-/Empfangsvorrichtungen (106, 108, 110) einzustellen, umfassend:
einen Prozessor (5054);
Speicher (5074) in einer elektronischen Verbindung mit dem Prozessor (5054);
Anweisungen, die im Speicher (5074) gespeichert sind, wobei die Anweisungen ausführbar sind, um:
einen Aktivitätszustand für eine Kommunikation mit hoher Priorität HPC zu bestimmen, indem eine HPC-Aktivität auf einer Sende-/Empfangsvorrichtung (106) für Long-Term-Evolution LTE detektiert wird, wobei die HPC-Aktivität ein kommerzielles mobiles Alarmsystem CMAS einschließt, das über einen Systeminformationsblock Typ 12 geliefert wird;
den HPC-Aktivitätszustand von der LTE-Sende-/Empfangsvorrichtung (106) durch einen ISM-Controller (324) zu empfangen;
durch den ISM-Controller (324) Einstellungen zu bestimmen, die an der einen oder den mehreren ISM-Sende-/Empfangsvorrichtungen (106, 108, 110) vorzunehmen sind, um die HPC-Aktivität zu berücksichtigen; und
Befehle, die Einstellungen der einen oder mehreren ISM-Sende-/Empfangsvorrichtungen (106, 108, 110) einstellen, von dem ISM-Controller (324) an die eine oder mehreren ISM-Sende-/Empfangsvorrichtungen (106, 108, 110) zu senden,
wobei der Schritt zum Bestimmen von Einstellungen, die an der einen oder den mehreren ISM-Sende-/Empfangsvorrichtungen (106, 108, 110) vorzunehmen sind, umfasst
(i) einen Schritt zum Bereitstellen einer von einem Nutzer eingestellten Konfiguration, und
(ii) Deaktivieren von Funktionen von Sende-/Empfangsvorrichtungen, ausgenommen die LTE-Sende-/Empfangsvorrichtung (106), bis die vom Nutzer eingestellte Konfiguration bereitgestellt wird.

9. UE nach Anspruch 8, wobei die eine oder mehreren ISM-Sende-/Empfangsvorrichtungen (106, 108, 110) zumindest eine einer WiFi-Sende-/Empfangsvorrichtung (108) und einer Bluetooth-Sende-/Empfangsvorrichtung (110) umfassen.

10. UE nach Anspruch 8, wobei die Anweisungen, die ausführbar sind, um Einstellungen zu bestimmen, die an der einen oder den mehreren ISM-Sende-/Empfangsvorrichtungen (106, 108, 110) vorzunehmen sind, um die HPC-Aktivität zu berücksichtigen, Anweisungen umfassen, die ausführbar sind, um eine von einem Hersteller eingestellte Konfiguration zu bestimmen.

11. UE nach Anspruch 8, wobei die Anweisungen, die ausführbar sind, um Einstellungen zu bestimmen, die an der einen oder den mehreren ISM-Sende-/Empfangsvorrichtungen (106, 108, 110) vorzunehmen sind, um die HPC-Aktivität zu berücksichtigen, Anweisungen umfassen, die ausführbar sind, um:
eine Mitteilung an eine eNB zu senden, die die HPC-Aktivität anzeigt; und
eine Nachricht von der eNB mit einer durch die eNB eingestellten Konfiguration zu empfangen.

12. UE nach Anspruch 8, wobei die Anweisungen, die ausführbar sind, um Einstellungen zu bestimmen, die an der einen oder den mehreren ISM-Sende-/Empfangsvorrichtungen (106, 108, 110) vorzunehmen sind, um die HPC-Aktivität zu berücksichtigen, Anweisungen umfassen, die ausführbar sind, um:
eine Mitteilung an eine eNB zu senden, die die HPC-Aktivität anzeigt; und
zu bestimmen, ob eine Nachricht mit einer Konfiguration von der eNB empfangen worden ist.

13. UE nach Anspruch 8, wobei die Anweisungen, die ausführbar sind, um Einstellungen zu bestimmen, die an einer oder mehreren ISM-Sende-/Empfangsvorrichtungen (106, 108, 110) vorzunehmen sind, um die HPC-Aktivität zu berücksichtigen, Anweisungen umfassen, die ausführbar sind, um:
eine von einer eNB eingestellte Konfiguration von der eNB zu empfangen;
zu bestimmen, dass es auf dem UE eine vom Hersteller eingestellte Konfiguration gibt; und
die vom Hersteller eingestellte Konfiguration mit der durch die eNB eingestellten Konfiguration zu überschreiben.

14. UE nach Anspruch 8, wobei die Anweisungen, die ausführbar sind, um die Einstellungen der einen oder mehreren ISM-Sende-/Empfangsvorrichtungen (106, 108, 110) einzustellen, um das Ende der HPC-Aktivität zu berücksichtigen, Anweisungen umfassen, die ausführbar sind, um die eine oder mehreren ISM-Sende-/Empfangsvorrichtungen (106, 108, 110) wiedereinzuschalten.

## Revendications

1. Procédé pour l'ajustement d'un ou plusieurs émetteur(s)-récepteur(s) industriel(s), scientifique(s) et médical/aux ISM (106, 108, 110) par un équipement utilisateur UE, comprenant :
la détermination d'un état d'activité de communication à priorité élevée HPC par détection d'une activité HPC sur un émetteur-récepteur d'évolution à long terme LTE (106), dans lequel l'activité HPC inclut un système d'alerte pour appareils mobiles commerciaux CMAS qui est fourni par l'intermédiaire d'un type 12 de blocs d'informations système ;
la réception de l'état d'activité HPC en provenance de l'émetteur-récepteur LTE (106) par un dispositif de commande ISM (324) ;
la détermination, par le dispositif de commande ISM (324), des ajustements à effectuer sur l'un ou plusieurs émetteur(s)-récepteur(s) ISM (106, 108, 110) pour rendre compte de l'activité HPC ; et
l'envoi d'ordres ajustant des réglages de l'un ou plusieurs émetteur(s)-récepteur(s) ISM (106, 108, 110) du dispositif de commande ISM (324) à l'un ou plusieurs émetteur(s)-récepteur(s) ISM (106, 108, 110),
dans lequel l'étape de détermination des ajustements à effectuer sur l'un ou plusieurs émetteur(s)-récepteur(s) ISM (106, 108, 110) inclut
(i) une étape de fourniture d'une configuration définie par un utilisateur, et
(ii) la désactivation de fonctions des émetteurs-récepteurs, à l'exception de l'émetteur-récepteur LTE (106), jusqu'à ce que la configuration définie par l'utilisateur soit fournie.

2. Procédé selon la revendication 1, dans lequel l'un ou plusieurs émetteur(s)-récepteur(s) ISM (106, 108, 110) comprend au moins l'un parmi un émetteur-récepteur Wi-Fi (108) et un émetteur-récepteur Bluetooth (110).

3. Procédé selon la revendication 1, dans lequel la détermination des ajustements à effectuer sur l'un ou plusieurs émetteur(s)-récepteur(s) ISM (106, 108, 110) pour rendre compte de l'activité HPC comprend la détermination d'une configuration définie par un fabricant.

4. Procédé selon la revendication 1, dans lequel la détermination des ajustements à effectuer sur l'un ou plusieurs émetteur(s)-récepteur(s) ISM (106, 108, 110) pour rendre compte de l'activité HPC comprend :
l'envoi d'une notification à un eNB indiquant l'activité HPC ;
la réception d'un message en provenance de l'eNB comprenant une configuration définie par l'eNB.

5. Procédé selon la revendication 1, dans lequel la détermination des ajustements à effectuer sur l'un ou plusieurs émetteur(s)-récepteur(s) ISM (106, 108, 110) pour rendre compte de l'activité HPC comprend :
l'envoi d'une notification à un eNB indiquant l'activité HPC ; et
la détermination si un message comprenant une configuration a été reçu en provenance de l'eNB.

6. Procédé selon la revendication 1, dans lequel la détermination des ajustements à effectuer sur l'un ou plusieurs émetteur(s)-récepteur(s) ISM (106, 108, 110) pour rendre compte de l'activité HPC comprend :
la réception d'une configuration définie par un eNB en provenance de l'eNB ;
la détermination qu'il existe une configuration définie par le fabricant sur l'UE ; et
le remplacement de la configuration définie par le fabricant par la configuration définie par l'eNB.

7. Procédé selon la revendication 1, dans lequel l'ajustement des réglages de l'un ou plusieurs émetteur(s)-récepteur(s) ISM (106, 108, 110) pour rendre compte d'une fin de l'activité HPC comprend le rallumage de l'un ou plusieurs émetteur(s)-récepteur(s) ISM (106, 108, 110).

8. Équipement utilisateur UE configuré pour l'ajustement de l'un ou plusieurs émetteur(s)-récepteur(s) industriel(s), scientifique(s) et médical/aux ISM (106, 108, 110), comprenant :
un processeur (5054) ;
une mémoire (5074) en communication électronique avec le processeur (5054) ;
des instructions stockées dans la mémoire (5074), les instructions pouvant être exécutées pour :
déterminer un état d'activité de communication à priorité élevée HPC par détection d'une activité HPC sur un émetteur-récepteur d'évolution à long terme LTE (106), dans lequel l'activité HPC inclut un système d'alerte pour appareils mobiles commerciaux CMAS qui est fourni par l'intermédiaire d'un type 12 de blocs d'informations système ;
recevoir l'état d'activité HPC en provenance de l'émetteur-récepteur LTE (106) par un dispositif de commande ISM (324) ;
déterminer, par le dispositif de commande ISM (324), les ajustements à effectuer sur l'un ou plusieurs émetteur(s)-récepteur(s) ISM (106, 108, 110) pour rendre compte de l'activité HPC ; et
envoyer des ordres ajustant des réglages de l'un ou plusieurs émetteur(s)-récepteur(s) ISM (106, 108, 110) du dispositif de commande ISM (324) à l'un ou plusieurs émetteur(s)-récepteur(s) ISM (106, 108, 110),
dans lequel l'étape de détermination des ajustements à effectuer sur l'un ou plusieurs émetteur(s)-récepteur(s) ISM (106, 108, 110) inclut
(i) une étape de fourniture d'une configuration définie par un utilisateur, et
(ii) la désactivation de fonctions des émetteurs-récepteurs, à l'exception de l'émetteur-récepteur LTE (106), jusqu'à ce que la configuration définie par l'utilisateur soit fournie.

9. UE selon la revendication 8, dans lequel l'un ou plusieurs émetteurs-récepteurs ISM (106, 108, 110) comprend au moins un émetteur-récepteur Wi-Fi (108) et un émetteur-récepteur Bluetooth (110).

10. UE selon la revendication 8, dans lequel les instructions pouvant être exécutées pour déterminer les ajustements à effectuer sur l'un ou plusieurs émetteur(s)-récepteur(s) ISM (106, 108, 110) pour rendre compte de l'activité HPC comprennent des instructions pouvant être exécutées pour déterminer une configuration définie par un fabricant.

11. UE selon la revendication 8, dans lequel les instructions pouvant être exécutées pour déterminer les ajustements à effectuer sur l'un ou plusieurs émetteur(s)-récepteur(s) ISM (106, 108, 110) pour rendre compte de l'activité HPC comprennent des instructions pouvant être exécutées pour :
envoyer une notification à un eNB indiquant l'activité HPC ; et
recevoir un message en provenance de l'eNB comprenant une configuration définie par l'eNB.

12. UE selon la revendication 8, dans lequel les instructions pouvant être exécutées pour déterminer les ajustements à effectuer sur l'un ou plusieurs émetteur(s)-récepteur(s) ISM (106, 108, 110) pour rendre compte de l'activité HPC comprennent des instructions pouvant être exécutées pour :
envoyer une notification à un eNB indiquant l'activité HPC ; et
déterminer si un message comprenant une configuration a été reçu en provenance de l'eNB.

13. UE selon la revendication 8, dans lequel les instructions pouvant être exécutées pour déterminer les ajustements à effectuer sur l'un ou plusieurs émetteur(s)-récepteur(s) ISM (106, 108, 110) pour rendre compte de l'activité HPC comprennent des instructions pouvant être exécutées pour :
recevoir une configuration définie par un eNB en provenance de l'eNB ;
déterminer s'il existe une configuration définie par le fabricant sur l'UE ; et
remplacer la configuration définie par le fabricant par la configuration définie par l'eNB.

14. UE selon la revendication 8, dans lequel les instructions pouvant être exécutées pour l'ajustement des réglages de l'un ou plusieurs émetteur(s)-récepteur(s) ISM (106, 108, 110) pour rendre compte de la fin de l'activité HPC comprennent des instructions pouvant être exécutées pour rallumer l'un ou plusieurs émetteur(s)-récepteur(s) ISM (106, 108, 110).
